(19) Europäisches Patentamt
European Patent Office
Office européen des brevets

(11) EP 3 197 163 A1

(12) **EUROPEAN PATENT APPLICATION**
published in accordance with Art. 153(4) EPC

(43) Date of publication:
**26.07.2017 Bulletin 2017/30**

(21) Application number: **15849662.0**

(22) Date of filing: **07.10.2015**

(51) Int Cl.:
***H04N 19/30*** *(2014.01)* ***H04N 19/31*** *(2014.01)*

(86) International application number:
**PCT/KR2015/010577**

(87) International publication number:
**WO 2016/056834 (14.04.2016 Gazette 2016/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.10.2014 US 201462060723 P**

(71) Applicant: **Samsung Electronics Co., Ltd.**
**Gyeonggi-do 16677 (KR)**

(72) Inventors:
- **PARK, Min-woo**
  **Yongin-si**
  **Gyeonggi-do 17079 (KR)**
- **LEE, Jin-young**
  **Suwon-si**
  **Gyeonggi-do 16582 (KR)**
- **CHOI, Byeong-doo**
  **Suwon-si**
  **Gyeonggi-do 16513 (KR)**

(74) Representative: **Appleyard Lees IP LLP**
**15 Clare Road**
**Halifax HX1 2HY (GB)**

# (54) METHOD AND DEVICE FOR ENCODING OR DECODING MULTI-LAYER IMAGE, USING INTER-LAYER PREDICTION

(57) Provided is a method of decoding a video including a multilayer. The method includes: setting, when a reference picture for inter-layer prediction is included in a reference picture list, first information to indicate that the reference picture is included in the reference picture list; and performing, when a disparity vector is not to be derived from a neighboring block of a current coding unit, residual prediction based on the first information and a default disparity vector.

FIG. 1A

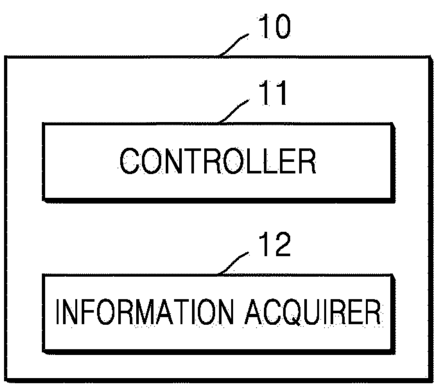


EP 3 197 163 A1

## Description

### TECHNICAL FIELD

The inventive concept relates to methods and apparatuses for improving performance of inter-layer prediction in a process of encoding or decoding a multilayer video including a plurality of layers.

### BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a coding unit of a tree structure.

Image data of a space domain is transformed into coefficients of a frequency domain by frequency transformation. According to a video codec, an image is split into blocks having a predetermined size, discrete cosine transformation (DCT) is performed on each block, and frequency coefficients are encoded in block units, for rapid calculation of frequency transformation. Compared with image data of a space domain, coefficients of a frequency domain are easily compressed. In particular, since an image pixel value of a space domain is represented by a prediction error through inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multilayer video codec encodes and decodes a first layer video and at least one second layer video. Amounts of data of the first layer video and the second layer video may be reduced by removing inter-layer redundancy and temporal/spatial redundancy of the first layer video and the second layer video.

In the related art, whether or how to perform residual prediction of a multilayer video is determined based on whether a disparity vector is to be derived from a neighboring block of a current coding unit.

However, a reference picture related to another layer is always required to perform residual prediction, but syntax of whether or how to perform residual prediction is transmitted even when a reference picture related to another layer does not exist in a reference picture list of a current coding unit. Accordingly, since an unnecessary operation is performed, processing efficiency is degraded.

### DETAILED DESCRIPTION OF THE INVENTION

### TECHNICAL PROBLEM

Even when a reference picture on another layer different from a layer of a current picture required in a process of performing inter-layer prediction does not exist in a reference picture list related to a current coding unit, a process of unnecessarily generating or acquiring a bitstream including syntax of whether or how to perform residual prediction needs to be skipped in a process of encoding or decoding a video.

### TECHNICAL SOLUTION

According to an embodiment, there is provided a method of decoding a video including a multilayer, the method including: setting, when a reference picture for inter-layer prediction is included in a reference picture list, first information to indicate that a disparity vector is available; and performing residual prediction based on the first information and whether a disparity vector is to be derived from a neighboring block of a current coding unit.

According to another embodiment, there is provided an apparatus for decoding a video including a multilayer, the apparatus including a controller configured to determine whether a reference picture for inter-layer prediction is included in a reference picture list; set, when the reference picture is included in the reference picture list, first information to indicate that a disparity vector is available; and perform residual prediction based on the first information and whether a disparity vector is to be derived from a neighboring block of a current coding unit.

### ADVANTAGEOUS EFFECTS OF THE INVENTION

According to an embodiment, when a reference picture on another layer different from a layer of a current picture required in a process of performing inter-layer prediction does not exist in a reference picture list related to a current coding unit, since a bitstream including syntax of whether or how to perform residual prediction is not generated or acquired, an unnecessary operation may be skipped and thus an efficient video encoding or decoding process may be performed.

DESCRIPTION OF THE DRAWINGS

FIG. 1A illustrates a block diagram of a video decoding apparatus for decoding a video including a multilayer.
FIG. 1B illustrates a block diagram of a video encoding apparatus for encoding a video including a multilayer.
FIG. 2 illustrates a flowchart of a process of decoding a video including a multilayer by a video decoding apparatus.
FIG. 3A illustrates semantics for a process of determining whether a reference picture available in inter-layer prediction is included in a reference picture list.
FIG. 3B illustrates semantics for a process of setting second information.
FIG. 3C illustrates semantics for a process of using a default disparity vector when a disparity vector is not to be derived from a neighboring block of a current coding unit.
FIG. 3D illustrates a process of acquiring predetermined information from a bitstream or generating a bitstream including predetermined information based on first information related to availability of a disparity vector in a current coding unit.
FIG. 4A illustrates a block diagram of an inter-layer video decoding apparatus.
FIG. 4B illustrates a block diagram of an inter-layer video encoding apparatus.
FIG. 5A illustrates an inter-layer prediction structure, according to an embodiment.
FIG. 5B is a diagram illustrating multiview video frames acquired through a multiview camera and depth map frames acquired through a depth camera.
FIG. 6A is a diagram illustrating an encoding tool used in an encoding or decoding process.
FIG. 6B is a diagram illustrating the contents of an encoding tool according to prediction unit size, prediction mode, and color depth information.
FIG. 7 illustrates a block diagram of a video encoding apparatus based on coding units of a tree structure.
FIG. 8 illustrates a block diagram of a video decoding apparatus based on coding units of a tree structure.
FIG. 9 illustrates a concept of coding units.
FIG. 10 illustrates a block diagram of an image encoder based on coding units.
FIG. 11 illustrates a block diagram of an image decoder based on coding units.
FIG. 12 illustrates deeper coding units according to depths, and partitions.
FIG. 13 illustrates a relationship between a coding unit and transformation units.
FIG. 14 illustrates a plurality of pieces of encoding information according to depths.
FIG. 15 illustrates deeper coding units according to depths.
FIGS. 16, 17, and 18 illustrate a relationship between coding units, prediction units, and transformation units, according to an embodiment.
FIG. 19 illustrates a relationship between a coding unit, a prediction unit, and a transformation unit, according to encoding mode information of Table 1.
FIG. 20 illustrates a physical structure of a disc in which a program is stored.
FIG. 21 illustrates a disc drive for recording and reading a program by using the disc.
FIG. 22 illustrates an overall structure of a content supply system for providing a content distribution service.
FIGS. 23 and 24 illustrate external and internal structures of a mobile phone to which a video encoding method and a video decoding method are applied.
FIG. 25 illustrates a digital broadcasting system employing a communication system.
FIG. 26 illustrates a network structure of a cloud computing system using the video encoding apparatus and the video decoding apparatus.

BEST MODE

According to an embodiment, there is provided a method of decoding a video including a multilayer, the method including: setting, when a reference picture for inter-layer prediction is included in a reference picture list, first information to indicate that a disparity vector is available; and performing residual prediction based on the first information and whether a disparity vector is to be derived from a neighboring block of a current coding unit.

The method may further include setting, based on the first information, second information to indicate that the reference picture is available in a residual prediction process.

The method may further include acquiring, based on the first information, third information from a bitstream, the third information indicating whether to perform residual prediction in a current coding unit.

The performing of the residual prediction may include setting a disparity vector of the current coding unit by using a default disparity vector when the first information indicates that the reference picture is included in the reference picture list and a disparity vector is not to be derived from a neighboring block of the current coding unit.

The default disparity vector may represent a value indicating a layer including a current picture among the multilayer, and the setting of the first information may include setting the first information to a non-zero value.

The acquiring of the third information from the bitstream may include acquiring the third information from the bitstream when the second information indicates that the reference picture is available in residual prediction and not acquiring the third information from the bitstream when the second information does not indicate that the reference picture is available in the residual prediction.

The method may further include determining not to perform residual prediction when the third information represents 0 and performing the residual prediction by using a weight determined based on the third information when the third information represents a value greater than 0.

The method may further include: acquiring, when the first information represents a value greater than 0, fourth information from a bitstream, the fourth information indicating whether to perform depth image-based block partitioning; and performing inter-sample prediction based on the fourth information.

According to another embodiment, there is provided an apparatus for decoding a video including a multilayer, the apparatus including a controller configured to determine whether a reference picture for inter-layer prediction is included in a reference picture list; set, when the reference picture is included in the reference picture list, first information to indicate that a disparity vector is available; and perform residual prediction based on the first information and whether a disparity vector is to be derived from a neighboring block of a current coding unit.

The controller may set, based on the first information, second information to indicate that the reference picture is available in a residual prediction process.

The apparatus may further include an information acquirer acquiring, based on the first information, third information from a bitstream, the third information indicating whether to perform residual prediction in a current coding unit.

The controller may set a disparity vector of the current coding unit by using a default disparity vector when the first information indicates that the reference picture is included in the reference picture list and a disparity vector is not to be derived from a neighboring block of the current coding unit.

The controller may determine not to perform residual prediction when the third information represents 0 and perform residual prediction by using a weight determined based on the third information when the third information represents a value greater than 0.

The information acquirer may acquire, when the first information represents a value greater than 0, fourth information from a bitstream, the fourth information indicating whether to perform depth image-based block partitioning, and the controller may perform inter-sample prediction based on the fourth information.

MODE OF THE INVENTION

Hereinafter, an inter-layer video encoding technique and an inter-layer video decoding technique of determining a disparity vector by using a reference layer depth map, according to an embodiment, will be described with reference to FIGS. 1A to 6B. Also, a video encoding method and a video decoding method based on coding units of a tree structure, according to an embodiment, which are applicable to the above video encoding method and video decoding method, will be described with reference to FIGS. 7 to 20. Also, embodiments, to which the above video encoding method and video decoding method are applicable, will be described with reference to FIGS. 21 to 26.

Hereinafter, the term "image" may refer to a still image or a moving image of a video, or a video itself.

Hereinafter, the term "sample" may refer to data that is assigned to a sampling position of an image and is to be processed. For example, residuals of blocks or pixel values in an image of the space domain may be samples.

Hereinafter, the term "current block" may refer to a block of an image that is to be encoded or decoded.

Hereinafter, the term "neighboring block" may refer to at least one encoded or decoded block that is adjacent to a current block. For example, the neighboring block may be located at a top end of the current block, a right top end of the current block, a left side of the current block, or a left top end of the current block. Also, it may include not only a spatially adjacent block but also a temporally adjacent block. For example, a temporally adjacent neighboring block may include a co-located block co-located with a current block of a reference picture or a neighboring block of the co-located block.

Hereinafter, the term "layer image" may refer to images of the same type or a particular view. In a multiview video, a layer image may refer to depth images or texture images input at a particular point. For example, in a three-dimensional (3D) image, each of a left view texture image, a right view texture image, and a depth image may constitute a layer image. That is, the left view texture image, the right view texture image, and the depth image may constitute a first layer image, a second layer image, and a third layer image respectively.

FIG. 1A illustrates a block diagram of a video decoding apparatus 10 for decoding a video including a multilayer, according to an embodiment.

Referring to FIG. 1A, the video decoding apparatus 10 may include a controller 11 that may perform image processing for decoding a video including a multilayer and an information acquirer 12 that may acquire information necessary to decode a video from a bitstream.

According to an embodiment, the controller 11 may determine whether a reference picture for inter-layer prediction is included in a reference picture list. Various types of reference pictures may be included in the reference picture list. For example, pictures having temporally different reproduction orders may be included as pictures available for performance of inter prediction, and pictures having different layer identifiers for layer identification may be included as pictures available for performance of inter-layer prediction.

FIG. 2 illustrates a flowchart of a process of decoding a video including a multilayer by the video decoding apparatus 10, according to an embodiment.

In operation S210, the controller 11 of the video decoding apparatus 10 may determine whether a reference picture for inter-layer prediction is included in a reference picture list. When the reference picture for inter-layer prediction is included in the reference picture list, the controller 11 of the video decoding apparatus 10 may set first information to indicate that a disparity vector is available.

According to an embodiment, in order to determine whether a reference picture available for inter-layer prediction is included among at least one picture included in the reference picture list, the controller 11 may determine whether a view index that is layer identification information of the reference pictures included in the reference picture list is equal to a view index of a reference picture candidate group that is available in inter-layer prediction of a current picture. Herein, the current picture may correspond to a picture included in an enhancement layer on which inter-layer prediction is performed. That is, in the enhancement layer including the current picture, the controller 11 may perform inter-layer prediction with reference to lower layers lower than the enhancement layer. The controller 11 may determine index values smaller than a view index of the current picture as a view index of the reference picture candidate group. For example, the view index of the reference picture candidate group may be included in the range of 0 to a value smaller by 1 than a value of the view index of the current picture. The controller 11 may determine whether a view index of at least one picture in the reference picture list of the current picture is equal to the view index of the reference picture candidate group. When there is a reference picture having a view index equal to the view index of the reference picture candidate group among at least one reference picture included in the reference picture list of the current picture, the controller 11 may determine that the reference picture available in inter-layer prediction is included in the reference picture list.

According to an embodiment, in order to determine whether a reference picture for inter-layer prediction is included in the reference picture list, the controller 11 may determine whether there is a reference picture having a view index equal to the view index of the reference picture candidate group among at least one reference picture included in the reference picture list of the current picture. In addition, the controller 11 may compare an index representing the reproduction order of the current picture with an index representing the reproduction order of the reference picture having the same value as the view index of the reference picture candidate group. For example, the controller 11 may compare a picture order count (POC) of the current picture with a POC of the reference picture having the same value as the view index of the reference picture candidate group. That is, the controller 11 may determine whether a POC of the reference picture having a view index equal to the view index of the reference picture candidate group among at least one reference picture included in the reference picture list of the current picture is equal to a POC of the current picture and may determine that the reference picture for inter-layer prediction is included in the reference picture list, when the POCs are equal to each other.

FIG. 3A illustrates semantics for a process of determining whether a reference picture available in inter-layer prediction is included in a reference picture list. DispAvailFlag 30b may be information indicating whether a disparity vector is available in a current coding unit. In addition, according to an embodiment, DispAvailFlag 30b may be information indicating whether an inter-view reference picture that is a reference picture available in inter-layer prediction is included in a reference picture list. DefaultRefViewIdx may be information representing a default value of a reference view index among a plurality of layers constituting a multilayer video. ViewIdx(RefPicListX[i]) may be information representing a view index ViewIdx of an ith picture RefPicListX[i] in a reference picture list of a slice including a current coding unit, and candViewIdx may be information about an index for identifying a reference view index candidate group related to the current coding unit. According to an embodiment, candViewIdx may be information representing a view index of a current view, and candViewIdx may represent a value in the range of 0 to ViewIdx-1 in relation to a view index 'ViewIdx' related to the current view. DiffPicOrdercnt(CurrPic, RefPicListX[i]) may include information about a POC difference between a current picture CurrPic related to a current coding unit and an ith picture RefPicListX[i] in a reference picture list. Referring to FIG. 3A, the controller 11 according to an embodiment may determine, based on first information, whether a disparity vector is available in a current coding unit.

According to an embodiment, the controller 11 may determine, based on DispAvailFlag 30b, whether a reference picture available in inter-layer prediction exists in a reference picture list. In addition, when a reference picture available in inter-layer prediction exists in a reference picture list, a disparity vector may be determined to be available. The first information may be information indicating that a reference picture available in inter-layer prediction is included in a reference picture list related to a slice related to a current coding unit. That is, the controller 11 may set a value represented by the first information differently according to whether a reference picture of another layer (or view) is included in a reference picture list related to a slice including a current coding unit.

According to an embodiment, even when the first information indicates that a reference picture of another layer (or view) is included in a reference picture list related to a slice including a current coding unit, when a disparity vector fails to be derived from a neighboring block of a current coding unit, the controller 11 may set a disparity vector of a current coding unit by using a default disparity vector.

Also, the controller 11 according to an embodiment may determine whether there is a reference picture having the same view index as a reference picture candidate group available in inter-layer prediction among the reference pictures included in a reference picture list related to a current coding unit (31 b). A view index of the reference picture candidate group may have the range of 0 to a value smaller by 1 than a view index related to a current picture.

In addition, according to an embodiment, the controller 11 may determine whether a POC of a current picture is equal to a POC of a reference picture having the same view index as a reference picture candidate group among the reference pictures included in a reference picture list (31 c).

When the conditions 31 a, 31 b, and 31 c are all determined to be satisfied, the controller 11 may set a default reference view index 30a by using a candidate reference view index related to a current coding unit and may also set the first information to a non-zero value. That is, when a reference picture for inter-layer prediction is included in a reference picture list, the controller 11 may set a default reference view index 30a by using a candidate reference view index related to a current coding unit and may set the first information of DispAvailFlag 30b to indicate that a disparity vector is available. Referring to FIG. 3A, according to an embodiment, when DispAvailFlag 30b represents 0, it may be determined that a value of DispAvailFlag 30b that is information about the availability of a disparity vector for a current coding unit has not yet been set (31 a). When all of the other conditions (31 b and 31 c) are satisfied in addition to the determination (31 a) about DispAvailFlag 30b, the controller 11 may set a default reference view index 30a by using a candidate reference view index related to a current coding unit and may set DispAvailFlag 30b to have a value of 1.

According to an embodiment, even when a disparity vector is not to be derived from a neighboring block of a current coding unit, a disparity vector of a current coding unit may be set by using a default disparity vector and a default reference view index 30a of a current coding unit. In addition, since a reference picture available in inter-layer prediction is included in a reference picture list, efficient decoding may be performed by acquiring syntax necessary for residual prediction in inter-layer prediction.

According to an embodiment, when a reference picture exists in a reference picture list, the controller 11 of the video decoding apparatus 10 may set the first information to indicate that a disparity vector is available.

According to an embodiment, when it is determined in operation S210 that a reference picture for inter-layer prediction is included in a reference picture list, the controller 11 may set the first information to indicate that a disparity vector is available. Herein, whether a disparity vector is available may be determined based on a predetermined data unit, for example, a current coding unit. According to an embodiment, by acquiring information about a disparity vector from a neighboring block of a current coding unit, the controller 11 may determine whether the disparity vector is available in the current coding unit.

According to another embodiment, even when information about a disparity vector fails to be acquired from a neighboring block of a current coding unit, when a reference picture for inter-layer prediction is included in a reference picture list, the controller 11 may determine a disparity vector of the current coding unit as a default disparity vector. In this way, even when a disparity vector of a current coding unit is determined based on a default disparity vector, the controller 11 may set the first information to indicate that a disparity vector is available. According to an embodiment, a default disparity vector may represent a value indicating a layer including a current picture. For example, the default disparity vector may have a value of (0,0).

FIG. 3C illustrates semantics for a process of using a default disparity vector when a disparity vector is not to be derived from a neighboring block of a current coding unit by the controller 11 of the video decoding apparatus 10, according to an embodiment.

According to an embodiment, the controller 11 of the video decoding apparatus 10 may determine whether a disparity vector is to be derived from a neighboring block of a current coding unit. When it is determined that a disparity vector is to be derived from a neighboring block, the controller 11 may set the first information to indicate that a disparity vector is available and may set a disparity vector for a current coding unit as a disparity vector of neighboring blocks. In addition, when it is determined that a disparity vector is to be derived from a neighboring block, the controller 11 may set a reference picture available for inter-layer prediction in a current coding unit as a reference picture available for inter-layer prediction in a neighboring block.

Referring to FIG. 3C, according to an embodiment, by acquiring information about a disparity vector from a neighboring block of a current coding unit, the controller 11 may determine whether a disparity vector of the current coding unit is to be derived. For example, as for a partial process (34a) of setting a disparity vector with reference to a neighboring block by the controller 11, when tPredNbDvAvailFlagN is 1, since a disparity vector of a current coding unit may be derived by using a disparity vector of neighboring blocks of a current coding unit, a value of dvAvailflag that is information about the availability of a disparity vector of a current coding unit may be set to '1' to indicate that a disparity vector is available, dispVec that is a disparity vector of a current coding unit may be set as tPredNbDispVecN that is a disparity vector of a neighboring block, and refViewIdx that is a reference view index indicating a layer referenced in inter-layer prediction in a current coding unit may be set as tPredNbRefViewIdxN that is a reference view index of a neighboring block. That is, when a disparity vector may be derived with reference to a neighboring block of a current coding unit, dvAvailflag that is information representing the availability of a disparity vector of a current coding unit may be set to '1'.

According to an embodiment, when a disparity vector of a current coding unit may not be derived by using a disparity vector of a neighboring block and dvAvailflag that is information about the availability of a disparity vector of a current coding unit represents '0', the controller 11 of the video decoding apparatus 10 may perform a process (34b) of setting refViewIdx that is a reference view index indicating a layer referenced in inter-layer prediction in a current coding unit as DefaultRefViewIdx that is a default view index and setting a disparity vector of a current coding unit as (0, 0) that is a default disparity vector. That a disparity vector used in inter-layer prediction represents (0, 0) may mean that a layer of a reference picture referenced in inter-layer prediction is equal to a layer of a current picture.

According to an embodiment, since the controller 11 of the video decoding apparatus 10 may perform inter-layer prediction in a current coding unit of a current picture, a disparity vector may be used in an inter-layer prediction process in this process. For example, referring to FIG. 3C, the controller 11 may set (35) a value of DispVec[x][y] that is a disparity vector available in inter-layer prediction of a current coding unit as a value of dispVec that is set through a predetermined process (38a or 38b). That is, dispVec that is a disparity vector of a current coding unit may be a value derived by using a disparity vector value of a neighboring block, and it may be a value set as a default disparity vector value when it may not be derived by using a disparity vector of a neighboring block.

According to an embodiment, based on whether a reference picture for inter-layer prediction is included in a reference picture list and whether information about a disparity vector may be acquired from a neighboring block of a current coding unit, the controller 11 may determine a disparity vector of a current coding unit by using a default disparity vector. For example, when a disparity vector of a current coding unit may not be determined by using a disparity vector of samples around a current coding unit and a reference picture for inter-layer prediction is included in a reference picture list, the controller 11 may determine a disparity vector of a current coding unit by using a default disparity vector. That is, even when a disparity vector fails to be derived from a neighboring block of a current coding unit, when a reference picture for inter-layer prediction is included in a reference picture list, the controller 11 may set the first information to indicate that a disparity vector is available.

According to an embodiment, in principle, when a disparity vector may not be derived from a neighboring block, the first information related to a current coding unit may have different values according to the case where a disparity vector fails to be derived from a neighboring block and thus a disparity vector of a current coding unit is set as a default disparity vector value and the case where a reference picture available for inter-layer prediction is included in a reference picture list.

However, in the related art, the syntax for inter-layer prediction may be acquired only when the first information indicates that a disparity vector may be derived from a neighboring block. However, even when a disparity vector may not be derived from a neighboring block, when a disparity vector of a current coding unit is set as a default disparity vector value, since inter-layer prediction may be performed, it may be efficient to acquire the syntax for inter-layer prediction.

Thus, according to an embodiment, not only in the case where a disparity vector may not be derived from a neighboring block but also in the case where a disparity vector fails to be derived from a neighboring block and thus a disparity vector of a current coding unit is set as a default disparity vector value, the controller 11 may set the first information to indicate that a disparity vector is available and may determine whether a reference picture for residual prediction in inter-layer prediction is available, based on the set first information. This will be described below in more detail with reference to various embodiments.

According to an embodiment, the controller 11 of the video decoding apparatus 10 may set, based on the set first information, second information to indicate that a reference picture is available in a residual prediction process.

According to an embodiment, when a reference picture for inter-layer prediction is included in a reference picture list related to a current picture and thus the first information indicates that a disparity vector is available, the video decoding apparatus 10 may set the second information to indicate that a reference picture in a reference picture list is available in a residual prediction process. That is, when the first information does not indicate that a disparity vector is available in a slice including a current coding unit, the controller 11 may set the second information to indicate that a reference picture in a reference picture list is not available in a residual prediction process.

In addition, when the first information indicates that a disparity vector is available in a current coding unit and other predetermined conditions are satisfied, the controller 11 may set the second information to indicate that a reference picture in a reference picture list is available in a residual prediction process. According to an embodiment, the controller 11 may check not only the first information but also a predetermined condition in the process of setting the second information to indicate that a reference picture in a reference picture list is available in a residual prediction process, and the predetermined condition may include whether a temporal reference picture available in an inter prediction process exists in a reference picture list.

In more detail, when the current coding unit is included in a P or B slice, one or two reference picture lists may be provided.

The controller 11 may determine whether at least one temporal reference picture available in inter prediction exists in at least one reference picture list available in a current coding unit for inter prediction. When at least one temporal reference picture available in inter prediction exists in a reference picture list and the first information indicates that a disparity vector is available in a current coding unit, the controller 11 may set the second information to indicate that a reference picture in a reference picture list is available in a residual prediction process.

FIG. 3B illustrates semantics for a process of setting second information, according to an embodiment.

Referring to FIG. 3B, according to an embodiment, the controller 11 of the video decoding apparatus 10 may set a value of RpRefPicAvailFlag 32 as the second information. RpRefPicAvailFlag 32 may be determined based on whether a temporal reference picture exists in a reference picture list. When a slice related to a current coding unit is a P slice, one reference picture list may be provided, and when the slice is a B slice, two reference picture lists may be provided.

The controller 11 may determine (33a) whether a temporal reference picture exists in at least one reference picture list related to a current coding unit, and may also determine whether the first information (e.g., DispAvailFlag 30b) indicates that a disparity vector is available. According to an embodiment, when a disparity vector related to a current coding unit may be derived from a neighboring block or may be set as a default disparity vector, the first information may have a value greater than 0.

Thus, when a temporal reference picture exists in at least one reference picture list related to a current coding unit and the first information indicates that a disparity vector is available, the controller 11 may set the second information of RpRefPicAvailFlag 32 as a value greater than 0. The second information may be used to determine whether to perform residual prediction. This will be described below in more detail with reference to various embodiments.

According to an embodiment, based on the set first information, the video decoding apparatus 10 may acquire third information indicating whether to perform residual prediction in a current coding unit from a bitstream.

According to an embodiment, when the first information indicates that a disparity vector is available, the controller 11 of the video decoding apparatus 10 may control the information acquirer 12 to acquire the third information indicating whether to perform residual prediction in a current coding unit from a bitstream. That is, when a disparity vector is available and a reference picture available in residual prediction is included in a reference picture list, the video decoding apparatus 10 may acquire the third information from a bitstream to perform residual prediction in inter-layer prediction in a current coding unit. Based on the acquired third information, the controller 11 may determine whether to perform residual prediction.

According to an embodiment, the video decoding apparatus 10 may set the second information based on the first information and may acquire the third information indicating whether to perform residual prediction in a current coding unit from a bitstream, based on the set second information. In more detail, when the first information indicates that a disparity vector is available and the second information indicates that a reference picture is available in a residual prediction process, the controller 11 of the video decoding apparatus 10 may control the information acquirer 12 to acquire the third information indicating whether to perform residual prediction in a current coding unit from a bitstream. That is, when a disparity vector is available and a reference picture available in residual prediction is included in a reference picture list, the video decoding apparatus 10 may acquire the third information from a bitstream to perform residual prediction in inter-layer prediction in a current coding unit. Based on the acquired third information, the controller 11 may determine whether to perform residual prediction.

FIG. 3D illustrates a process of acquiring predetermined information from a bitstream based on first information related to the availability of a disparity vector in a current coding unit by the video decoding apparatus 10, according to an embodiment. In FIG. 3D, the first information may correspond to DispAvailFlag 30b, the second information may correspond to RpRefPicAvailFlag 32, and the third information may correspond to iv_res_pred_weight_idx[x0][y0] 39a.

Referring to FIG. 3D, based on a condition 38, the video decoding apparatus 10 may determine whether to acquire the third information 39a from a bitstream. In a condition 45, the controller 11 may acquire the third information 39a based on the second information 32 indicating whether a reference picture is available in residual prediction. For example, when the second information of RpRefPicAvailFlag indicates that a reference picture is available in residual prediction, the video decoding apparatus 10 may acquire the third information of iv_res_pred_weight_idx[x0][y0] 39a from a bitstream based on the second information.

According to an embodiment, the video decoding apparatus 10 may perform residual prediction based on the third information acquired from a bitstream. For example, when the third information represents a non-zero value, the video decoding apparatus 10 may perform residual prediction, and when the third information represents a value of 0, the video decoding apparatus 10 may not perform residual prediction. FIG. 3D illustrates semantics 39b of iv_res_pred_weight_idx[x0][y0] as the third information. Referring to FIG. 3D, when a value of iv_res_pred_weight_idx[x0][y0] indicates a non-zero value, the controller 11 may perform residual prediction in a current coding unit and may determine a weight index value in a residual prediction process based on iv_res_pred_weight_idx[x0][y0]. When a value of iv_res_pred weight_idx[x0][y0] indicates 0, the controller 11 may not perform residual prediction in a current coding unit.

According to an embodiment, based on the second information, the video decoding apparatus 10 may determine whether to perform illumination compensation (IC) in a current coding unit. In more detail, based on the first information, the video decoding apparatus 10 may determine whether a disparity vector is available in a current coding unit. Even when a disparity vector may not be derived from a neighboring block, when a reference picture available in inter-layer prediction is included in a reference picture list, the video decoding apparatus 10 may set a disparity vector of a current coding unit by using a default disparity vector and may set the first information as a value of 1. When the first information indicates a value of 1, the video decoding apparatus 10 may set the second information to indicate that a reference picture is available in a residual prediction process. When the second information indicates that a reference picture available in an inter-layer prediction process is included in a reference picture list, the video decoding apparatus 10 may acquire information indicating whether to perform illumination compensation in a current coding unit.

According to an embodiment, since the video decoding apparatus 10 always refers to a view-direction reference picture available in an inter-layer prediction process in the case of performing illumination compensation, the video decoding apparatus 10 may first determine whether a view-direction reference picture available in an inter-layer prediction process exists in a reference picture list of a slice including a current coding unit.

According to an embodiment, when the second information indicates that a view-direction reference picture available in an inter-layer prediction process is not included in a reference picture list, the video decoding apparatus 10 may not acquire the information indicating whether to perform illumination compensation from a bitstream. When the second information indicates that a view-direction reference picture available in an inter-layer prediction process is included in a reference picture list, the video decoding apparatus 10 may acquire the information indicating whether to perform illumination compensation from a bitstream.

According to an embodiment, based on the first information indicating whether a disparity vector is available in a current coding unit, the controller 11 of the video decoding apparatus 10 may control the information acquirer 12 to acquire fourth information indicating whether a depth-based block partitioning (DBBP) technique is available from a bitstream. The DBBP technique may include a method of splitting a texture image and perform prediction by using depth information included in a multilayer image including a plurality of layers.

The fourth information may indicate whether inter-sample prediction may be performed to split a block and perform prediction based on depth information in a current coding unit. When the fourth information is 0, the video decoding apparatus 10 may not perform inter-sample prediction, and when the fourth information is 1, the video decoding apparatus 10 may perform inter-sample prediction.

Referring to FIG. 3D, the video decoding apparatus 10 may determine whether a value of DispAvailFlag 30b indicating whether a disparity vector is available in a current coding unit is 0 in a condition 36, and may determine whether to acquire dbbp_flag[x0][y0] 37 indicating whether DBBP is available from a bitstream based on the value of DispAvailFlag 30b. In more detail, even when a disparity vector may not be derived from a neighboring block, when a reference picture available in inter-layer prediction is included in a reference picture list, the video decoding apparatus 10 may set a disparity vector of a current coding unit by using a default disparity vector and may set the first information as a value of 1. When the first information indicates a value of 1, the video decoding apparatus 10 may acquire the fourth information indicating whether DBBP is available from a bitstream.

According to an embodiment, the value of DispAvailFlag 30b may indicate 0 when a disparity vector is not available in a current coding unit, and the video decoding apparatus 10 may fail to acquire dbbp_flag[x0][y0] 37 from a bitstream because the condition 36 may fail to be satisfied when the value of DispAvailFlag 30b is 0. That is, since a disparity vector is necessary to use a DBBP technique, when a disparity vector is not available in a current coding unit, it is not necessary to acquire the syntax 37 related to the DBBP technique from a bitstream. According to this embodiment, efficient video decoding may be performed by skipping an unnecessary syntax acquiring process.

FIG. 1B illustrates a block diagram of a video encoding apparatus 15 for encoding a video including a multilayer, according to an embodiment.

Referring to FIG. 1B, the video encoding apparatus 15 may include a controller 16 that may perform image processing for encoding a video including a multilayer and a bitstream generator 17 that may generate a bitstream including information necessary to encode a video.

According to an embodiment, the controller 16 may determine whether a reference picture for inter-layer prediction is included in a reference picture list. Various types of reference pictures may be included in the reference picture list. For example, pictures having temporally different reproduction orders may be included as pictures available for performance of inter prediction, and pictures having different layer identifiers for layer identification may be included as pictures available for performance of inter-layer prediction.

According to an embodiment, the controller 16 of the video encoding apparatus 15 may determine whether a reference picture for inter-layer prediction is included in a reference picture list. In addition, when a reference picture for inter-layer prediction is included in a reference picture list, the controller 16 of the video encoding apparatus 15 may set first information to indicate that a disparity vector is available. This process may include the feature of a process corresponding to operation S210 of the video decoding apparatus 10.

According to an embodiment, in order to determine whether a reference picture available for inter-layer prediction is included among at least one picture included in the reference picture list, the controller 16 may determine whether a view index that is layer identification information of the reference pictures included in the reference picture list is equal to a view index of a reference picture candidate group that is available in inter-layer prediction of a current picture. The controller 16 may determine index values smaller than a view index of the current picture as a view index of the reference picture candidate group. For example, the view index of the reference picture candidate group may be included in the range of 0 to a value smaller by 1 than a value of the view index.

The controller 16 may determine whether a view index of at least one picture in the reference picture list of the current picture is equal to the view index of the reference picture candidate group. When there is a reference picture having a view index equal to the view index of the reference picture candidate group among at least one reference picture included in the reference picture list of the current picture, the controller 16 may determine that the reference picture available in inter-layer prediction is included in the reference picture list.

According to an embodiment, in order to determine whether a reference picture for inter-layer prediction is included in the reference picture list, the controller 16 may determine whether there is a reference picture having a view index equal to the view index of the reference picture candidate group among at least one reference picture included in the reference picture list of the current picture. In addition, the controller 16 may compare an index representing the reproduction order of the current picture with an index representing the reproduction order of the reference picture having the same value as the view index of the reference picture candidate group. For example, the controller 16 may compare a POC of the current picture with a POC of the reference picture having the same value as the view index of the reference picture candidate group. That is, the controller 16 may determine whether a POC of the reference picture having a view index equal to the view index of the reference picture candidate group among at least one reference picture included in the reference picture list of the current picture is equal to a POC of the current picture and may determine that the reference picture for inter-layer prediction is included in the reference picture list, when the POCs are equal to each other.

FIG. 3A illustrates semantics for a process of determining whether a reference picture available in inter-layer prediction is included in a reference picture list. The semantics illustrated in FIG. 3A may be related to a process of determining whether a reference picture available in inter-layer prediction is included in a reference picture list by the video decoding apparatus 10 according to an embodiment, and this process may correspond to the result of reversely performing an encoding process performed on an original image by the video encoding apparatus 15. Detailed contents thereof may be the contents corresponding to the above description in which the video decoding apparatus 10 operates according to the semantics of FIG. 3A, and thus redundant descriptions thereof will be omitted for conciseness. According to the semantics of FIG. 3A, the controller 16 of the video encoding apparatus 15 may determine whether a reference picture available in inter-layer prediction is included in a reference picture list.

According to an embodiment, when a reference picture exists in a reference picture list, the controller 16 of the video encoding apparatus 15 may set the first information to indicate that a disparity vector is available. According to an embodiment, when it is determined in operation S210 that a reference picture for inter-layer prediction is included in a reference picture list, the controller 16 may set the first information to indicate that a disparity vector is available. Herein, whether a disparity vector is available may be determined based on a predetermined data unit, for example, a current coding unit. According to an embodiment, by acquiring information about a disparity vector from a neighboring block of a current coding unit, the controller 16 may determine whether the disparity vector is available in the current coding unit. According to another embodiment, even when information about a disparity vector fails to be acquired from a neighboring block of a current coding unit, when a reference picture for inter-layer prediction is included in a reference picture list, the controller 16 may determine a disparity vector of the current coding unit by using a default disparity vector. In this way, even when a disparity vector of a current coding unit is determined based on a default disparity vector, the controller 16 may set the first information to indicate that a disparity vector is available. According to an embodiment, a default disparity vector may represent a value indicating a layer including a current picture. For example, the default disparity vector may have a value of (0,0).

FIG. 3C illustrates semantics for a process of using a default disparity vector when a disparity vector is not to be derived from a neighboring block of a current coding unit by the controller 16 of the video encoding apparatus 15, according to an embodiment.

According to an embodiment, the controller 16 of the video encoding apparatus 15 may determine whether a disparity vector is to be derived from a neighboring block of a current coding unit. When it is determined that a disparity vector is to be derived from a neighboring block, the controller 16 may set the first information to indicate that a disparity vector is available and may set a disparity vector for a current coding unit as a disparity vector of neighboring blocks. In addition, when it is determined that a disparity vector is to be derived from a neighboring block, the controller 16 may set a reference picture available for inter-layer prediction in a current coding unit as a reference picture available for inter-layer prediction in a neighboring block.

Referring to FIG. 3C, according to an embodiment, by acquiring information about a disparity vector from a neighboring block of a current coding unit, the controller 16 may determine whether a disparity vector of the current coding unit is to be derived. A disparity vector using process performed by the controller 11 of the video encoding apparatus 15 according to the semantics illustrated in FIG. 3C may correspond to a process of using a disparity vector by the controller 16 of the video decoding apparatus 10 according to the semantics of FIG. 3C when a disparity vector may not be derived from a neighboring block of a current coding unit, and thus redundant descriptions thereof will be omitted for conciseness.

According to an embodiment, based on whether a reference picture for inter-layer prediction is included in a reference picture list and whether information about a disparity vector may be acquired from a neighboring block of a current coding unit, the controller 16 may determine a disparity vector of a current coding unit by using a default disparity vector. For example, when a disparity vector of a current coding unit may not be determined by using a disparity vector of samples around a current coding unit and a reference picture for inter-layer prediction is included in a reference picture list, the controller 16 may determine a disparity vector of a current coding unit by using a default disparity vector. That is, even when a disparity vector fails to be derived from a neighboring block of a current coding unit, when a reference picture for inter-layer prediction is included in a reference picture list, the controller 16 may set the first information to indicate that a disparity vector is available.

According to an embodiment, in principle, when a disparity vector may not be derived from a neighboring block, the first information related to a current coding unit may have different values according to the case where a disparity vector fails to be derived from a neighboring block and thus a disparity vector of a current coding unit is set as a default disparity vector value and the case where a reference picture available for inter-layer prediction is included in a reference picture list. However, in the related art, the syntax for inter-layer prediction may be acquired only when the first information indicates that a disparity vector may be derived from a neighboring block. However, even when a disparity vector may not be derived from a neighboring block, when a disparity vector of a current coding unit is set as a default disparity vector value, since inter-layer prediction may be performed, it may be efficient to acquire the syntax for inter-layer prediction. Thus, according to an embodiment, not only in the case where a disparity vector may not be derived from a neighboring block but also in the case where a disparity vector fails to be derived from a neighboring block and thus a disparity vector of a current coding unit is set as a default disparity vector value, the controller 16 may set the first information to indicate that a disparity vector is available and may determine whether a reference picture for residual prediction in inter-layer prediction is available, based on the set first information. This will be described below in more detail with reference to various embodiments.

According to an embodiment, the controller 16 of the video encoding apparatus 15 may set, based on the set first information, second information to indicate that a reference picture is available in a residual prediction process.

According to an embodiment, when a reference picture for inter-layer prediction is included in a reference picture list related to a current picture and thus the first information indicates that a disparity vector is available, the video encoding apparatus 15 may set the second information to indicate that a reference picture in a reference picture list is available in a residual prediction process. That is, when the first information does not indicate that a disparity vector is available in a current coding unit, the controller 16 may set the second information to indicate that a reference picture in a reference picture list is not available in a residual prediction process. In addition, when the first information indicates that a disparity vector is available in a current coding unit and other predetermined conditions are satisfied, the controller 16 may set the second information to indicate that a reference picture in a reference picture list is available in a residual prediction process. According to an embodiment, the controller 16 may check not only the first information but also a predetermined condition in the process of setting the second information to indicate that a reference picture in a reference picture list is available in a residual prediction process, and the predetermined condition may include whether a temporal reference picture available in an inter prediction process exists in a reference picture list. In more detail, when the current coding unit is included in a P or B slice, one or two reference picture lists may be provided. The controller 16 may determine whether at least one temporal reference picture available in inter prediction exists in at least one reference picture list available in a current coding unit for inter prediction. When at least one temporal reference picture available in inter prediction exists in a reference picture list and the first information indicates that a disparity vector is available in a current coding unit, the controller 16 may set the second information to indicate that a reference picture in a reference picture list is available in a residual prediction process.

FIG. 3B illustrates semantics for a process of setting second information, according to an embodiment.

Referring to FIG. 3B, according to an embodiment, the controller 16 of the video encoding apparatus 15 may set a value of RpRefPicAvailFlag 32 as the second information. RpRefPicAvailFlag 32 may be determined based on whether a temporal reference picture exists in a reference picture list. When a slice related to a current coding unit is a P slice, one reference picture list may be provided, and when the slice is a B slice, two reference picture lists may be provided. The controller 16 may determine (33a) whether a temporal reference picture exists in at least one reference picture list related to a current coding unit, and may also determine (30b) whether the first information indicates that a disparity vector is available. According to an embodiment, when a disparity vector related to a current coding unit may be derived from a neighboring block or may be set as a default disparity vector, the first information may have a value greater than 0. Thus, when a temporal reference picture exists in at least one reference picture list related to a current coding unit and the first information indicates that a disparity vector is available, the controller 16 may set the second information of RpRefPicAvailFlag 32 as a value greater than 0. The second information may be used to determine whether to perform residual prediction. This will be described below in more detail with reference to various embodiments.

According to an embodiment, based on the set first information, the video encoding apparatus 15 may generate a bitstream including third information indicating whether to perform residual prediction in a current coding unit.

According to an embodiment, when the first information indicates that a disparity vector is available, the controller 16 of the video encoding apparatus 15 may control the bitstream generator 17 to generate a bitstream including the third information indicating whether to perform residual prediction in a current coding unit. That is, when a disparity vector is available and a reference picture available in residual prediction is included in a reference picture list, the video encoding apparatus 15 may generate a bitstream including the third information that is information for performing residual prediction in inter-layer prediction in a current coding unit.

According to an embodiment, the video encoding apparatus 15 may set the second information based on the first information and may generate a bitstream including the third information indicating whether to perform residual prediction in a current coding unit, based on the set second information. In more detail, when the first information indicates that a disparity vector is available and the second information indicates that a reference picture is available in a residual prediction process, the controller 16 of the video encoding apparatus 15 may control the bitstream generator 17 to generate a stream including the third information indicating whether to perform residual prediction in a current coding unit. That is, when a disparity vector is available and a reference picture available in residual prediction is included in a reference picture list, the video encoding apparatus 15 may generate a bitstream including the third information to perform residual prediction in inter-layer prediction in a current coding unit. Based on the acquired third information, the controller 16 may determine whether to perform residual prediction.

A process of generating a bitstream including predetermined information based on the first information related to the availability of a disparity vector in a current coding unit by the video encoding apparatus 15, according to an embodiment, will be described below.

Referring to FIG. 3D, based on the condition 38, the video encoding apparatus 15 may determine whether to generate a bitstream including the third information 39a. In the condition 45, the controller 16 may generate a bitstream including the third information 39a based on the second information 32 indicating whether a reference picture is available in residual prediction. For example, when the second information of RpRefPicAvailFlag indicates that a reference picture is available in residual prediction, the video encoding apparatus 15 may generate a bitstream including the third information of iv_res_pred_weight_idx[x0][y0] based on the second information. A process of generating a bitstream including the third information by the controller 16 of the video encoding apparatus 15 may correspond to a process of acquiring the third information from a bitstream by the controller 11 of the video decoding apparatus 10 in association with FIG. 3D, and thus redundant descriptions thereof will be omitted for conciseness.

According to an embodiment, based on the second information, the video encoding apparatus 15 may determine whether to perform illumination compensation in a current coding unit. In more detail, based on the first information, the video encoding apparatus 15 may determine whether a disparity vector is available in a current coding unit. Even when a disparity vector may not be derived from a neighboring block, when a reference picture available in inter-layer prediction is included in a reference picture list, the video encoding apparatus 15 may set a disparity vector of a current coding unit by using a default disparity vector and may set the first information as a value of 1. When the first information indicates a value of 1, the video encoding apparatus 15 may set the second information to indicate that a reference picture is available in a residual prediction process. When the second information indicates that a reference picture available in an inter-layer prediction process is included in a reference picture list, the video encoding apparatus 15 may generate a bitstream including information indicating whether to perform illumination compensation in a current coding unit.

According to an embodiment, since the video encoding apparatus 15 always refers to a view-direction reference picture available in an inter-layer prediction process in the case of performing illumination compensation, the video encoding apparatus 15 may first determine whether a view-direction reference picture available in an inter-layer prediction process exists in a reference picture list of a slice including a current coding unit.

According to an embodiment, when the second information indicates that a view-direction reference picture available in an inter-layer prediction process is not included in a reference picture list, the video encoding apparatus 15 may not include the information indicating whether to perform illumination compensation in a bitstream. When the second information indicates that a view-direction reference picture available in an inter-layer prediction process is included in a reference picture list, the video encoding apparatus 15 may generate a bitstream including the information indicating whether to perform illumination compensation.

According to an embodiment, based on the first information indicating whether a disparity vector is available in a current coding unit, the controller 16 of the video encoding apparatus 15 may control the bitstream generator 17 to generate a bitstream including fourth information indicating whether a DBBP technique is available. The DBBP technique may include a method of splitting a texture image and perform prediction by using depth information included in a multilayer image including a plurality of layers.

The fourth information may indicate whether inter-sample prediction may be performed to split a block and perform prediction based on depth information in a current coding unit. When the fourth information is 0, the video encoding apparatus 15 may not perform inter-sample prediction, and when the fourth information is 1, the video encoding apparatus 15 may perform inter-sample prediction.

Referring to FIG. 3D, the video encoding apparatus 15 may determine whether a value of DispAvailFlag 30b indicating whether a disparity vector is available in a current coding unit is 0 in the condition 36, and may determine whether to generate a bitstream including dbbp_flag[x0][y0] 37 indicating whether DBBP is available based on the value of DispAvailFlag 30b. In more detail, even when a disparity vector may not be derived from a neighboring block, when a reference picture available in inter-layer prediction is included in a reference picture list, the video encoding apparatus 15 may set a disparity vector of a current coding unit by using a default disparity vector and may set the first information as a value of 1. When the first information indicates a value of 1, the video encoding apparatus 15 may generate a bitstream including the fourth information indicating whether DBBP is available.

According to an embodiment, the value of DispAvailFlag 30b may indicate 0 when a disparity vector is not available in a current coding unit, and the video encoding apparatus 15 may generate a bitstream including dbbp_flag[x0][y0] 37 because the condition 36 may fail to be satisfied when the value of DispAvailFlag 30b is 0. That is, since a disparity vector is necessary to use a DBBP technique, when a disparity vector is not available in a current coding unit, it is not necessary to include the syntax 37 related to the DBBP technique in a bitstream. According to this embodiment, efficient video encoding may be performed by skipping an unnecessary syntax encoding process.

FIG. 4A illustrates a block diagram of an inter-layer video decoding apparatus 40 according to an embodiment. The inter-layer video decoding apparatus 40 according to an embodiment may include a first layer decoder 42 and a second layer decoder 44. The inter-layer video decoding apparatus 40 of FIG. 4A may correspond to the video decoding apparatus 10 of FIG. 1A. In addition, the operations performed by the first layer decoder 42 and the second layer decoder 44 of FIG. 4A may be performed by the controller 11 of FIG. 1A.

The inter-layer video decoding apparatus 40 according to an embodiment may receive bitstreams on a layer-by-layer basis according to a scalable encoding method. The number of layers of the bitstreams received by the inter-layer video decoding apparatus 40 is not limited. However, for convenience of description, an embodiment in which the first layer decoder 42 of the inter-layer video decoding apparatus 40 receives and decodes a first layer stream and the second layer decoder 44 receives and decodes a second layer stream will be described below.

For example, the inter-layer video decoding apparatus 40 based on spatial scalability may receive a stream generated by encoding image sequences of different resolutions in different layers. The first layer stream may be decoded to reconstruct a low-resolution image sequence, and the second layer stream may be decoded to reconstruct a high-resolution image sequence.

As another example, a multiview video may be decoded according to a scalable video coding method. When a stereoscopic video stream is received in a plurality of layers, the first layer stream may be decoded to reconstruct left view images. The right view images may be reconstructed by further decoding the second layer stream in addition to the first layer stream.

Alternatively, when a multiview video stream is received in a plurality of layers, the first layer stream may be decoded to reconstruct center view images. The left view images may be reconstructed by further decoding the second layer stream in addition to the first layer stream. The right view images may be reconstructed by further decoding the third layer stream in addition to the first layer stream.

As another example, a scalable video coding method based on temporal scalability may be performed. The first layer stream may be decoded to reconstruct base frame rate images. The high frame rate images may be reconstructed by further decoding the second layer stream in addition to the first layer stream.

Also, when there are three or more second layers, the first layer images may be reconstructed from the first layer stream, and the second layer images may be further reconstructed by further decoding the second layer stream with reference to the first layer reconstruction images. The Kth layer images may be further reconstructed by further decoding the Kth layer stream with reference to the second layer reconstruction image.

The inter-layer video decoding apparatus 40 may acquire the encoded data of the first layer images and the second layer images from the first layer stream and the second layer stream and may further acquire the motion vector generated by inter prediction and the prediction information generated by inter-layer prediction.

For example, the inter-layer video decoding apparatus 40 may decode inter-predicted data in each layer and decode inter-layer-predicted data between a plurality of layers. The reconstruction may be performed through the motion compensation and the inter-layer decoding based on the encoding unit or the prediction unit.

Regarding each layer stream, images may be reconstructed by performing motion compensation for a current image by referring to reconstructed images predicted via inter prediction with respect to the same layer. The motion compensation may refer to an operation of reconstructing the reconstruction image of the current image by synthesizing the residual component of the current image and the reference image determined by using the motion vector of the current image.

Also, in order to reconstruct the second layer image predicted through inter-layer prediction, the inter-layer video decoding apparatus 40 may perform inter-layer decoding with reference to the first layer images. The inter-layer decoding may refer to an operation of reconstructing the reconstruction image of the current image by synthesizing the residual component of the current image and the reference image of another layer determined to predict the current image.

According to an embodiment, the inter-layer video decoding apparatus 40 may perform inter-layer decoding for reconstructing the third layer images predicted with reference to the second layer images. An inter-layer prediction structure thereof will be described below in detail with reference to FIG. 5A.

However, the second layer decoder 44 according to an embodiment may decode the second layer stream even without reference to the first layer image sequence. Thus, it should be noted that the second layer decoder 44 is not limited as performing inter-layer prediction to decode the second layer image sequence.

The inter-layer video decoding apparatus 40 performs decoding on each block of each image of a video. Among the coding units according to a tree structure, the block may be a largest coding unit, a coding unit, a prediction unit, a transformation unit, or the like.

The first layer decoder 42 may decode the first layer image by using parsed encoding symbols of the first layer image. When the inter-layer video decoding apparatus 40 receives streams encoded based on coding units of a tree structure, the first layer decoder 42 may perform decoding based on the coding units of the tree structure according to a largest coding unit of the first layer stream.

The first layer decoder 42 may acquire encoding information and encoded data by performing entropy decoding per largest coding unit. The first layer decoder 42 may reconstruct a residual component by performing inverse quantization and inverse transformation on encoded data acquired from a stream. According to another embodiment, the first layer decoder 42 may directly receive a bitstream of quantized transformation coefficients. Residual components of images may be reconstructed by performing inverse quantization and inverse transformation on the quantized transformation coefficients

The first layer decoder 42 may reconstruct the first layer images by combining the prediction image and the residual component through motion compensation between same layer images.

According to an inter-layer prediction structure, the second layer decoder 44 may generate a second layer prediction image by using samples of a first layer reconstruction image. The second layer decoder 44 may acquire a prediction error according to inter-layer prediction by decoding a second layer stream. The second layer decoder 44 may generate a second layer reconstruction image by combining a second layer prediction image and the prediction error.

The second layer decoder 44 may determine a second layer prediction image by using a decoded first layer reconstruction image decoded by the first layer decoder 42. According to an inter-layer prediction structure, the second layer decoder 44 may determine a block of the first layer image which is to be referred to by a block such as a prediction unit or a coding unit of the second layer image. For example, a reconstruction block of a first layer image whose position corresponds to a position of a current block of the second layer image may be determined. The second layer decoder 44 may determine a second layer prediction block by using a first layer reconstruction block corresponding to the second layer block.

The second layer decoder 44 may use the second layer prediction block determined by using the first layer reconstruction block according to an inter-layer prediction structure, as a reference image for inter-layer prediction of the second layer original block. In this case, the second layer decoder 44 may reconstruct the second layer block by synthesizing the residual component according to the inter-layer prediction and the sample value of the second layer prediction block determined by using the first layer reconstruction image.

According to a spatial scalable video coding method, when the first layer decoder 42 reconstructs the first layer image of the different resolution from the second layer image, the second layer decoder 44 may interpolate the first layer reconstruction image for size adjustment to the same resolution as the second layer original image. The interpolated first layer reconstruction image may be determined as the second layer prediction image for inter-layer prediction.

Thus, the first layer decoder 42 of the inter-layer video decoding apparatus 40 may reconstruct the first layer image sequence by decoding the first layer stream and reconstruct the second layer image sequence by decoding the second layer stream.

Hereinafter, an inter-layer decoding apparatus 40 using a particular encoding tool according to a particular condition, according to an embodiment of the inventive concept, will be described.

The first layer decoder 42 reconstructs a first layer image based on the encoding information of the first layer image acquired from a bitstream.

The second layer decoder 44 splits the largest coding unit of the second layer image into one or more coding units based on the split information of the second layer image acquired from a bitstream. The second layer decoder 44 splits the coding unit into prediction units for prediction decoding.

The second layer decoder 44 may determine a structure of the coding unit by splitting the coding unit into one or more prediction units based on at least one of the prediction mode information and the partition mode information of the coding unit acquired from a bitstream.

Based on at least one of the prediction mode information, the size information, and the color depth information of the current prediction unit, the second layer decoder 44 determines whether to use a predetermined encoding tool and performs decoding on the current prediction unit by using the predetermined encoding tool.

When the prediction unit has the same size as the coding unit, the second layer decoder 44 may perform decoding by using a predetermined encoding tool. Herein, the predetermined encoding tool may be a tool for performing encoding on the prediction unit by using the first layer image. The predetermined encoding tool may include at least one of MPI (Motion Parameter Inheritance), IVMP (Inter-View Motion Parameter Prediction), DDD (Disparity Derived Depth), VSP (View Synthesis Prediction), IC (Illumination Compensation), SDC (Segment-wise DC Coding), DMM (Depth Modeling Mode), DBBP (Depth-Based Block Partitioning), and ARP (Advanced Residual Prediction).

The inter-layer video decoding apparatus 40 according to an embodiment may include a central processor (not illustrated) for collectively controlling the first layer decoder 42 and the second layer decoder 44. Alternatively, each of the first layer decoder 42 and the second layer decoder 44 may be operated by its own processor (not illustrated), and the inter-layer video decoding apparatus 40 may be operated as a whole when the processors (not illustrated) operate organically with respect to each other. Alternatively, the first layer decoder 42 and the second layer decoder 44 may be controlled by an external processor (not illustrated) of the inter-layer video decoding apparatus 40 according to an embodiment.

The inter-layer video decoding apparatus 40 according to an embodiment may include one or more data storages (not illustrated) for storing the input/output data of the first layer decoder 42 and the second layer decoder 44. The inter-layer video decoding apparatus 40 may include a memory controller (not illustrated) for controlling the data input/output of a data storage (not illustrated).

According to an embodiment, in order to reconstruct the video through video decoding, the inter-layer video decoding apparatus 40 may perform a video decoding operation including inverse transformation by operating in conjunction with an external video decoding processor or an internal video decoding processor thereof. The internal video decoding processor of the inter-layer video decoding apparatus 40 according to an embodiment may be a separate processor. However, in some cases, the inter-layer video decoding apparatus 40, the central operation apparatus, or the graphic operation apparatus may include a video decoding processing module to implement a basic video decoding operation.

FIG. 4B illustrates a block diagram of an inter-layer video encoding apparatus 45 according to an embodiment. The inter-layer video encoding apparatus 45 according to an embodiment may include a first layer encoder 46 and a second layer encoder 48. The inter-layer video encoding apparatus 45 of FIG. 4B may correspond to the video encoding apparatus 15 of FIG. 1B. In addition, the operations performed by the first layer encoder 46 and the second layer encoder 48 of FIG. 4B may be performed by the controller 16 of FIG. 1B.

According to an embodiment, the inter-layer video encoding apparatus 45 may classify and encode a plurality of image sequences on a layer-by-layer basis according to a scalable video coding method and may output a separate stream including the data encoded on a layer-by-layer basis. The inter-layer video encoding apparatus 45 may encode a first layer image sequence and a second layer image sequence in different layers.

The first layer encoder 46 may encode first layer images and may output a first layer stream including the encoding data of the first layer images.

The first layer encoder 48 may encode second layer images and may output a second layer stream including the encoding data of the second layer images.

For example, according to a scalable video coding method based on spatial scalability, low-resolution images may be encoded as first layer images, and high-resolution images may be encoded as second layer images. The encoding result of the first layer images may be output as a first layer stream, and the encoding result of the second layer images may be output as a second layer stream.

As another example, a multiview video may be encoded according to a scalable video coding method. When two-view images are to be encoded, left view images may be encoded as first layer images and right view images may be encoded as second layer images. Alternatively, when three-view images are to be encoded, center view images, left view images, and right view images may be respectively encoded, wherein the center view images may be encoded as first layer images, the left view images may be encoded as second layer images, and the right view images may be encoded as third layer images. The inventive concept is not limited to this configuration, and the reference layer and the layers in which center view, left view, and right view images are encoded may vary according to embodiments.

As another example, a scalable video coding method may be performed according to temporal hierarchical prediction based on the temporal scalability. A first layer stream including the encoded information generated by encoding the images of a base frame rate may be output. A temporal layer (temporal level) may be classified with respect to each frame rate, and each temporal layer may be encoded as each layer. The images of a high frame rate may be further encoded with reference to the images of the base frame rate, and a second layer stream including the encoded information of the high frame rate may be output.

Also, scalable video coding may be performed on a first layer and a plurality of second layers. When there are two or more second layers, the first layer images, the first second layer images, the second second layer images, ..., the Kth second layer images may be encoded. Accordingly, the encoding result of the first layer images may be output as the first layer stream, and the encoding results of the first, second, ..., Kth second layer images may be output as the first, second, ..., Kth second layer streams respectively.

Also, multiview video coding may be performed on a first layer and a plurality of layers. When there are K view images, first layer images, second layer images, third layer images, ..., Kth layer images may be encoded. Accordingly, the encoding result of the first layer images may be output as a first layer stream, and the encoding result of the Kth layer images may be output as a Kth layer stream.

A multiview scalable bitstream includes sub-streams corresponding to different viewpoints in one bitstream. For example, in a stereoscopic image, a bitstream includes a left image and a right image. Also, a scalable bitstream may include sub-streams related to a multiview image and encoded data of a depth map. The viewpoint scalability may also be classified into different dimensions according to different viewpoints.

Different scalable expansion types may be combined with each other. That is, a scalable video bitstream may include sub-streams in which image sequences of a multilayer including images, wherein at least one of temporal, spatial, quality, and multiview scalabilities are different from each other, are encoded.

According to an embodiment, the first layer image sequence, the second layer image sequence, and the nth layer image sequence may be image sequences that are different in at least one of resolution, image quality, and view. Also, when a first layer image sequence is a base layer image sequence, other layer image sequences may be defined as enhancement layer image sequences. An enhancement layer may be defined as a layer that may be predicted with reference to one or more neighboring view images. However, a base layer may be determined as one of a plurality of layers, and the base layer is not limited to the first layer.

As an example, the first layer image sequence may be the first view images, the second layer image sequence may be the second view images, and the nth layer image sequence may be the nth view images. As another example, the first layer image sequence may be the left view images of the base layer, the second layer image sequence may be the right view images of the base layer, and the nth layer image sequence may be the right view images of the enhancement layer. However, the inventive concept is not limited thereto, and the image sequences having different scalable extension types may be respectively image sequences having different image attributes.

According to an embodiment, the inter-layer video encoding apparatus 45 may perform inter prediction for predicting the current image with reference to the images of a single layer. A motion vector representing motion information between the current image and the reference image and a residual component between the current image and the reference image may be generated through the inter prediction.

Also, the inter-layer video encoding apparatus 45 may perform inter-layer prediction for predicting the second layer images with reference to the first layer images.

Also, according to an embodiment, when the inter-layer video encoding apparatus 45 allows three or more layers such as the first layer, the second layer, and the third layer, the inter-layer prediction between a first layer image and a third layer image and the inter-layer prediction between a second layer image and a third layer image may be performed according to a multilayer prediction structure.

A position difference component between the current image and the reference image of another layer and a residual component between the current image and the reference image of another layer may be generated through the inter-layer prediction.

According to an embodiment, the inter-layer video encoding apparatus 45 encodes each block of each image of a video in each layer. A block may have a square shape, a rectangular shape, or an arbitrary geometrical shape, and is not limited to a data unit having a predetermined size. The block may be a largest coding unit, a coding unit, a prediction unit, or a transformation unit, among coding units according to a tree structure. The largest coding unit including the coding units of a tree structure may be called differently, such as a coding block tree, a block tree, a root block tree, a coding tree, a coding root, or a tree trunk. Video encoding and decoding schemes based on the coding units according to a tree structure will be described later with reference to FIGS. 7 through 20.

Inter prediction and inter-layer prediction may be performed based on a data unit of a coding unit, a prediction unit, or a transformation unit.

According to an embodiment, the first layer encoder 46 may generate symbol data by performing source coding operations including inter prediction or intra prediction on the first layer images. The symbol data represents a sample value of the residual and a sample value of each encoding parameter.

For example, the first layer encoder 46 may generate symbol data by performing inter prediction or intra prediction, transformation, and quantization on the samples of the data unit of the first layer images and may generate a first layer stream by performing entropy encoding on the symbol data.

The second layer encoder 48 may encode the second layer images based on the coding units of a tree structure. The second layer encoder 48 may generate symbol data by performing inter/intra prediction, transformation, and quantization on the samples of the data unit of the second layer images and may generate a second layer stream by performing entropy encoding on the symbol data.

According to an embodiment, the second layer encoder 48 may perform inter-layer prediction for predicting a second layer image by using a reconstruction sample of a first layer image. In order to encode a second layer original image among the second layer image sequence through an inter-layer prediction structure, the second layer encoder 48 may generate a second layer prediction image by using a first layer reconstruction image and may encode a prediction error between the second layer original image and the second layer prediction image.

The second layer encoder 48 may perform inter-layer prediction on a second layer image with respect to each block such as a coding unit or a prediction unit. A block of the first layer image to be referenced by a block of the second layer image may be determined. For example, a reconstruction block of a first layer image whose position corresponds to a position of a current block of the second layer image may be determined. The second layer encoder 48 may determine a second layer prediction block by using a first layer reconstruction block corresponding to the second layer block.

The second layer encoder 48 may use the second layer prediction block determined by using the first layer reconstruction block according to an inter-layer prediction structure, as a reference image for inter-layer prediction of the second layer original block. By using the first layer reconstruction image, the second layer encoder 48 may entropy-encode an error between the sample value of a second layer prediction block and the sample value of a second layer original block, that is, a residual component according to inter-layer prediction.

As described above, the second layer encoder 48 may encode the current layer image sequence with reference to the first layer reconstruction images through the inter-layer prediction structure. However, according to an embodiment, the second layer encoder 48 may encode the second layer image sequence according to the single-layer prediction structure without reference to other layer samples. Thus, it should be noted that the second layer encoder 48 is not limited as performing inter-layer prediction to encode the second layer image sequence.

The first layer encoder 46 generates a bitstream including the encoded information generated by encoding the first layer image.

The second layer encoder 48 may split the largest coding unit of a second layer image into one or more coding units and may split the coding unit into one or more prediction units for prediction encoding. The second layer encoder 48 encodes the prediction units split according to a plurality of prediction modes or partition modes, and determines an optimal prediction mode or partition mode based on a rate-distortion cost. The second layer decoder 48 may determine a structure of the coding unit by splitting the coding unit into one or more prediction units by using the determined prediction mode or partition mode of the coding unit.

The second layer encoder 48 determines whether to use a predetermined encoding tool based on at least one of the prediction mode, the size, and the color depth of the prediction unit, and encodes a current prediction unit according to the determination.

When the determined prediction unit has the same size as the coding unit, the second layer encoder 48 may perform encoding by using a predetermined encoding tool. The predetermined encoding tool used in the second layer encoder 48 may be a tool for performing encoding on the prediction unit by using the first layer image. The predetermined encoding tool may include at least one of MPI (Motion Parameter Inheritance), IVMP (Inter-View Motion Parameter Prediction), DDD (Disparity Derived Depth), VSP (View Synthesis Prediction), IC (Illumination Compensation), SDC (Segment-wise DC Coding), DMM (Depth Modeling Mode), DBBP (Depth-Based Block Partitioning), and ARP (Advanced Residual Prediction).

FIG. 5A illustrates an inter-layer prediction structure according to an embodiment.

According to an embodiment, the inter-layer video encoding apparatus 45 may prediction-encode base view images, left view images, and right view images according to a reproduction order 50 of a multiview video prediction structure illustrated in FIG. 5A. Information about the respective view images described below may be information included in each layer of a multilayer image. For example, information about a base view image may be information included in a base layer of the multilayer image, and information about a left view image or a right view image may be information included in an enhancement layer of the multilayer image.

According to the reproduction order 50 of a multiview video prediction structure according to the related art, same view images are arranged in a horizontal direction. Thus, the left view images represented by 'Left' are arranged in a line in the horizontal direction, the base view images represented by 'Center' are arranged in a line in the horizontal direction, and the right view images represented by 'Right' are arranged in a line in the horizontal direction. The base view images may be center view images in comparison with the left view/right view images.

Also, the images having the same POC order are arranged in the vertical direction. The POC order of the image may represent the reproduction order of the images constituting a video. "POC X" indicated in the multiview video prediction structure 50 may represent the relative reproduction order of the images located in a relevant column, wherein the reproduction order may be earlier as the number of X decreases, and the reproduction order may be later as the number of X increases.

Thus, according to the reproduction order 50 of a multiview video prediction structure according to the related art, the left view images represented by 'Left' are arranged in the horizontal direction according to the POC order (reproduction order), the base view images represented by 'Center' are arranged in the horizontal direction according to the POC order (reproduction order), and the right view images represented by 'Right' are arranged in the horizontal direction according to the POC order (reproduction order). Also, the left view images and the right view images located in the same column as the base view images are images that have the same POC order (reproduction order) while having different views.

In each view, four consecutive images constitute a Group of Pictures (GOP). Each GOP includes one anchor picture (key picture) and images between consecutive anchor pictures.

The anchor picture corresponds to a random access point. When a reproduction position is selected among the arranged images according to the POC order, that is, the reproduction order of an image in the process of reproducing a video, the anchor picture having the most adjacent POC order is reproduced at the reproduction position. The base view images include base view anchor pictures 51, 52, 53, 54, and 55, the left view images include left view anchor pictures 151, 152, 153, 154, and 155, and the right view images include right view anchor pictures 251, 252, 253, 254, and 255.

The multiview images may be reproduced and predicted (reconstructed) in the GOP order. First, according to the reproduction order 50 of a multiview video prediction structure, in each view, images included in GOP 0 may be reproduced and then images included in GOP 1 may be reproduced. That is, the images included in each GOP may be reproduced in the order of GOP 0, GOP 1, GOP 2, and GOP 3. Also, the coding order of a multiview video prediction structure, in each view, the images included in GOP 0 may be predicted (reconstructed) and then the images included in GOP 1 may be predicted (reconstructed). That is, the images included in each GOP may be predicted (reconstructed) in the order of GOP 0, GOP 1, GOP 2, and GOP 3.

According to the reproduction order of a multiview video prediction structure, both inter-view prediction (inter-layer prediction) and inter prediction are performed on images. In the multiview video prediction structure, an image at which an arrow starts corresponds to a reference image, and an image at which an arrow ends corresponds to an image predicted by using the reference image.

The prediction result of base view images may be encoded and then output in the form of a base view image stream, and the prediction result of additional view images may be encoded and then output in the form of a layer bitstream. Also, the prediction encoding result of left view images may be output as a first layer bitstream, and the prediction encoding result of right view images may be output as a second layer bitstream.

Only inter prediction may be performed on the base view images. That is, I-picture type anchor pictures 51, 52, 53, 54, and 55 refers to other images, but B-picture type and b-picture type merged images are predicted with reference to other base view images. The B-picture type images may be predicted with reference to the following I-picture type anchor picture and the preceding I-picture type anchor picture having a preceding POC order. The B-picture type images may be predicted with reference to the following B-picture type image and the preceding I-picture type anchor picture having a preceding POC order, or may be predicted with reference to the following I-picture type anchor picture and the preceding B-picture type image having a preceding POC order.

Inter-view prediction (inter-layer prediction) referring to different view images and inter prediction referring to the same view images may be performed on the left view image and the right view image.

Inter-view prediction (inter-layer prediction) may be performed on the left view anchor pictures 151, 152, 153, 154, and 155 with reference to the base view anchor pictures 51, 52, 53, 54, and 55 having the same POC order. Inter-view prediction may be performed on the right view anchor pictures 251, 252, 253, 254, and 255 with reference to the left view anchor pictures 151, 152, 153, 154, and 155 or the base view images 51, 52, 53, 54, and 55 having the same POC order. Also, inter-view prediction (inter-layer prediction) may be performed on the merged images (not the anchor pictures 151, 152, 153, 154, 155, 251, 252, 253, 254, and 255) among the left view images and the right view images with reference to other view images having the same POC order.

The merged images (not the anchor pictures 151, 152, 153, 154, 155, 251, 252, 253, 254, and 255) among the left view images and the right view images may be predicted with reference to the same view images.

However, the left view images and the right view images may not be predicted with reference to the anchor pictures having the preceding reproduction order among the same view additional view images. That is, a current left view image may be inter-predicted with reference to the left view images other than the left view anchor pictures having the preceding reproduction order than the current left view image. Likewise, a current right view image may be inter-predicted with reference to the right view images other than the right view anchor pictures having the preceding reproduction order than the current right view image.

Also, a current left view image may be inter-predicted with reference to the left view image that belongs to the current GOP but is to be reconstructed earlier than the current left view image, without reference to the left view image that belongs to the previous GOP preceding the current GOP to which the current left view image belongs. The same is true of the case of right view images.

According to an embodiment, the inter-layer video decoding apparatus 40 may reconstruct the base view images, the left view images, and the right view images according to the reproduction order 50 of a multiview video prediction structure illustrated in FIG. 5A.

The left view images may be reconstructed by inter-view disparity compensation referring to the base view images and inter-image motion compensation referring to the left view images. The right view images may be reconstructed by inter-view disparity compensation referring to the base view images and the left view images and inter-image motion compensation referring to the right view images. The reference images should be first reconstructed for disparity compensation and motion compensation of the left view images and the right view images.

For inter-image motion compensation of the left view image, the left view images may be reconstructed by inter-image motion compensation referring to the reconstructed left view reference image. For inter-image motion compensation of the right view image, the left view images may be reconstructed by inter-image motion compensation referring to the reconstructed right view reference image.

Also, a current left view image may be inter-image motion compensated with reference to only the left view image that belongs to the current GOP but is to be reconstructed earlier than the current left view image, without reference to the left view image that belongs to the previous GOP preceding the current GOP to which the current left view image belongs. The same is true of the case of right view images.

FIG. 5B is a diagram illustrating multiview video frames acquired through a multiview camera and depth map frames acquired through a depth camera.

Referring to FIG. 5B, a depth map frame 58 of a first view 'view 0' corresponding to a color video frame 56 of the first view 'view 0', a depth map frame 58 of a second view 'view 1' corresponding to a color video frame 56 of the second view 'view 1', and a depth map frame 58 of a third view 'view 2' corresponding to a color video frame 56 of the third view 'view 2' are illustrated. Although FIG. 5b illustrates a multiview color video frame 56 and a corresponding depth map frame 58 at three views 'view 0, view 1, and view 2', the number of views may vary according to embodiments. Also, in FIG. 5B, the multiview color video frame 56 may be one of a luminance component video frame (Y) and a chrominance component video frame (Cb,Cr).

Referring to FIG. 5B, between the depth map frame and the color video frames of the same view, since an image at the same view is represented by color and depth, there is a correlation therebetween. That is, when comparing the multiview color video frame 56 with the corresponding depth map frame 58, there is a predetermined correlation, for example, the fact that a contour of a subject may be identified. Thus, according to an embodiment, the inter-layer video encoding apparatus 45 and the inter-layer video data decoding apparatus 20 may improve the compression efficiency of multiview video data by prediction-encoding the corresponding depth map frame 58 from the multiview color video frame 56 through depth intra prediction in consideration of the correlation between the multiview color video frame 56 and the corresponding depth map frame 58. In particular, according to an embodiment of the inventive concept, the inter-layer video encoding apparatus 45 and the inter-layer video decoding apparatus 40 may split the block of the multiview color video frame 56 into partitions based on pixel values, split the block of the corresponding depth map frame 58 into partitions like the block of the multiview color video frame 56, acquire a parameter representing the correlation between the block partitions of a multiview color video frame and the block partitions of a depth map frame by using the neighboring pixel values of the block partitions of the multiview color video frame 56 and the neighboring pixel values of the block partitions of the depth map frame, and predict a block partition of the corresponding depth frame from the partition of the block of the multiview color video frame 56 by using the correlation determined by using the acquired parameter.

FIGS. 6A and 6B illustrate the contents related to a prediction mode using color information and depth information in a method of predicting a multiview video as a multilayer video.

FIG. 6A is a diagram illustrating an encoding tool used in a decoding process of the inter-layer video decoding apparatus 40, according to an embodiment.

In the present embodiment, the inter-layer video decoding apparatus 40 such as a single view decoder 61, a depth map decoder 62, a multiview decoder 63, and a multiview depth map decoder 64 may be physically divided; however, those of ordinary skill in the art may easily understand that one inter-layer video decoding apparatus 40 may be functionally divided.

Referring to FIG. 6A, encoding information of a color image of View 0 may be decoded by using the single view decoder 61. In the case of the single view decoder 61, a tool used for decoding may perform decoding without using a depth map image or other view images.

Encoding information of a depth image of View 0 may be input as an input of the depth map decoder 62. Unlike the single view decoder 61, the depth map decoder 62 may use a decoded color image of View 0. The depth image may be reconstructed by additional information, in which distance information of a subject and a camera is stored with respect to a certain pixel of a color image, and then virtual view images may be synthesized together with the color image. A 3D stereoscopy may be represented by the virtual view images.

Thus, in the color and depth images encoded for 3D stereoscopy, tools for encoding color images by using depth images, tools for encoding depth images by using color images, tools for encoding color images without using depth images, or tools for encoding depth images without using color images will be referred to as 3D encoding tools. In particular, not only encoding tools used to decode depth images without using color images but also tools used to decode only depth images may be referred to as 3D encoding tools because they may be used together with the encoding information of color images to generate a 3D image.

The tools used to encode/decode depth images may include SDC (Segment-wise DC Coding) and DMM (Depth Modeling Mode). The SDC (Segment-wise DC Coding) may be a tool or mode used to decode a residual signal of a depth image in a DC form. The DMM (Depth Modeling Mode) may be a tool or mode for splitting and decoding a depth image. Examples of the tools used to decode other depth images may include MPI (Motion Parameter Inheritance) and DDD (Disparity Derived Depth). In this case, the MPI (Motion Parameter Inheritance) may refer to an encoding tool or mode that uses the motion information of a color image for decoding of a depth image as it is. In this case, the DDD (Disparity Derived Depth) may refer to an encoding tool or mode that uses the motion information of a color image as a reconstruction sample value of a depth image as it is.

Encoding information of a color image of View 1 may be input as an input of the multiview decoder 63. The multiview decoder may perform decoding by using the encoding information of a depth image of View 0 as well as a color image of View 0. In this case, a tool used to perform decoding with reference to at least one of the color image of View 0 and the depth image of View 0 may be included in a 3D encoding tool as a tool used to generate a multiview image.

Examples of the 3D encoding tool may include ARP (Advanced residual prediction), IC (Illumination Compensation), VSP (View Synthesis Prediction), DBBP (Depth-Based Block Partitioning), and IVMP (Inter-view Motion Parameter Prediction). The ARP (Advanced residual prediction) may be a tool used to predict a residual signal from a multiview image. The IC (Illumination Compensation) may be a tool for compensating the luminance of a current image from the images of a neighboring view. The VSP (View Synthesis Prediction) may be a tool or mode for performing prediction encoding by using a synthesized image or a depth image as a reference image by using the color or depth image of a neighboring view. The IVMP (Inter-view Motion Parameter Prediction) may be an encoding tool of mode for copying motion information in an image of an adjacent view by using a depth image. The DBBP (Depth-Based Block Partitioning) may refer to an encoding tool for performing prediction by splitting a color image into depth images. Also, the 3D encoding tool may include an encoding tool used in an image of an enhancement layer or a depth image representing depth information.

Encoding information of a depth image of View 1 may be input as an input of the multiview depth map decoder 64. The multiview decoder may perform decoding by using a depth image of View 0 as well as a color image of View 0. Also, it may perform decoding by using a color image of View 1. An encoding tool for performing decoding by using depth images and color images of View 0 and color images of View 1 may be included in a 3D encoding tool used to generate a multiview image.

Although an example performed in the inter-layer video decoding apparatus 40 has been described above, those of ordinary skill in the art may easily understand that it may also be performed in the inter-layer video encoding apparatus 45.

FIG. 6B is a diagram illustrating the contents of using an encoding tool according to prediction unit size, prediction mode, and color depth information by the inter-layer video decoding apparatus 40, according to an embodiment.

Referring to FIG. 6B, a coding unit 65 is divided into various prediction units according to sizes 66. The inter-layer video decoding apparatus 40 may receive partition mode information from a bitstream to determine the size of a prediction unit. For example, when receiving PART 2Nx2N information as partition mode information about the coding unit 65, the inter-layer video decoding apparatus 40 may set the prediction unit to have the same size as the coding unit 65. Herein, N may represent the half of the height or width of the coding unit. The partition mode information may include information such as PART 2Nx2N, PART 2NxN, PART Nx2N, PART NxN, PART 2NxnU PART 2NxNd, PART nLx2N, and PART nRx2N. Herein, each of nU, nD, nL, and nR may represent the position of a portion corresponding to 1/4 of the coding unit.

According to an embodiment of the inventive concept, in the inter-layer video decoding apparatus 40, the size of the prediction unit split according to the prediction mode may be restricted. For example, when the prediction mode determined in the inter-layer video decoding apparatus 40 is an intra prediction mode, the partition mode information may include only PART 2Nx2N and PART NxN.

The partition mode information acquired from a bitstream may represent only the relative size with respect to the coding unit 65. Thus, the size of the coding unit should be first determined in order to determine the absolute size of the prediction unit. The inter-layer video decoding apparatus 40 may determine the size of the coding unit based on the coding unit information of the largest size and the split information representing the split degree.

For example, when the coding unit information of the largest size represents 65x65 pixels and the split information represents two-time splitting, since it correspond to the case of two-time quad-split, it may be determined that the size of the coding unit is 16x16. Also, when the partition mode information is PART N*N, it corresponds to 1/4 of the coding unit and thus the size of the prediction unit is 8*8. Thus, the size of the prediction unit may be determined based on the partition mode information and the split size of the coding unit 65 determined. However, the inventive concept is not limited thereto, and information about the size of the prediction unit may be acquired based on various types of information.

According to an embodiment of the inventive concept, when the size of the coding unit and the size of the prediction unit are equal to each other, that is, when the partition mode information of the coding unit represents PART 2N*2N, the inter-layer video decoding apparatus 40 may perform decoding the prediction unit by using a predetermined encoding tool. In this case, the predetermined encoding tool may be a 3D encoding tool. Thus, an operation load may be reduced by using the predetermined encoding tool to perform prediction decoding in the unit corresponding to the case where the coding unit is not further split. Also, according to an embodiment of the inventive concept, the inter-layer video decoding apparatus 40 may not perform decoding on the prediction unit by using a predetermined encoding tool with respect to the block having a predetermined size or less. For example, the inter-layer video decoding apparatus 40 may perform decoding by using a predetermined encoding tool only when the size of the prediction unit is greater than or equal to 8x8. Also, the inter-layer video decoding apparatus 40 may perform decoding by using a predetermined encoding tool only when the prediction unit has a size other than greater than 8x4 and 4x8. Also, the inter-layer video decoding apparatus 40 may perform decoding by using a predetermined encoding tool only in the case of other than an AMP (Asymmetric Motion Partition) form, for example, forms such as PART 2NxnU PART 2NxNd, PART nLx2N, and PART nRx2N.

Also, the inter-layer video decoding apparatus 40 may perform decoding by using a predetermined encoding tool only when the size of the prediction unit is greater than or equal to 8x8. However, the prediction unit is not limited to such sizes, and the inter-layer video decoding apparatus 40 may determine whether to use a predetermined encoding tool according to various sizes and may perform decoding on the prediction unit according to the determination. For example, MPI (Motion Parameter Inheritance), IVMP (Inter-View Motion Parameter Prediction), or DDD (Disparity Derived Depth) may be used to perform decoding only when the prediction unit has a size other than 8x4 and 4x8. For example, MPI (Motion Parameter Inheritance), IVMP (Inter-View Motion Parameter Prediction), VSP (View Synthesis Prediction), or DDD (Disparity Derived Depth) may be used to perform decoding only when the prediction unit has a size other than 8x4 and 4x8. For example, ARP (Advanced Residual Prediction) IC(Illumination Compensation), or SDC(Segment-wise DC Coding) may be used to perform decoding only when the partition mode information is PART 2N*2N.

Referring to FIG. 6B, the prediction mode of the coding unit 65 may vary. The prediction mode may generally include an inter prediction mode that is an inter-picture prediction mode and an intra prediction mode that is an intra-picture prediction mode.

In the present embodiment, the inter prediction mode may include a mode for performing prediction by using different-view images. The inter prediction mode may include Skip, Merge, and AMVP (Advanced motion vector Predictor).

The merge mode may refer to a mode for predicting the prediction unit by deriving a reference direction, a reference picture index, a disparity vector, and a motion vector prediction value by merging a current prediction unit with an adjacent data unit. The skip mode may refer to a mode for transmitting only neighboring block selection information without transmission of a residual image. The AMVP is technology for deriving only a motion vector prediction value from a neighboring block, wherein a differential motion vector, reference picture identification information, and a reference picture index are included and transmitted in a bitstream.

The information about the prediction mode may include information about the prediction mode for the coding unit 65 including the prediction unit. For example, when the prediction mode for the coding unit 65 is an intra prediction mode, the prediction mode for the prediction unit included in the coding unit 65 may also be an intra prediction mode.

According to an embodiment of the inventive concept, when the prediction mode of the prediction unit is a particular mode, the inter-layer video decoding apparatus 40 may be restricted to use a predetermined encoding tool. Alternatively, the inter-layer video decoding apparatus 40 may perform decoding on the prediction unit by using a predetermined encoding tool only when the prediction mode of the prediction unit is the merge mode. Also, when the prediction mode of the prediction unit is the skip mode, the inter-layer video decoding apparatus 40 may perform decoding on the prediction unit by using a predetermined encoding tool. For example, as one of the predetermined encoding tool, VSP (View synthesis Prediction) may be used to perform decoding in the case of the merge mode. For example, MPI (Motion Parameter Inheritance), IVMP (Inter-View Motion Parameter Prediction), DDD (Disparity Derived Depth), or VSP (View Synthesis Prediction) may be used to perform decoding in the case of the merge mode. By using the 3D encoding tool to perform decoding on the prediction mode having a relatively small operation load, the operation load in the inter-layer video decoding apparatus 40 may be reduced.

Referring to FIG. 6b, the prediction unit may include color information or depth information (hereinafter referred to as color depth information). Herein, the color information may include luminance information and chrominance information. The depth information may represent distance information of a subject and a camera of the block corresponding to the color information. The inter-layer video decoding apparatus 40 may determine the depth information or the color information of the prediction unit by acquiring the depth information or the color information about the unit including a prediction unit such as a frame unit from a bitstream.

According to an embodiment of the inventive concept, when the prediction unit includes depth information, the inter-layer video decoding apparatus 40 may perform decoding by using a predetermined encoding tool. Alternatively, when the prediction unit includes color information, the inter-layer video decoding apparatus 40 may perform decoding by using another predetermined encoding tool.

As described above, the inter-layer video decoding apparatus 40 according to an embodiment of the inventive concept may determine whether to perform decoding by using a predetermined encoding tool according to one condition among the size and the prediction mode or color depth information acquired from a bitstream. However, the inventive concept is not limited thereto, and whether to perform decoding a predetermined encoding tool may be determined according to whether a plurality of conditions are satisfied. For example, when the prediction mode of the prediction unit is the merge mode and the size of the prediction unit is equal to the size of the coding unit, the inter-layer video decoding apparatus 40 may determine whether to perform decoding by using a predetermined encoding tool. Also, for example, when the prediction unit includes depth information and the size of the prediction unit is equal to the size of the coding unit, the inter-layer video decoding apparatus 40 may determine whether to perform decoding a predetermined encoding tool. Also, for example, when the prediction mode of the prediction unit is the merge mode and the size of the prediction unit is greater than or equal to 8x8, the inter-layer video decoding apparatus 40 may determine whether to perform decoding by using a predetermined encoding tool. For example, MPI (Motion Parameter Inheritance), IVMP (Inter-View Motion Parameter Prediction), or DDD (Disparity Derived Depth) may be used to perform decoding only when the prediction mode is the merge mode and the prediction unit has a size other than 8x4 and 4x8. For example, MPI (Motion Parameter Inheritance), IVMP (Inter-View Motion Parameter Prediction), VSP (View Synthesis Prediction), or DDD (Disparity Derived Depth) may be used to perform decoding only when the prediction mode is the merge mode and the prediction unit has a size other than 8x4 and 4x8.

The inter-layer video decoding apparatus 40 according to an embodiment of the inventive concept has been mainly described above. The inter-layer video decoding apparatus 40 determines whether to use a predetermined encoding tool by acquiring the color depth information, the size information, and the prediction mode information about the prediction unit from a bitstream, while the inter-layer video encoding apparatus 45 performs encoding on the prediction unit by applying various prediction modes or sizes, determines the prediction mode or size according to the calculated rate-distortion cost, and splits the same into one or more prediction units according to the determined prediction mode or size. The inter-layer video encoding apparatus 45 is different from the inter-layer video decoding apparatus 40 only in that it determines whether to use a predetermined encoding tool based on the color depth, size, and prediction mode of the split prediction unit, and an operation of determining whether to use a predetermined encoding unit is the same as that of the inter-layer video decoding apparatus 40. Thus, redundant descriptions of the operation of an encoder will be omitted for conciseness.

FIG. 7 illustrates a block diagram of a video encoding apparatus based on coding units of a tree structure 100, according to various embodiments. The video encoding apparatus 100 of FIG. 7 may correspond to the video encoding apparatus 15 of FIG. 1B. Also, the operations performed by a largest coding unit splitter 110 and a coding unit determiner 120 of FIG. 7 may be performed by the controller 16 of FIG. 1b, and the operation performed by an output unit 130 of FIG. 7 may be performed by the bitstream generator 17 of FIG. 1B.

The video encoding apparatus involving video prediction based on coding units of the tree structure 100 includes a coding unit determiner 120 and an output unit 130. Hereinafter, for convenience of description, the video encoding apparatus involving video prediction based on coding units of the tree structure 100 is referred to as the ’video encoding apparatus 100’.

The coding unit determiner 120 may split a current picture based on a largest coding unit that is a coding unit having a maximum size for a current picture of an image. If the current picture is larger than the largest coding unit, image data of the current picture may be split into the at least one largest coding unit. The largest coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the largest coding unit, and as the depth deepens, deeper coding units according to depths may be split from the largest coding unit to a smallest coding unit. A depth of the largest coding unit may be defined as an uppermost depth and a depth of the smallest coding unit may be defined as a lowermost depth. Since a size of a coding unit corresponding to each depth decreases as the depth of the largest coding unit deepens, a coding unit corresponding to an upper depth may include a plurality of coding units corresponding to lower depths.

As described above, the image data of the current picture is split into the largest coding units according to a maximum size of the coding unit, and each of the largest coding units may include deeper coding units that are split according to depths. Since the largest coding unit according to an embodiment is split according to depths, the image data of a spatial domain included in the largest coding unit may be hierarchically classified according to depths.

A maximum depth and a maximum size of a coding unit, which limit the total number of times a height and a width of the largest coding unit are hierarchically split, may be predetermined.

The coding unit determiner 120 encodes at least one split region obtained by splitting a region of the largest coding unit according to depths, and determines a depth to output a finally encoded image data according to the at least one split region. That is, the coding unit determiner 120 determines a final depth by encoding the image data in the deeper coding units according to depths, according to the largest coding unit of the current picture, and selecting a depth having the minimum encoding error. The determined final depth and image data according to largest coding units are output to the output unit 130.

The image data in the largest coding unit is encoded based on the deeper coding units corresponding to at least one depth equal to or below the maximum depth, and results of encoding the image data based on each of the deeper coding units are compared. A depth having the minimum encoding error may be selected after comparing encoding errors of the deeper coding units. At least one final depth may be selected for each largest coding unit.

The size of the largest coding unit is split as a coding unit is hierarchically split according to depths, and as the number of coding units increases. Also, even if coding units correspond to the same depth in one largest coding unit, it is determined whether to split each of the coding units corresponding to the same depth to a lower depth by measuring an encoding error of the image data of the each coding unit, separately. Accordingly, even when image data is included in one largest coding unit, the encoding errors may differ according to regions in the one largest coding unit, and thus the final depths may differ according to regions in the image data. Thus, one or more final depths may be determined in one largest coding unit, and the image data of the largest coding unit may be divided according to coding units of at least one final depth.

Accordingly, the coding unit determiner 120 according to the embodiment may determine coding units having a tree structure included in the largest coding unit. The 'coding units having a tree structure' according to an embodiment include coding units corresponding to a depth determined to be the final depth, from among all deeper coding units included in the largest coding unit. A coding unit of a final depth may be hierarchically determined according to depths in the same region of the largest coding unit, and may be independently determined in different regions. Equally, a final depth in a current region may be independently determined from a final depth in another region.

A maximum depth according to an embodiment is an index related to the number of splitting times from a largest coding unit to a smallest coding unit. A first maximum depth according to an embodiment may denote the total number of splitting times from the largest coding unit to the smallest coding unit. A second maximum depth according to an embodiment may denote the total number of depth levels from the largest coding unit to the smallest coding unit. For example, when a depth of the largest coding unit is 0, a depth of a coding unit, in which the largest coding unit is split once, may be set to 1, and a depth of a coding unit, in which the largest coding unit is split twice, may be set to 2. Here, if the smallest coding unit is a coding unit in which the largest coding unit is split four times, depth levels of depths 0, 1, 2, 3, and 4 exist, and thus the first maximum depth may be set to 4, and the second maximum depth may be set to 5.

Prediction encoding and transformation may be performed according to the largest coding unit. The prediction encoding and the transformation are also performed based on the deeper coding units according to a depth equal to or depths less than the maximum depth, according to the largest coding unit.

Since the number of deeper coding units increases whenever the largest coding unit is split according to depths, encoding, including the prediction encoding and the transformation, has to be performed on all of the deeper coding units generated as the depth deepens. Hereinafter, for convenience of description, the prediction encoding and the transformation will be described based on a coding unit of a current depth in at least one largest coding unit.

The video encoding apparatus 100 according to the embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but may also select a data unit different from the coding unit so as to perform the prediction encoding on the image data in the coding unit.

In order to perform prediction encoding in the largest coding unit, the prediction encoding may be performed based on a coding unit of a final depth, i.e., based on the coding unit that is no longer split. A partition obtained by splitting a prediction unit may include a coding unit and a data unit obtained by splitting at least one selected from a height and a width of the coding unit. A partition may include a data unit where a coding unit is split and a data unit having the same size as the coding unit. A partition that is a base of prediction may be referred to as a 'prediction unit'.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition mode may include symmetrical partitions obtained by symmetrically splitting a height or width of the prediction unit, and may selectively include partitions obtained by asymmetrically splitting the height or width of the prediction unit, such as 1:n or n:1, partitions obtained by geometrically splitting the prediction unit, and partitions having arbitrary shapes.

A prediction mode of the prediction unit may be at least one of an intra mode, an inter mode, and a skip mode. For example, the intra mode and the inter mode may be performed on the partition of 2Nx2N, 2NxN, Nx2N, or NxN. Also, the skip mode may be performed only on the partition of 2Nx2N. The encoding may be independently performed on one prediction unit in a coding unit, thereby selecting a prediction mode having a minimum encoding error.

The video encoding apparatus 100 according to the embodiment may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the transformation unit may include a data unit for an intra mode and a transformation unit for an inter mode.

The transformation unit in the coding unit may be recursively split into smaller sized regions in the similar manner as the coding unit according to the tree structure, thus, residual data of the coding unit may be divided according to the transformation unit having the tree structure according to a transformation depth.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. That is, with respect to the transformation unit, the transformation unit having the tree structure may be set according to the transformation depths.

Split information according to depths requires not only information about a depth but also requires information related to prediction and transformation. Accordingly, the coding unit determiner 120 may determine not only a depth generating a minimum encoding error but may also determine a partition mode in which a prediction unit is split to partitions, a prediction mode according to prediction units, and a size of a transformation unit for transformation.

Coding units according to a tree structure in a largest coding unit and methods of determining a prediction unit/partition, and a transformation unit, according to embodiments, will be described in detail later with reference to FIGS. 9 through 19.

The coding unit determiner 120 may measure an encoding error of deeper coding units according to depths by using Rate-Distortion Optimization based on Lagrangian multipliers.

The output unit 130 outputs, in bitstreams, the image data of the largest coding unit, which is encoded based on the at least one depth determined by the coding unit determiner 120, and information according to depths.

The encoded image data may correspond to a result obtained by encoding residual data of an image.

The split information according to depths may include depth information, partition mode information of the prediction unit, prediction mode information, and the split information of the transformation unit.

Final depth information may be defined by using split information according to depths, which specifies whether encoding is performed on coding units of a lower depth instead of a current depth. If the current depth of the current coding unit is a depth, the current coding unit is encoded by using the coding unit of the current depth, and thus split information of the current depth may be defined not to split the current coding unit to a lower depth. On the contrary, if the current depth of the current coding unit is not the depth, the encoding has to be performed on the coding unit of the lower depth, and thus the split information of the current depth may be defined to split the current coding unit to the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one largest coding unit, and at least one piece of split information has to be determined for a coding unit of a depth, at least one piece of split information may be determined for one largest coding unit. Also, a depth of data of the largest coding unit may vary according to locations since the data is hierarchically split according to depths, and thus a depth and split information may be set for the data.

Accordingly, the output unit 130 according to the embodiment may assign encoding information about a corresponding depth and an encoding mode to at least one of the coding unit, the prediction unit, and a minimum unit included in the largest coding unit.

The minimum unit according to an embodiment is a square data unit obtained by splitting the smallest coding unit constituting the lowermost depth by 4. Alternatively, the minimum unit according to an embodiment may be a maximum square data unit that may be included in all of the coding units, prediction units, partition units, and transformation units included in the largest coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction during an inter mode, about a reference image index of the inter mode, about a motion vector, about a chroma component of an intra mode, and about an interpolation method during the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information, prediction information, and slice type information, which are related to prediction.

According to the simplest embodiment for the video encoding apparatus 100, the deeper coding unit may be a coding unit obtained by dividing a height or width of a coding unit of an upper depth, which is one layer above, by two. That is, when the size of the coding unit of the current depth is 2Nx2N, the size of the coding unit of the lower depth is NxN. Also, a current coding unit having a size of 2Nx2N may maximally include four lower-depth coding units having a size of NxN.

Accordingly, the video encoding apparatus 100 may form the coding units having the tree structure by determining coding units having an optimum shape and an optimum size for each largest coding unit, based on the size of the largest coding unit and the maximum depth determined considering characteristics of the current picture. Also, since encoding may be performed on each largest coding unit by using any one of various prediction modes and transformations, an optimal encoding mode may be determined by taking into account characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus according to the embodiment, image compression efficiency may be increased since a coding unit is adjusted while considering characteristics of an image while increasing a maximum size of a coding unit while considering a size of the image.

FIG. 8 illustrates a block diagram of a video decoding apparatus based on coding units of a tree structure 200, according to various embodiments. The video decoding apparatus 200 of FIG. 8 may correspond to the video decoding apparatus 10 of FIG. 1A. Also, the operations performed by an image data and encoding information extractor 220 and an image data decoder 230 of FIG. 8 may be performed by the controller 11 of FIG. 1A, and the operation performed by a receiver 210 of FIG. 8 may be performed by the information acquirer 12 of FIG. 1A.

The video decoding apparatus involving video prediction based on coding units of the tree structure 200 according to the embodiment includes a receiver 210, an image data and encoding information extractor 220, and an image data decoder 230. Hereinafter, for convenience of description, the video decoding apparatus involving video prediction based on coding units of the tree structure 200 according to the embodiment is referred to as the 'video decoding apparatus 200'.

Definitions of various terms, such as a coding unit, a depth, a prediction unit, a transformation unit, and various types of split information for decoding operations of the video decoding apparatus 200 according to the embodiment are identical to those described with reference to FIG. 7 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each largest coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts, from the parsed bitstream, a final depth and split information about the coding units having a tree structure according to each largest coding unit. The extracted final depth and the extracted split information are output to the image data decoder 230. That is, the image data in a bit stream is split into the largest coding unit so that the image data decoder 230 may decode the image data for each largest coding unit.

A depth and split information according to each of the largest coding units may be set for one or more pieces of depth information, and split information according to depths may include partition mode information of a corresponding coding unit, prediction mode information, and split information of a transformation unit. Also, as the depth information, the split information according to depths may be extracted.

The depth and the split information according to each of the largest coding units extracted by the image data and encoding information extractor 220 are a depth and split information determined to generate a minimum encoding error when an encoder, such as the video encoding apparatus 100, repeatedly performs encoding for each deeper coding unit according to depths according to each largest coding unit. Accordingly, the video decoding apparatus 200 may reconstruct an image by decoding data according to an encoding method that generates the minimum encoding error.

Since encoding information about the depth and the encoding mode may be assigned to a predetermined data unit from among a corresponding coding unit, a prediction unit, and a minimum unit, the image data and encoding information extractor 220 may extract the depth and the split information according to the predetermined data units. If a depth and split information of a corresponding largest coding unit are recorded according to each of the predetermined data units, predetermined data units having the same depth and the split information may be inferred to be the data units included in the same largest coding unit.

The image data decoder 230 reconstructs the current picture by decoding the image data in each largest coding unit based on the depth and the split information according to each of the largest coding units. That is, the image data decoder 230 may decode the encoded image data, based on a read partition mode, a prediction mode, and a transformation unit for each coding unit from among the coding units having the tree structure included in each largest coding unit. A decoding process may include a prediction process including intra prediction and motion compensation, and an inverse transformation process.

The image data decoder 230 may perform intra prediction or motion compensation according to a partition and a prediction mode of each coding unit, based on the information about the partition type and the prediction mode of the prediction unit of the coding unit according to depths.

In addition, for inverse transformation for each largest coding unit, the image data decoder 230 may read information about a transformation unit according to a tree structure for each coding unit so as to perform inverse transformation based on transformation units for each coding unit. Due to the inverse transformation, a pixel value of a spatial domain of the coding unit may be reconstructed.

The image data decoder 230 may determine a depth of a current largest coding unit by using split information according to depths. If the split information indicates that image data is no longer split in the current depth, the current depth is a depth. Accordingly, the image data decoder 230 may decode the image data of the current largest coding unit by using the information about the partition mode of the prediction unit, the prediction mode, and the size of the transformation unit for each coding unit corresponding to the current depth.

That is, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The image decoding apparatus 30 described above with reference to FIG. 3A may include the video decoding apparatuses 200 corresponding to the number of views, so as to reconstruct first layer images and second layer images by decoding a received first layer image stream and a received second layer image stream.

When the first layer image stream is received, the image data decoder 230 of the video decoding apparatus 200 may split samples of the first layer images, which are extracted from the first layer image stream by an extractor 220, into coding units according to a tree structure of a largest coding unit. The image data decoder 230 may perform motion compensation, based on prediction units for the inter-image prediction, on each of the coding units according to the tree structure of the samples of the first layer images, and may reconstruct the first layer images.

When the second layer image stream is received, the image data decoder 230 of the video decoding apparatus 200 may split samples of the second layer images, which are extracted from the second layer image stream by the extractor 220, into coding units according to a tree structure of a largest coding unit. The image data decoder 230 may perform motion compensation, based on prediction units for the inter-image prediction, on each of the coding units of the samples of the second layer images, and may reconstruct the second layer images.

The extractor 220 may obtain, from a bitstream, information related to a luminance error so as to compensate for a luminance difference between the first layer image and the second layer image. However, whether to perform luminance compensation may be determined according to an encoding mode of a coding unit. For example, the luminance compensation may be performed only on a prediction unit having a size of 2Nx2N.

Thus, the video decoding apparatus 200 may obtain information about at least one coding unit that generates the minimum encoding error when encoding is recursively performed for each largest coding unit, and may use the information to decode the current picture. That is, the coding units having the tree structure determined to be the optimum coding units in each largest coding unit may be decoded.

Accordingly, even if an image has high resolution or has an excessively large data amount, the image may be efficiently decoded and reconstructed by using a size of a coding unit and an encoding mode, which are adaptively determined according to characteristics of the image, by using optimal split information received from an encoding terminal.

FIG. 9 illustrates a concept of coding units, according to various embodiments.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 10 denotes the total number of splits from a largest coding unit to a smallest coding unit.

If a resolution is high or a data amount is large, it is preferable that a maximum size of a coding unit is large so as to not only increase encoding efficiency but also to accurately reflect characteristics of an image. Accordingly, the maximum size of the coding unit of the video data 310 and 320 having a higher resolution than the video data 330 may be selected to 64.

Since the maximum depth of the video data 310 is 2, coding units 315 of the video data 310 may include a largest coding unit having a long axis size of 64, and coding units having long axis sizes of 32 and 16 since depths are deepened to two layers by splitting the largest coding unit twice. On the other hand, since the maximum depth of the video data 330 is 1, coding units 335 of the video data 330 may include a largest coding unit having a long axis size of 16, and coding units having a long axis size of 8 since depths are deepened to one layer by splitting the largest coding unit once.

Since the maximum depth of the video data 320 is 3, coding units 325 of the video data 320 may include a largest coding unit having a long axis size of 64, and coding units having long axis sizes of 32, 16, and 8 since the depths are deepened to 3 layers by splitting the largest coding unit three times. As a depth deepens, an expression capability with respect to detailed information may be improved.

FIG. 10 illustrates a block diagram of an image encoder 400 based on coding units, according to various embodiments.

The image encoder 400 according to an embodiment performs operations of a picture encoder 120 of the video encoding apparatus 100 so as to encode image data. That is, an intra predictor 420 performs intra prediction on coding units in an intra mode, from among a current image 405, and an inter predictor 415 performs inter prediction on coding units in an inter mode by using the current image 405 and a reference image obtained from a reconstructed picture buffer 410 according to prediction units. The current image 405 may be split into largest coding units and then the largest coding units may be sequentially encoded. In this regard, the largest coding units that are to be split into coding units having a tree structure may be encoded.

Residue data is generated by removing prediction data regarding a coding unit of each mode which is output from the intra predictor 420 or the inter predictor 415 from data regarding an encoded coding unit of the current image 405, and the residue data is output as a quantized transformation coefficient according to transformation units through a transformer 425 and a quantizer 430. The quantized transformation coefficient is reconstructed as the residue data in a spatial domain through an inverse quantizer 445 and an inverse transformer 450. The reconstructed residual image data in the spatial domain is added to prediction data for the coding unit of each mode which is output from the intra predictor 420 or the inter predictor 415 and thus is reconstructed as data in a spatial domain for a coding unit of the current image 405. The reconstructed data in the spatial domain is generated as a reconstructed image through a deblocking unit 455 and an SAO performer 460 and the reconstructed image is stored in the reconstructed picture buffer 410. The reconstructed images stored in the reconstructed picture buffer 410 may be used as reference images for inter predicting another image. The transformation coefficient quantized by the transformer 425 and the quantizer 430 may be output as a bitstream 440 through an entropy encoder 435.

In order for the image encoder 400 to be applied in the video encoding apparatus 100, all elements of the image encoder 400, i.e., the inter predictor 415, the intra predictor 420, the transformer 425, the quantizer 430, the entropy encoder 435, the inverse quantizer 445, the inverse transformer 450, the deblocking unit 455, and the SAO performer 460, may perform operations based on each coding unit among coding units having a tree structure according to each largest coding unit.

In particular, the intra predictor 420 and the inter predictor 415 may determine a partition mode and a prediction mode of each coding unit from among the coding units having a tree structure, by taking into account the maximum size and the maximum depth of a current largest coding unit, and the transformer 425 may determine whether to split a transformation unit according to a quad tree in each coding unit from among the coding units having a tree structure.

FIG. 11 illustrates a block diagram of an image decoder 500 based on coding units, according to various embodiments.

An entropy decoder 515 parses, from a bitstream 505, encoded image data to be decoded and encoding information required for decoding. The encoded image data corresponds to a quantized transformation coefficient, and an inverse quantizer 520 and an inverse transformer 525 reconstruct residue data from the quantized transformation coefficient.

An intra predictor 540 performs intra prediction on a coding unit in an intra mode according to prediction units. An inter predictor 535 performs inter prediction by using a reference image with respect to a coding unit in an inter mode from among a current image, wherein the reference image is obtained by a reconstructed picture buffer 530 according to prediction units.

Prediction data and residue data regarding coding units of each mode, which passed through the intra predictor 540 or the inter predictor 535, are summed, so that data in a spatial domain regarding coding units of the current image 405 may be reconstructed, and the reconstructed data in the spatial domain may be output as a reconstructed image 560 through a deblocking unit 545 and an SAO performer 550. Reconstructed images stored in the reconstructed picture buffer 530 may be output as reference images.

In order for a picture decoder 230 of the video decoding apparatus 200 to decode the image data, operations after the entropy decoder 515 of the image decoder 500 according to an embodiment may be performed.

In order for the image decoder 500 to be applied in the video decoding apparatus 200 according to an embodiment, all elements of the image decoder 500, i.e., the entropy decoder 515, the inverse quantizer 520, the inverse transformer 525, the intra predictor 540, the inter predictor 535, the deblocking unit 545, and the SAO performer 550 may perform operations based on coding units having a tree structure for each largest coding unit.

In particular, the intra predictor 540 and the inter predictor 535 may determine a partition mode and a prediction mode of each coding unit from among the coding units according to a tree structure, and the inverse transformer 525 may determine whether or not to split a transformation unit according to a quad tree in each coding unit.

The encoding operation of FIG. 10 and the decoding operation of FIG. 11 are described as a video stream encoding operation and a video stream decoding operation, respectively, in a single layer. Thus, if the image encoding apparatus 40 of FIG. 4A encodes a video stream of two or more layers, the image encoder 400 may be provided for each layer. Similarly, if the decoding apparatus 30 of FIG. 3A decodes a video stream of two or more layers, the image decoder 500 may be provided for each layer.

FIG. 12 illustrates deeper coding units according to depths, and partitions, according to various embodiments.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be variously set according to user requirements. Sizes of deeper coding units according to depths may be determined according to the predetermined maximum size of the coding unit.

In a hierarchical structure of coding units 600 according to an embodiment, the maximum height and the maximum width of the coding units are each 64, and the maximum depth is 3. In this case, the maximum depth represents a total number of times the coding unit is split from the largest coding unit to the smallest coding unit. Since a depth deepens along a vertical axis of the hierarchical structure of coding units 600, a height and a width of the deeper coding unit are each split. Also, a prediction unit and partitions, which are bases for prediction encoding of each deeper coding unit, are shown along a horizontal axis of the hierarchical structure of coding units 600.

That is, a coding unit 610 is a largest coding unit in the hierarchical structure of coding units 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having the size of 8x8 and the depth of 3 is a smallest coding unit.

The prediction unit and the partitions of a coding unit are arranged along the horizontal axis according to each depth. That is, if the coding unit 610 having a size of 64x64 and a depth of 0 is a prediction unit, the prediction unit may be split into partitions included in the coding unit 610 having the size of 64x64, i.e. a partition 610 having a size of 64x64, partitions 612 having the size of 64x32, partitions 614 having the size of 32x64, or partitions 616 having the size of 32x32.

Equally, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Equally, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Equally, a prediction unit of the coding unit 640 having the size of 8x8 and the depth of 3 may be split into partitions included in the coding unit 640, i.e. a partition 640 having a size of 8x8 included in the coding unit 640, partitions 642 having a size of 8x4, partitions 644 having a size of 4x8, and partitions 646 having a size of 4x4.

In order to determine a depth of the largest coding unit 610, the coding unit determiner 120 of the video encoding apparatus 100 has to perform encoding on coding units respectively corresponding to depths included in the largest coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare results of encoding the same data according to depths, the data has to be encoded by using each of the coding unit corresponding to the depth of 1 and four coding units corresponding to the depth of 2.

In order to perform encoding according to each of the depths, a minimum encoding error that is a representative encoding error of a corresponding depth may be selected by performing encoding on each of prediction units of the coding units according to depths, along the horizontal axis of the hierarchical structure of coding units 600. Also, the minimum encoding error may be searched for by comparing representative encoding errors according to depths, by performing encoding for each depth as the depth deepens along the vertical axis of the hierarchical structure of coding units 600. A depth and a partition generating the minimum encoding error in the largest coding unit 610 may be selected as a depth and a partition mode of the largest coding unit 610.

FIG. 13 illustrates a relationship between a coding unit and transformation units, according to various embodiments.

The video encoding apparatus 100 according to an embodiment or the video decoding apparatus 200 according to an embodiment encodes or decodes an image according to coding units having sizes smaller than or equal to a largest coding unit for each largest coding unit. Sizes of transformation units for transformation during an encoding process may be selected based on data units that are not larger than a corresponding coding unit.

For example, in the video encoding apparatus 100 or the video decoding apparatus 200, when a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the minimum coding error with respect to an original image may be selected.

FIG. 14 illustrates a plurality of pieces of encoding information according to depths, according to various embodiments.

The output unit 130 of the video encoding apparatus 100 according to an embodiment may encode and transmit, as split information, partition mode information 800, prediction mode information 810, and transformation unit size information 820 for each coding unit corresponding to a depth.

The partition mode information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. In this case, the partition mode information 800 about a current coding unit is set to indicate one of the partition 802 having a size of 2Nx2N, the partition 804 having a size of 2NxN, the partition 806 having a size of Nx2N, and the partition 808 having a size of NxN.

The prediction mode information 810 indicates a prediction mode of each partition. For example, the prediction mode information 810 may indicate a mode of prediction encoding performed on a partition indicated by the partition mode information 800, i.e., an intra mode 812, an inter mode 814, or a skip mode 816.

The transformation unit size information 820 represents a transformation unit to be based on when transformation is performed on a current coding unit. For example, the transformation unit may be one of a first intra transformation unit 822, a second intra transformation unit 824, a first inter transformation unit 826, and a second inter transformation unit 828.

The image data and encoding information extractor 220 of the video decoding apparatus 200 may extract and use the partition mode information 800, the prediction mode information 810, and the transformation unit size information 820 for decoding, according to each deeper coding unit.

FIG. 15 illustrates deeper coding units according to depths, according to various embodiments.

Split information may be used to represent a change in a depth. The spilt information specifies whether a coding unit of a current depth is split into coding units of a lower depth.

A prediction unit 910 for prediction encoding a coding unit 900 having a depth of 0 and a size of 2N_0x2N_0 may include partitions of a partition mode 912 having a size of 2N_0x2N_0, a partition mode 914 having a size of 2N_0xN_0, a partition mode 916 having a size of N_0x2N_0, and a partition mode 918 having a size of N_0xN_0. Only the partition modes 912, 914, 916, and 918 which are obtained by symmetrically splitting the prediction unit are illustrated, but as described above, a partition mode is not limited thereto and may include asymmetrical partitions, partitions having a predetermined shape, and partitions having a geometrical shape.

According to each partition mode, prediction encoding has to be repeatedly performed on one partition having a size of 2N_0x2N_0, two partitions having a size of 2N_0xN_0, two partitions having a size of N_0x2N_0, and four partitions having a size of N_0xN_0. The prediction encoding in an intra mode and an inter mode may be performed on the partitions having the sizes of 2N_0x2N_0, N_0x2N_0, 2N_0xN_0, and N_0xN_0. The prediction encoding in a skip mode may be performed only on the partition having the size of 2N_0x2N_0.

If an encoding error is smallest in one of the partition modes 912, 914, and 916 having the sizes of 2N_0x2N_0, 2N_0xN_0 and N_0x2N_0, the prediction unit 910 may not be split into a lower depth.

If the encoding error is the smallest in the partition mode 918 having the size of N_0xN_0, a depth is changed from 0 to 1 and split is performed (operation 920), and encoding may be repeatedly performed on coding units 930 of a partition mode having a depth of 2 and a size of N_0xN_0 so as to search for a minimum encoding error.

A prediction unit 940 for prediction encoding the coding unit 930 having a depth of 1 and a size of 2N_1 x2N_1 (=N_0xN_0) may include a partition mode 942 having a size of 2N_1x2N_1, a partition mode 944 having a size of 2N_1 xN_1, a partition mode 946 having a size of N_1x2N_1, and a partition mode 948 having a size of N_1xN_1.

If an encoding error is the smallest in the partition mode 948 having the size of N_1 xN_1, a depth is changed from 1 to 2 and split is performed (in operation 950), and encoding is repeatedly performed on coding units 960 having a depth of 2 and a size of N_2xN_2 so as to search for a minimum encoding error.

When a maximum depth is d, deeper coding units according to depths may be set until when a depth corresponds to d-1, and split information may be set until when a depth corresponds to d-2. That is, when encoding is performed up to when the depth is d-1 after a coding unit corresponding to a depth of d-2 is split (in operation 970), a prediction unit 990 for prediction encoding a coding unit 980 having a depth of d-1 and a size of 2N_(d-1)x2N_(d-1) may include partitions of a partition mode 992 having a size of 2N_(d-1)x2N_(d-1), a partition mode 994 having a size of 2N_(d-1)xN_(d-1), a partition mode 996 having a size of N_(d-1)x2N_(d-1), and a partition mode 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition modes so as to search for a partition mode generating a minimum encoding error.

Even when the partition type 998 having the size of N_(d-1)xN_(d-1) has the minimum encoding error, since a maximum depth is d, a coding unit CU_(d-1) having a depth of d-1 is no longer split into a lower depth, and a depth for the coding units constituting a current largest coding unit 900 is determined to be d-1 and a partition mode of the current largest coding unit 900 may be determined to be N_(d-1)xN_(d-1). Also, since the maximum depth is d, split information for a coding unit 952 having a depth of d-1 is not set.

A data unit 999 may be a 'minimum unit' for the current largest coding unit. A minimum unit according to the embodiment may be a square data unit obtained by splitting a smallest coding unit having a lowermost depth by 4. By performing the encoding repeatedly, the video encoding apparatus 100 according to the embodiment may select a depth having the minimum encoding error by comparing encoding errors according to depths of the coding unit 900 to determine a depth, and set a corresponding partition type and a prediction mode as an encoding mode of the depth.

As such, the minimum encoding errors according to depths are compared in all of the depths of 0, 1, ..., d-1, d, and a depth having the minimum encoding error may be determined as a depth. The depth, the partition mode of the prediction unit, and the prediction mode may be encoded and transmitted as split information. Also, since a coding unit has to be split from a depth of 0 to a depth, only split information of the depth is set to '0', and split information of depths excluding the depth has to be set to '1'.

The image data and encoding information extractor 220 of the video decoding apparatus 200 according to the embodiment may extract and use a depth and prediction unit information about the coding unit 900 so as to decode the coding unit 912. The video decoding apparatus 200 according to the embodiment may determine a depth, in which split information is '0', as a depth by using split information according to depths, and may use, for decoding, split information about the corresponding depth.

FIGS. 16, 17, and 18 illustrate a relationship between coding units, prediction units, and transformation units, according to various embodiments.

Coding units 1010 are deeper coding units according to depths determined by the video encoding apparatus 100, in a largest coding unit. Prediction units 1060 are partitions of prediction units of each of the coding units 1010 according to depths, and transformation units 1070 are transformation units of each of the coding units according to depths.

When a depth of a largest coding unit is 0 in the deeper coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

Some partitions 1014, 1016, 1022, 1032, 1048, 1050, 1052, and 1054 from among the prediction units 1060 are obtained by splitting the coding unit. That is, partitions 1014, 1022, 1050, and 1054 are a partition mode having a size of 2NxN, partitions 1016, 1048, and 1052 are a partition mode having a size of Nx2N, and a partition 1032 is a partition mode having a size of NxN. Prediction units and partitions of the deeper coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, 1052, and 1054 in the transformation units 1760 are data units different from those in the prediction units 1060 in terms of sizes and shapes. That is, the video encoding apparatus 100 and the video decoding apparatus 200 according to the embodiments may perform intra prediction / motion estimation / motion compensation / and transformation/inverse transformation on an individual data unit in the same coding unit.

Accordingly, encoding is recursively performed on each of coding units having a hierarchical structure in each region of a largest coding unit so as to determine an optimum coding unit, and thus coding units according to a recursive tree structure may be obtained. Encoding information may include split information about a coding unit, partition mode information, prediction mode information, and transformation unit size information. Table 1 below shows the encoding information that may be set by the video encoding apparatus 100 and the video decoding apparatus 200 according to the embodiments.

Table 1

<table>
<tr><td colspan="5">Split Information 0<br>(Encoding on Coding Unit having Size of 2Nx2N and Current Depth of d)</td><td>Split Information 1</td></tr>
<tr><td>Prediction Mode</td><td colspan="2">Partition Mode</td><td colspan="2">Size of Transformation Unit</td><td rowspan="3">Repeatedly Encode Coding Units having Lower Depth of d+1</td></tr>
<tr><td rowspan="2">Intra<br>Inter<br>Skip (Only 2Nx2N)</td><td>Symmetrical Partition Mode</td><td>Asymmetrical Partition Mode</td><td>Split Information 0 of Transformation Unit</td><td>Split Information 1 of Transformation Unit</td></tr>
<tr><td>2Nx2N<br>2NxN<br>Nx2N<br>NxN</td><td>2NxnU<br>2NxnD<br>nLx2N<br>nRx2N</td><td>2Nx2N</td><td>NxN (Symmetrical Partition Mode)<br>N/2xN/2 (Asymmetrical Partition Mode)</td></tr>
</table>

The output unit 130 of the video encoding apparatus 100 according to the embodiment may output the encoding information about the coding units having a tree structure, and the image data and encoding information extractor 220 of the video decoding apparatus 200 according to the embodiment may extract the encoding information about the coding units having a tree structure from a received bitstream.

Split information specifies whether a current coding unit is split into coding units of a lower depth. If split information of a current depth d is 0, a depth, in which a current coding unit is no longer split into a lower depth, is a depth, and thus partition mode information, prediction mode information, and transformation unit size information may be defined for the depth. If the current coding unit has to be further split according to the split information, encoding has to be independently performed on each of four split coding units of a lower depth.

A prediction mode may be one of an intra mode, an inter mode, and a skip mode. The intra mode and the inter mode may be defined in all partition modes, and the skip mode is defined only in a partition mode having a size of 2Nx2N.

The partition mode information may indicate symmetrical partition modes having sizes of 2Nx2N, 2NxN, Nx2N, and NxN, which are obtained by symmetrically splitting a height or a width of a prediction unit, and asymmetrical partition modes having sizes of 2NxnU, 2NxnD, nLx2N, and nRx2N, which are obtained by asymmetrically splitting the height or width of the prediction unit. The asymmetrical partition modes having the sizes of 2NxnU and 2NxnD may be respectively obtained by splitting the height of the prediction unit in 1:3 and 3:1, and the asymmetrical partition modes having the sizes of nLx2N and nRx2N may be respectively obtained by splitting the width of the prediction unit in 1:3 and 3:1.

The size of the transformation unit may be set to be two types in the intra mode and two types in the inter mode. That is, if split information of the transformation unit is 0, the size of the transformation unit may be 2Nx2N, which is the size of the current coding unit. If split information of the transformation unit is 1, the transformation units may be obtained by splitting the current coding unit. Also, if a partition mode of the current coding unit having the size of 2Nx2N is a symmetrical partition mode, a size of a transformation unit may be NxN, and if the partition mode of the current coding unit is an asymmetrical partition mode, the size of the transformation unit may be N/2xN/2.

The encoding information about coding units having a tree structure according to the embodiment may be assigned to at least one of a coding unit corresponding to a depth, a prediction unit, and a minimum unit. The coding unit corresponding to the depth may include at least one of a prediction unit and a minimum unit containing the same encoding information.

Accordingly, it is determined whether adjacent data units are included in the same coding unit corresponding to the depth by comparing encoding information of the adjacent data units. Also, a corresponding coding unit corresponding to a depth is determined by using encoding information of a data unit, and thus a distribution of depths in a largest coding unit may be inferred.

Accordingly, if a current coding unit is predicted based on encoding information of adjacent data units, encoding information of data units in deeper coding units adjacent to the current coding unit may be directly referred to and used.

In another embodiment, if a current coding unit is predicted based on encoding information of adjacent data units, data units adjacent to the current coding unit may be searched by using encoded information of the data units, and the searched adjacent coding units may be referred for predicting the current coding unit.

FIG. 19 illustrates a relationship between a coding unit, a prediction unit, and a transformation unit, according to encoding mode information of Table 1.

A largest coding unit 1300 includes coding units 1302, 1304, 1306, 1312, 1314, 1316, and 1318 of depths. Here, since the coding unit 1318 is a coding unit of a depth, split information may be set to 0. Partition mode information of the coding unit 1318 having a size of 2Nx2N may be set to be one of partition modes including 2Nx2N 1322, 2NxN 1324, Nx2N 1326, NxN 1328, 2NxnU 1332, 2NxnD 1334, nLx2N 1336, and nRx2N 1338.

Transformation unit split information (TU size flag) is a type of a transformation index, and a size of a transformation unit corresponding to the transformation index may be changed according to a prediction unit type or partition mode of the coding unit.

For example, when the partition mode information is set to be one of symmetrical partition modes 2Nx2N 1322, 2NxN 1324, Nx2N 1326, and NxN 1328, if the transformation unit split information is 0, a transformation unit 1342 having a size of 2Nx2N is set, and if the transformation unit split information is 1, a transformation unit 1344 having a size of NxN may be set.

When the partition mode information is set to be one of asymmetrical partition modes 2NxnU 1332, 2NxnD 1334, nLx2N 1336, and nRx2N 1338, if the transformation unit split information (TU size flag) is 0, a transformation unit 1352 having a size of 2Nx2N may be set, and if the transformation unit split information is 1, a transformation unit 1354 having a size of N/2xN/2 may be set.

The transformation unit split information (TU size flag) described above with reference to FIG. 19 is a flag having a value of 0 or 1, but the transformation unit split information according to an embodiment is not limited to a flag having 1 bit, and the transformation unit may be hierarchically split while the transformation unit split information increases in a manner of 0, 1, 2, 3.. etc., according to setting. The transformation unit split information may be used as an example of the transformation index.

In this case, the size of a transformation unit that has been actually used may be expressed by using the transformation unit split information according to the embodiment, together with a maximum size of the transformation unit and a minimum size of the transformation unit. The video encoding apparatus 100 according to the embodiment may encode maximum transformation unit size information, minimum transformation unit size information, and maximum transformation unit split information. The result of encoding the maximum transformation unit size information, the minimum transformation unit size information, and the maximum transformation unit split information may be inserted into an SPS. The video decoding apparatus 200 according to the embodiment may decode video by using the maximum transformation unit size information, the minimum transformation unit size information, and the maximum transformation unit split information.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be smaller than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit may be defined by Equation (1):

$$\text{CurrMinTuSize} = \max(\text{MinTransformSize}, \text{RootTuSize}/(2^*\text{MaxTransformSizeIndex})) \ldots \quad (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. That is, in Equation (1), 'RootTuSize/(2^MaxTransformSizeIndex)' denotes a transformation unit size when the transformation unit size 'RootTuSize', when the TU size flag is 0, is split by the number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \text{ ......... } (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \text{ ...........} (3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an embodiment, and a factor for determining the current maximum transformation unit size is not limited thereto.

According to the video encoding method based on coding units of a tree structure described above with reference to FIGS. 7 through 19, image data of a spatial domain is encoded in each of the coding units of the tree structure, and the image data of the spatial domain is reconstructed in a manner that decoding is performed on each largest coding unit according to the video decoding method based on the coding units of the tree structure, so that a video that is formed of pictures and picture sequences may be reconstructed. The reconstructed video may be reproduced by a reproducing apparatus, may be stored in a storage medium, or may be transmitted via a network.

The one or more embodiments may be written as computer programs and may be implemented in general-use digital computers that execute the programs by using a non-transitory computer-readable recording medium. Examples of the non-transitory computer-readable recording medium include magnetic storage media (e.g., ROM, floppy disks, hard disks, etc.), optical recording media (e.g., CD-ROMs, or DVDs), etc.

For convenience of description, the image encoding methods and/or the video encoding method, which are described with reference to FIGS. 1A through 19, will be collectively referred to as 'the video encoding method'. Also, the image decoding methods and/or the video decoding method, which are described with reference to FIGS. 1A through 19, will be collectively referred to as 'the video decoding method'.

Also, a video encoding apparatus including the image encoding apparatus 40, the video encoding apparatus 100, or the image encoder 400 which are described with reference to FIGS. 1A through 19 will be collectively referred to as a 'video encoding apparatus'. Also, a video decoding apparatus including the image decoding apparatus 30, the video decoding apparatus 200, or the image decoder 500 which are described with reference to FIGS. 1A through 19 will be collectively referred to as a 'video decoding apparatus'.

The non-transitory computer-readable recording medium such as a disc 26000 that stores the programs according to an embodiment will now be described in detail.

FIG. 20 illustrates a physical structure of the disc 26000 in which a program is stored, according to various embodiments. The disc 26000, as a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantized parameter determining method, the video encoding method, and the video decoding method described above may be assigned and stored.

A computer system embodied using a storage medium that stores a program for executing the video encoding method and the video decoding method as described above will now be described with reference to FIG. 22.

FIG. 21 illustrates a disc drive 26800 for recording and reading a program by using the disc 26000. A computer system 26700 may store a program that executes at least one of the video encoding method and the video decoding method according to an embodiment, in the disc 26000 via the disc drive 26800. In order to run the program stored in the disc 26000 in the computer system 26700, the program may be read from the disc 26000 and may be transmitted to the computer system 26700 by using the disc drive 26800.

The program that executes at least one of the video encoding method and the video decoding method according to an embodiment may be stored not only in the disc 26000 illustrated in FIGS. 20 and 21 but may also be stored in a memory card, a ROM cassette, or a solid state drive (SSD).

A system to which the video encoding method and the video decoding method according to the embodiments described above are applied will be described below.

FIG. 22 illustrates an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 22, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded by the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a non-transitory computer-readable recording medium, e.g., a CD-ROM disc, a floppy disc, a hard disc drive, an SSD, or a memory card, which may be accessed by the computer 12100.

If video data is captured by a camera built in the mobile phone 12500, the video data may be received from the mobile phone 12500.

The video data may be encoded by a large scale integrated circuit (LSI) system installed in the video camera 12300, the mobile phone 12500, or the camera 12600.

In the content supply system 11000 according to an embodiment, content data, e.g., content recorded during a concert, which has been recorded by a user using the video camera 12300, the camera 12600, the mobile phone 12500, or another imaging device is encoded and is transmitted to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

The video encoding apparatus and the video decoding apparatus of the present disclosure may be applied to encoding and decoding operations of the plurality of independent devices included in the content supply system 11000.

With reference to FIGS. 23 and 24, the mobile phone 12500 included in the content supply system 11000 according to an embodiment will now be described in detail.

FIG. 23 illustrates an external structure of the mobile phone 12500 to which a video encoding method and a video decoding method are applied, according to various embodiments. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of a sound output unit, and a microphone 12550 for inputting voice and sound or another type of a sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 24 illustrates an internal structure of the mobile phone 12500. In order to systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off state to a 'power on' state, the power supply circuit 12700 supplies power to all the parts of the mobile phone 12500 from a battery pack, thereby setting the mobile phone 12500 to an operation mode.

The central controller 12710 includes a CPU, a read-only memory (ROM), and a random access memory (RAM).

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 by control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is converted to a digital sound signal by the sound processor 12650, under control of the central controller 12710. The generated digital sound signal may be converted to a transmission signal through the modulation/demodulation unit 12660 and the communication circuit 12610, and may be transmitted via the antenna 12510.

When a text message, e.g., email, is transmitted during a data communication mode, text data of the text message is input via the operation panel 12540 and is transmitted to the central controller 12710 via the operation input controller 12640. By the control of the central controller 12710, the text data is transformed to a transmission signal via the modulation/demodulation unit 12660 and the communication circuit 12610 and is transmitted to the wireless base station 12000 via the antenna 12510.

In order to transmit image data during the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the video encoding apparatus 100 according to an embodiment. The image encoder 12720 may transform the image data received from the camera 12530 into compressed and encoded image data according to the aforementioned video encoding method, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and analog-to-digital conversion (ADC) are performed on a signal received via the antenna 12510 to transform the signal into a digital signal. The modulation/demodulation unit 12660 modulates a frequency band of the digital signal. The frequency-band modulated digital signal is transmitted to the image decoder 12690, the sound processor 12650, or the LCD controller 12620, according to the type of the digital signal.

During the conversation mode, the mobile phone 12500 amplifies a signal received via the antenna 12510, and obtains a digital sound signal by performing frequency conversion and ADC on the amplified signal. A received digital sound signal is converted to an analog sound signal via the modulation/demodulation unit 12660 and the sound processor 12650, and the analog sound signal is output via the speaker 12580 by the control of the central controller 12710.

When, during the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

In order to decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the image decoder 12690 and the sound processor 12650, respectively.

A structure of the image decoder 12690 may correspond to that of the video decoding apparatus described above. The image decoder 12690 may decode the encoded video data to obtain reconstructed video data and provide the reconstructed video data to the display screen 12520 via the LCD controller 12620, by using the aforementioned video decoding method.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment, may be a transmitting terminal including only the video encoding apparatus according to an embodiment, or may be a receiving terminal including only the video decoding apparatus according to an embodiment.

A communication system according to an embodiment is not limited to the communication system described above with reference to FIG. 24. For example, FIG. 25 illustrates a digital broadcasting system employing a communication system, according to various embodiments. The digital broadcasting system of FIG. 25 may receive a digital broadcast transmitted via a satellite or a terrestrial network by using the video encoding apparatus and the video decoding apparatus according to the embodiments.

In more detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus according to an embodiment is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus according to an embodiment may be installed. Data output from the set-top box 12870 may also be reproduced on a TV monitor 12880.

As another example, the video decoding apparatus according to an embodiment may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by the video encoding apparatus according to an embodiment and may then be recorded to and stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus according to an embodiment, a video signal recorded on the DVD disc 12960, the SD card 12970, or another storage medium may be reproduced on the TV monitor 12880.

The automobile navigation system 12930 may not include the camera 12530, the camera interface 12630, and the image encoder 12720 of FIG. 26. For example, the computer 12100 and the TV receiver 12810 may not include the camera 12530, the camera interface 12630, and the image encoder 12720 of FIG. 26.

FIG. 26 illustrates a network structure of a cloud computing system using a video encoding apparatus and a video decoding apparatus, according to various embodiments.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security software, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request for reproducing the video service is received from the smart phone 14500, the cloud computing server 14000 searches for and reproduces the video service, based on the user DB 14100. When the smart phone 14500 receives a video data stream from the cloud computing server 14000, a process of reproducing video by decoding the video data stream is similar to an operation of the mobile phone 12500 described above with reference to FIG.24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

Here, the user terminal may include the video decoding apparatus according to an embodiment as described above with reference to FIGS. 1A through 19. As another example, the user terminal may include the video encoding apparatus according to an embodiment as described above with reference to FIGS. 1A through 19. Alternatively, the user terminal may include both the video encoding apparatus and the video decoding apparatus according to an embodiment as described above with reference to FIGS. 1A through 19.

Various applications of the image encoding method, the image decoding method, the image encoding apparatus, and the image decoding apparatus described above with reference to FIGS. 1A through 19 are described above with reference to FIGS. 20 through 26. However, various embodiments of methods of storing the video encoding method and the video decoding method in a storage medium or various embodiments of methods of implementing the video encoding apparatus and the video decoding apparatus in a device described above with reference to FIGS. 1A through 19 are not limited to the embodiments of FIGS. 20 through 26.

While the present disclosure has been particularly shown and described with reference to embodiments thereof, it will be understood by one of ordinary skill in the art that various changes in form and details may be made therein without departing from the spirit and scope of the following claims. Therefore, the scope of the present disclosure is defined not by the detailed description of the present disclosure but by the appended claims, and all differences within the scope will be construed as being included in the present disclosure.

## Claims

1. A method of decoding a video including a multilayer, the method comprising:

setting, when a reference picture for inter-layer prediction is included in a reference picture list, first information to indicate that the reference picture is included in the reference picture list; and
performing residual prediction based on the first information and whether a disparity vector is to be derived from a neighboring block of a current coding unit.

**2.** The method of claim 1, further comprising setting, based on the first information, second information to indicate that the reference picture is available in a residual prediction process.

**3.** The method of claim 2, further comprising acquiring, based on the first information, third information from a bitstream, the third information indicating whether to perform residual prediction in a current coding unit.

**4.** The method of claim 3, wherein the acquiring of the third information from the bitstream comprises acquiring the third information from the bitstream when the second information indicates that the reference picture is available in residual prediction and not acquiring the third information from the bitstream when the second information does not indicate that the reference picture is available in the residual prediction.

**5.** The method of claim 3, further comprising determining not to perform residual prediction when the third information represents 0 and performing the residual prediction by using a weight determined based on the third information when the third information represents a value greater than 0.

**6.** The method of claim 1, wherein the performing of the residual prediction comprises setting a disparity vector of the current coding unit by using a default disparity vector when the first information indicates that the reference picture is included in the reference picture list and a disparity vector is not to be derived from a neighboring block of the current coding unit.

**7.** The method of claim 6, wherein
the default disparity vector represents a value indicating a layer including a current picture among the multilayer, and the setting of the first information comprises setting the first information to a non-zero value.

**8.** The method of claim 1, further comprising:

acquiring, when the first information represents a value greater than 0, fourth information from a bitstream, the fourth information indicating whether to perform depth image-based block partitioning; and
performing inter-sample prediction based on the fourth information.

**9.** The method of claim 1, wherein the setting of the first information comprises setting the first information to a non-zero value when there is no difference between picture order information Picture Order Count of a current picture and picture order information of a reference picture referenced by the current picture.

**10.** An apparatus for decoding a video including a multilayer, the apparatus comprising a controller configured to determine whether a reference picture for inter-layer prediction is included in a reference picture list; set, when the reference picture is included in the reference picture list, first information to indicate that the reference picture is included in the reference picture list; and perform residual prediction based on the first information and whether a disparity vector is to be derived from a neighboring block of a current coding unit.

**11.** The apparatus of claim 10, wherein the controller sets, based on the first information, second information to indicate that the reference picture is available in a residual prediction process.

**12.** The apparatus of claim 11, further comprising an information acquirer acquiring, based on the first information, third information from a bitstream, the third information indicating whether to perform residual prediction in a current coding unit.

**13.** The apparatus of claim 12, wherein the controller determines not to perform residual prediction when the third information represents 0 and performs residual prediction by using a weight determined based on the third information when the third information represents a value greater than 0.

**14.** The apparatus of claim 12, wherein
the information acquirer acquires, when the first information represents a value greater than 0, fourth information from a bitstream, the fourth information indicating whether to perform depth image-based block partitioning, and the controller performs inter-sample prediction based on the fourth information.

**15.** The apparatus of claim 10, wherein the controller sets a disparity vector of the current coding unit by using a default disparity vector when the first information indicates that the reference picture is included in the reference picture list and a disparity vector is not to be derived from a neighboring block of the current coding unit.

FIG. 1A

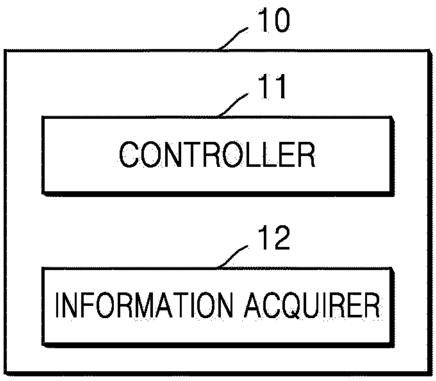
10
11
CONTROLLER
12
INFORMATION ACQUIRER

FIG. 1B

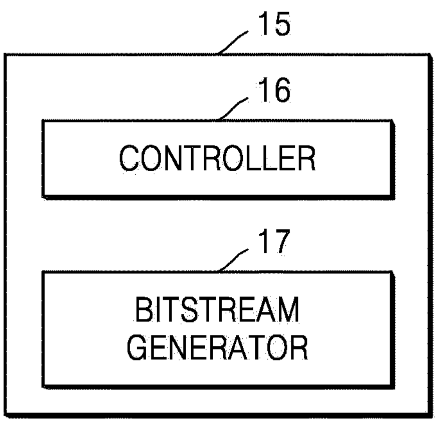
15
16
CONTROLLER
17
BITSTREAM
GENERATOR

FIG. 2

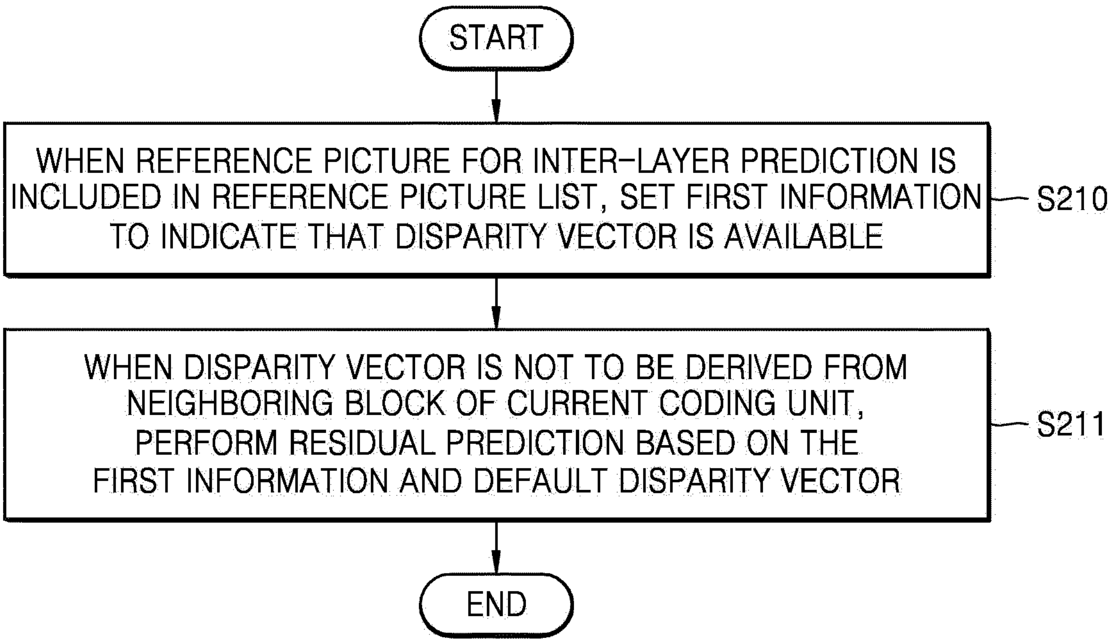
START
WHEN REFERENCE PICTURE FOR INTER-LAYER PREDICTION IS INCLUDED IN REFERENCE PICTURE LIST, SET FIRST INFORMATION TO INDICATE THAT DISPARITY VECTOR IS AVAILABLE
S210
WHEN DISPARITY VECTOR IS NOT TO BE DERIVED FROM NEIGHBORING BLOCK OF CURRENT CODING UNIT, PERFORM RESIDUAL PREDICTION BASED ON THE FIRST INFORMATION AND DEFAULT DISPARITY VECTOR
S211
END

FIG. 3A

**···Derivation process for the default reference view order index for disparity derivation**

The following applies for candViewIdx in the range of 0 to ( ViewIdx − 1 ), inclusive:

- The following applies for X in the range of 0 to ( slice_type == B ) ? 1 : 0, inclusive:
  - The following applies for i in the range of 0 to num_ref_idx_lX_active_minus1, inclusive:
    - When all of the following conditions are true, DefaultRefViewIdx (30a) is set equal to candViewIdx and DispAvailFlag (30b) is set equal to 1.
      - DispAvailFlag is equal to 0. —31a
      - ViewIdx( RefPicListX[ i ] ) is equal to candViewIdx. —31b
      - DiffPicOrderCnt( CurrPic, RefPicListX[ i ] ) is equal to 0. —31c

When DepthFlag is equal to 1, DisparityDerivationFlag is equal to 1, and DispAvailFlag is equal to 1, it is a requirement of bitstream conformance that CpPresentFlag[ ViewIdx ][ DefaultRefViewIdx ] shall be equal to 1.

FIG. 3B

**··· Derivation process for the target reference index for residual prediction**

The variable RpRefPicAvailFlag is derived as follows:

33a 30b

32 RpRefPicAvailFlag = ( RpRefPicAvailFlagL0 | | RpRefPicAvailFlagL1 ) && DispAvailFlag (I−61)

When RpRefPicAvailFlag is equal to 1 and RefRpRefAvailFlagL0[ ViewOIdxList[ i ] ] is equal to 1 for any i in the range of 0 to NumViews − 1, inclusive, it is a requirement of bitstream conformance that PicOrderCnt( RefPicList0[ RpRefIdxL0 ] ) shall be the same for all slices of a coded picture.

...

FIG. 3C

**··· Derivation process for a disparity vector for texture layers**

Inputs to this process are:

...

For i in the range of 0 to 1, inclusive, the following applies:

- The variable N is set equal to ( i == 0 ) ? A1 : B1.
- When dvAvailFlag is equal to 0 and tPredNbDvAvailFlagN is equal to 1, the following applies:

dispVec = tPredNbDispVecN (I-286)

refViewIdx = tPredNbRefViewIdxN (I-287)

dvAvailFlag = 1 (I-288)

34a

When dvAvailFlag is equal to 0, refViewIdx is set equal to DefaultRefViewIdx and dispVec is set equal to ( 0, 0 ). 34b

...

For use in derivation processes of variables invoked later in the decoding process, the following assignments are made for x = xCb..( xCb + nCbS − 1 ), y = yCb..( yCb + nCbS − 1 ):

DispVec[ x ][ y ] = dispVec 35 (I-289)

DispRefVec[ x ][ y ] = dispRefVec (I-290)

RefViewIdx[ x ][ y ] = refViewIdx (I-291)

FIG. 3D

| cu_extension( x0, y0, log2CbSize ) { | Descriptor |
| --- | --- |
| ... | |
| | ae(v) |
| else { | |
| if( !cu_skip_flag[ x0 ][ y0 ] ) { 30b | |
| 36 if( DbbpEnabledFlag && DispAvailFlag && log2CbSize > 3 && ( PartMode = = PART_2NxN \| \| PartMode = = PART_Nx2N ) ) | |
| dbbp_flag[ x0 ][ y0 ] 37 | ae(v) |
| ... | ae(v) |
| } | |
| if( CuPredMode[ x0 ][ y0 ] != MODE_INTRA && PartMode = = PART_2Nx2N ) { | |
| 38 if( IvResPredEnabledFlag && RpRefPicAvailFlag ) 32 | |
| iv_res_pred_weight_idx[ x0 ][ y0 ] 39a | ae(v) |
| if( slice_ic_enabled_flag && icCuEnableFlag && iv_res_pred_weight_idx[ x0 ][ y0 ] = = 0 ) | |
| **illu_comp_flag** [ x0 ][ y0 ] | ae(v) |
| } | |
| } | |
| } | |

39b

**iv_res_pred_weight_idx**[ x0 ][ y0 ] not equal to 0 specifies that the bilinear sample interpolation and residual prediction process is used for the current coding unit and the index of the weighting factor used in the bilinear sample interpolation and residual prediction process. iv_res_pred_weight_idx[ x0 ][ y0 ] equal to 0 specifies that the bilinear sample interpolation and residual prediction process is not used for the current coding unit. When not present, the value of iv_res_pred_weight_idx[ x0 ][ y0 ] is inferred to be equal to 0.

FIG. 4A

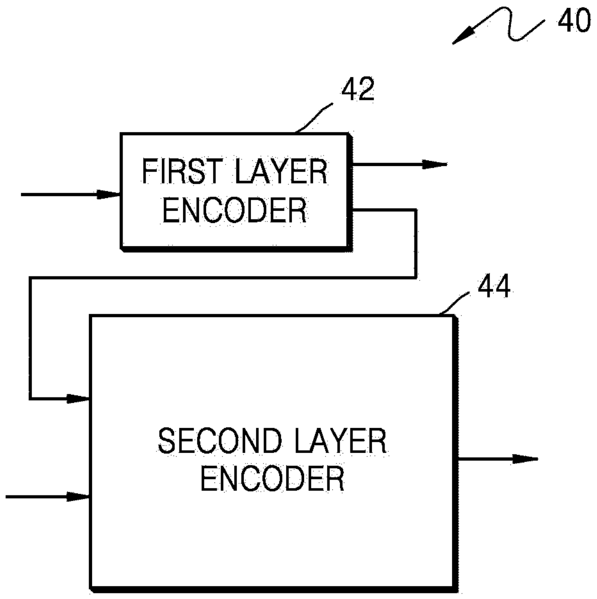
40
42
FIRST LAYER ENCODER
44
SECOND LAYER ENCODER

FIG. 4B

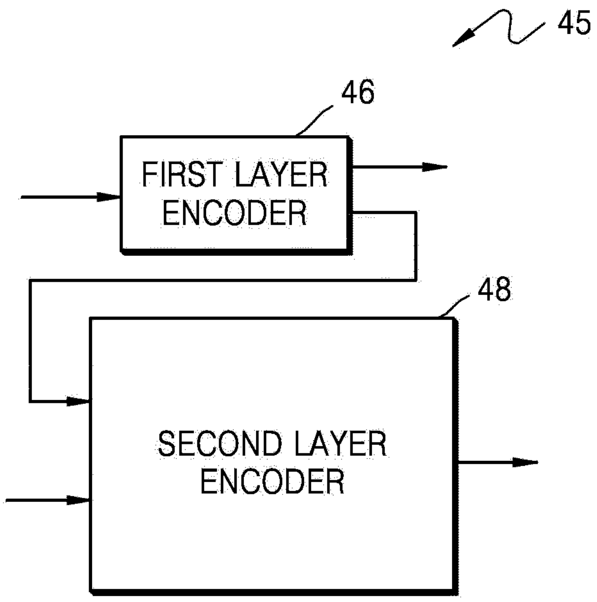
45
46
FIRST LAYER ENCODER
48
SECOND LAYER ENCODER

FIG. 5A

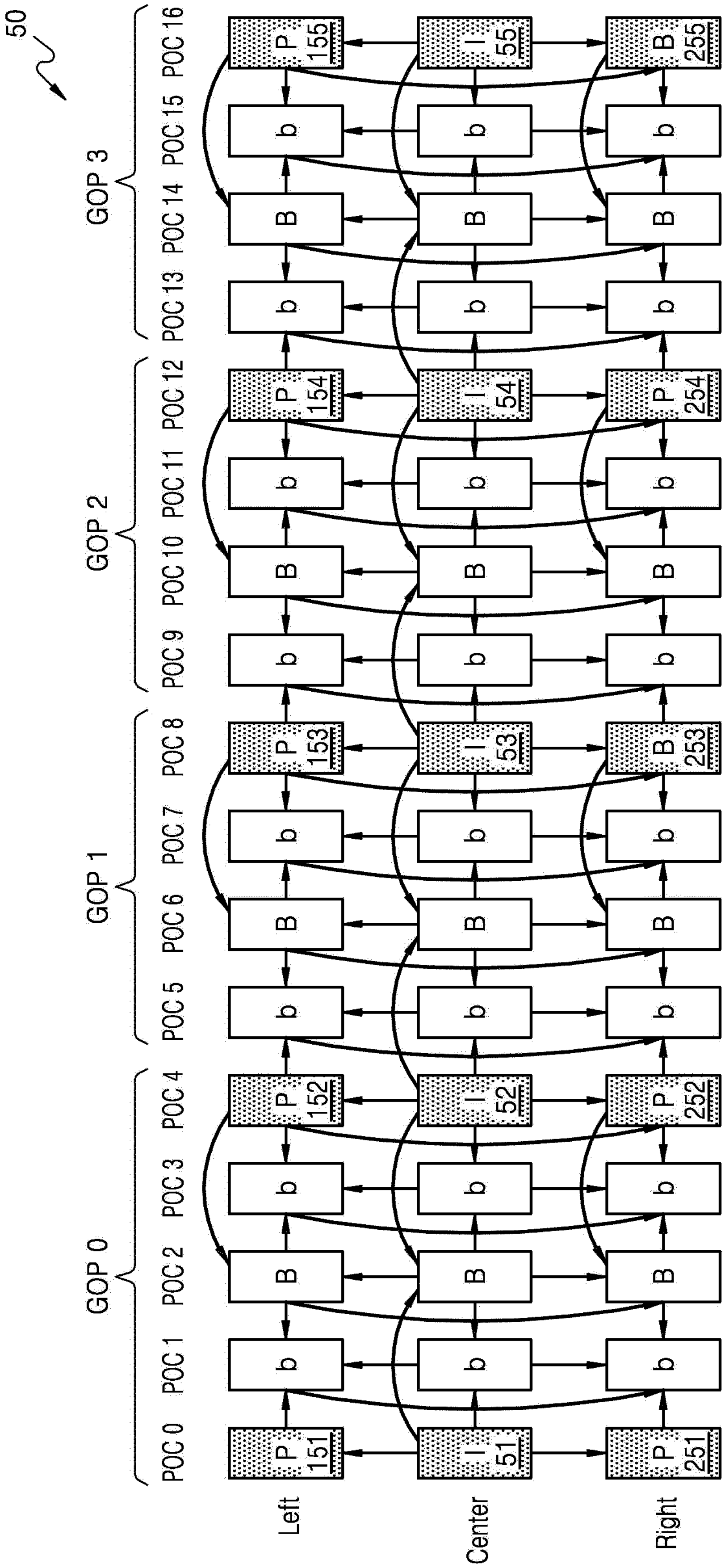
50
GOP 0
GOP 1
GOP 2
GOP 3
POC 0
POC 1
POC 2
POC 3
POC 4
POC 5
POC 6
POC 7
POC 8
POC 9
POC 10
POC 11
POC 12
POC 13
POC 14
POC 15
POC 16
Left
Center
Right
P 151
I 51
P 251
P 152
I 52
P 252
P 153
I 53
B 253
P 154
I 54
P 254
P 155
I 55
B 255

FIG. 5B

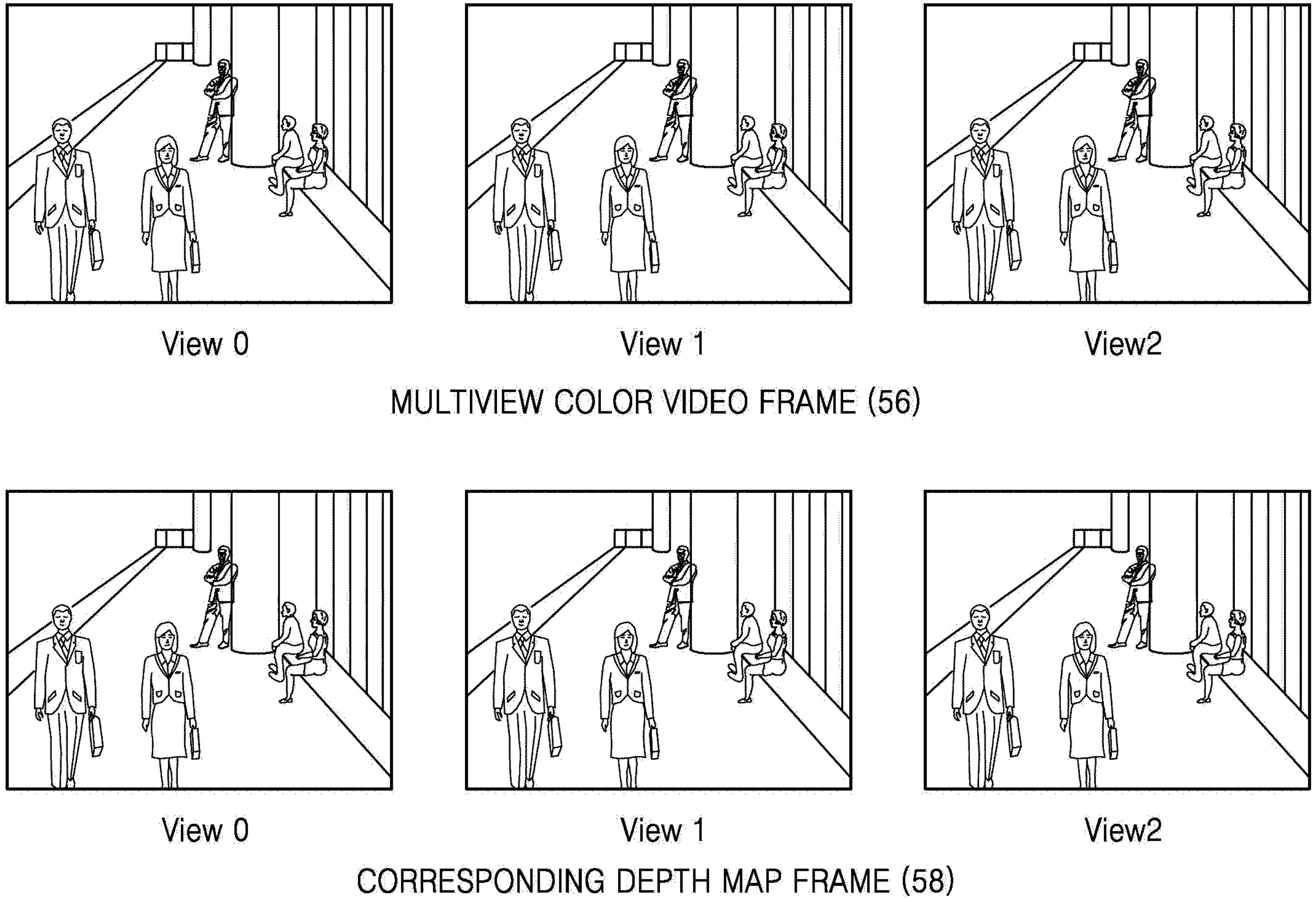
View 0
View 1
View2
MULTIVIEW COLOR VIDEO FRAME (56)
View 0
View 1
View2
CORRESPONDING DEPTH MAP FRAME (58)

FIG. 6A

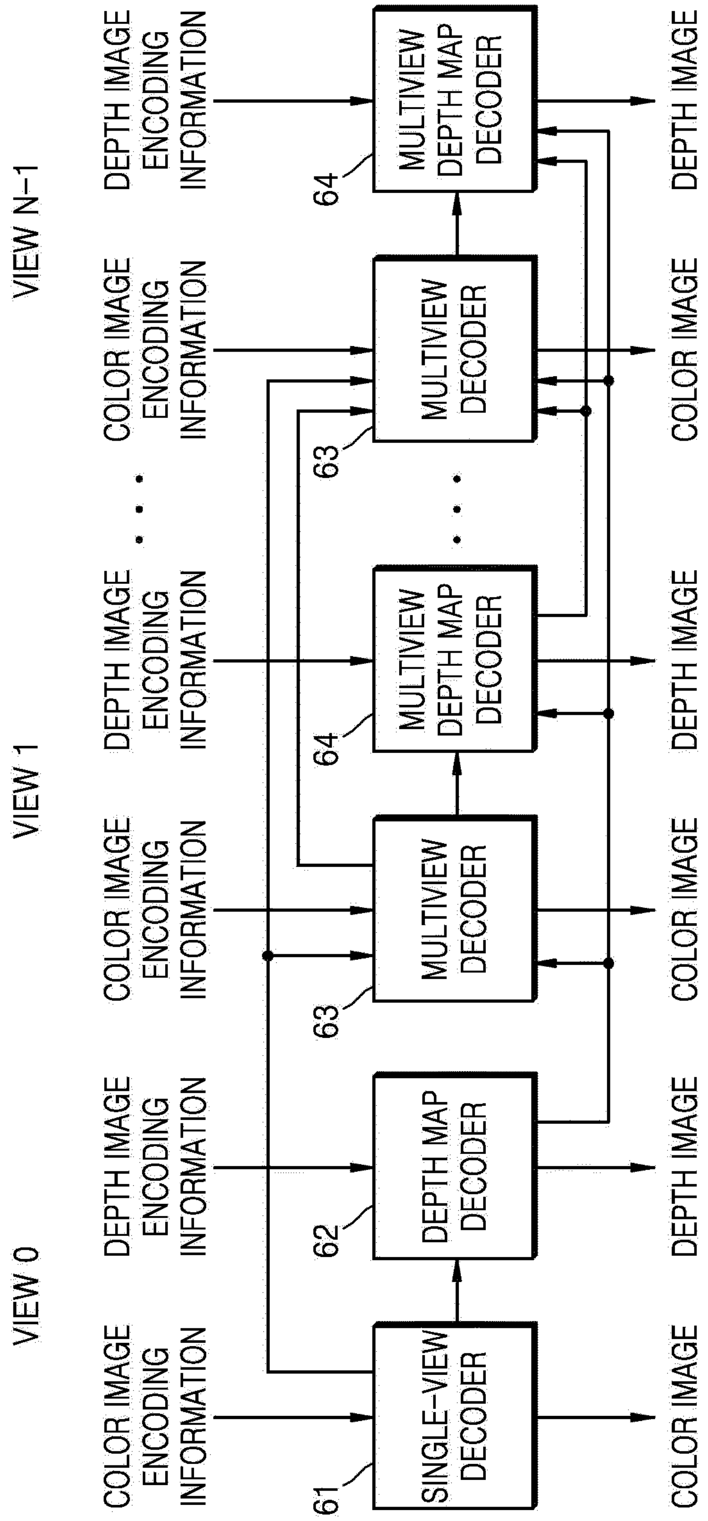
VIEW 0
VIEW 1
VIEW N-1
COLOR IMAGE ENCODING INFORMATION
DEPTH IMAGE ENCODING INFORMATION
COLOR IMAGE ENCODING INFORMATION
DEPTH IMAGE ENCODING INFORMATION
COLOR IMAGE ENCODING INFORMATION
DEPTH IMAGE ENCODING INFORMATION
61
SINGLE-VIEW DECODER
62
DEPTH MAP DECODER
63
MULTIVIEW DECODER
64
MULTIVIEW DEPTH MAP DECODER
63
MULTIVIEW DECODER
64
MULTIVIEW DEPTH MAP DECODER
COLOR IMAGE
DEPTH IMAGE
COLOR IMAGE
DEPTH IMAGE
COLOR IMAGE
DEPTH IMAGE

# FIG. 6B

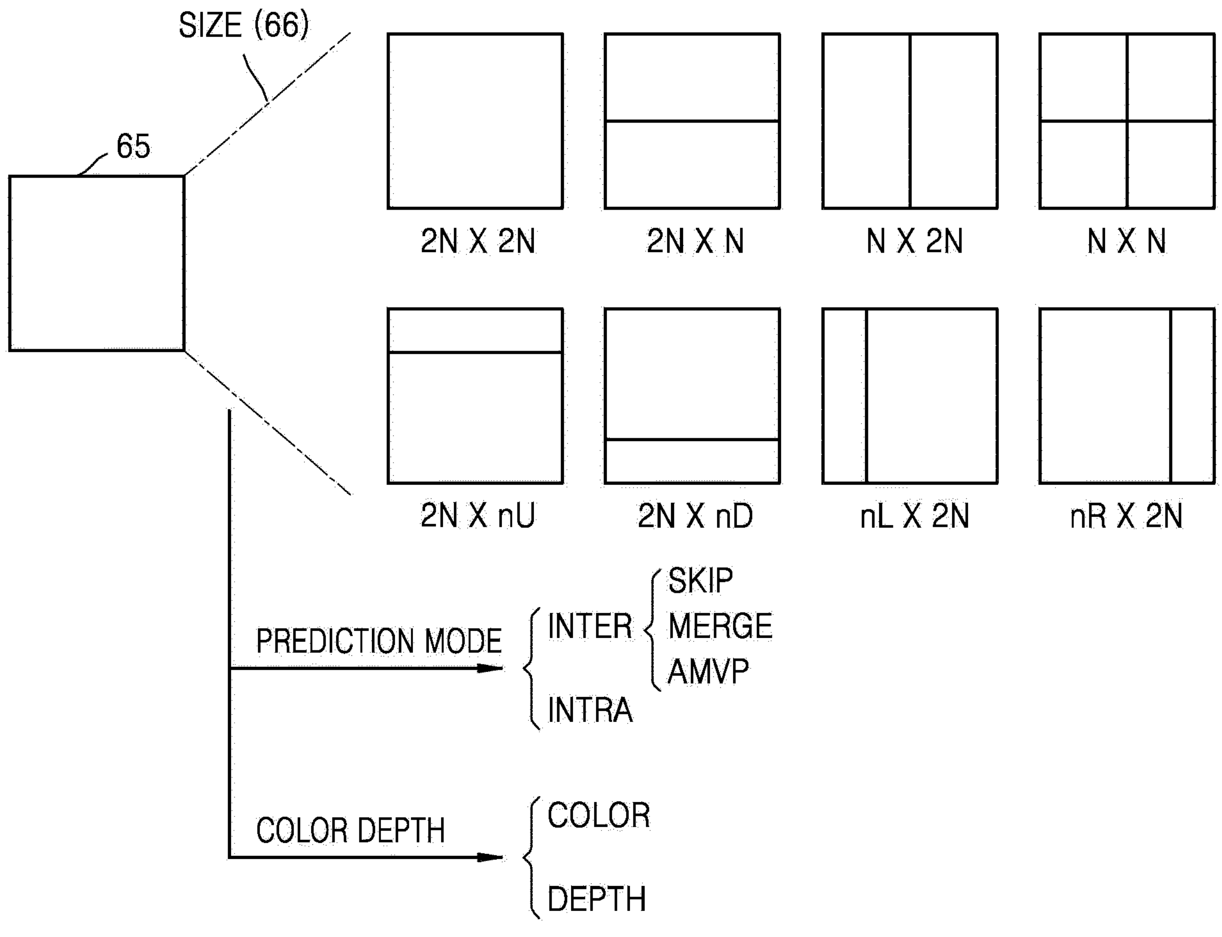
SIZE (66)
65
2N X 2N
2N X N
N X 2N
N X N
2N X nU
2N X nD
nL X 2N
nR X 2N
PREDICTION MODE
INTER
SKIP
MERGE
AMVP
INTRA
COLOR DEPTH
COLOR
DEPTH

FIG. 7

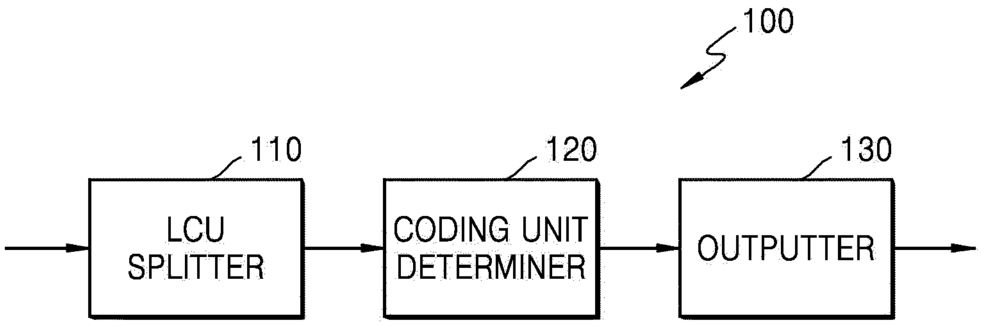
100
110
120
130
LCU SPLITTER
CODING UNIT DETERMINER
OUTPUTTER

FIG. 8

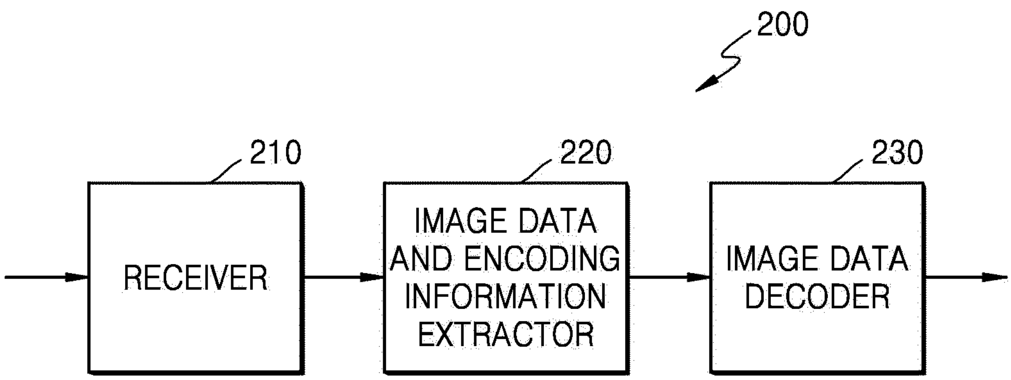
200
210
220
230
RECEIVER
IMAGE DATA AND ENCODING INFORMATION EXTRACTOR
IMAGE DATA DECODER

FIG. 9

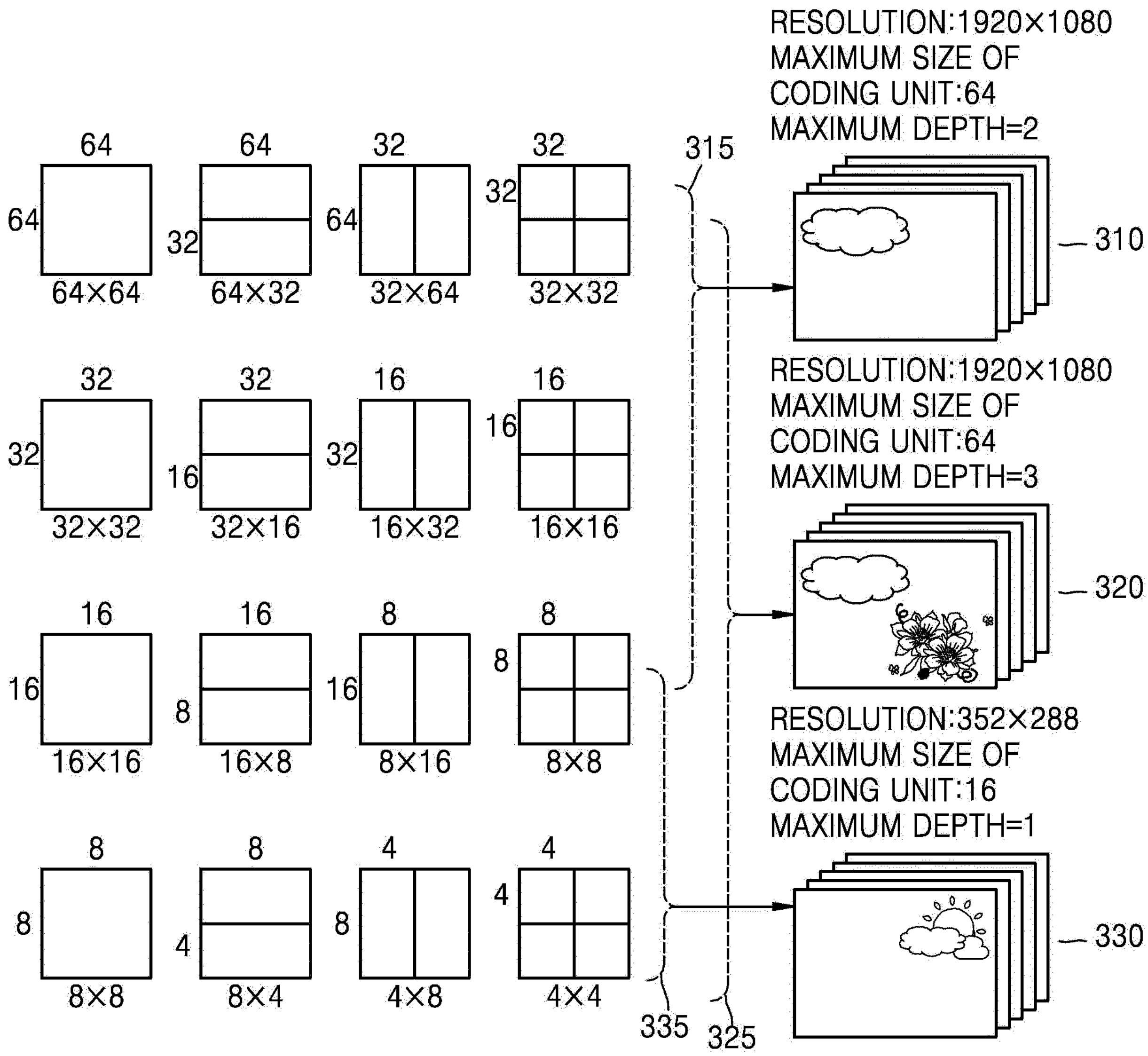
RESOLUTION:1920×1080
MAXIMUM SIZE OF
CODING UNIT:64
MAXIMUM DEPTH=2
RESOLUTION:1920×1080
MAXIMUM SIZE OF
CODING UNIT:64
MAXIMUM DEPTH=3
RESOLUTION:352×288
MAXIMUM SIZE OF
CODING UNIT:16
MAXIMUM DEPTH=1
64×64
64×32
32×64
32×32
32×32
32×16
16×32
16×16
16×16
16×8
8×16
8×8
8×8
8×4
4×8
4×4
315
310
320
330
335
325

FIG. 10

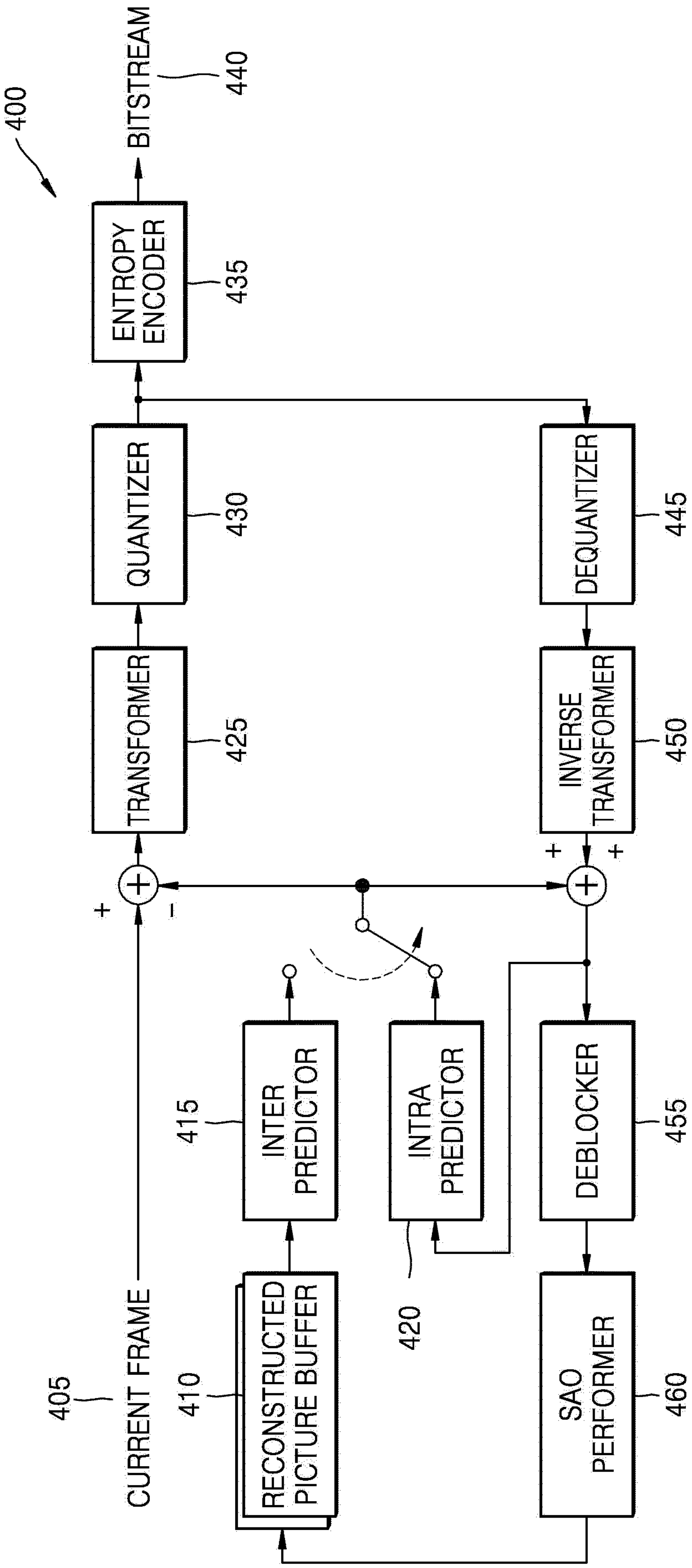
400
BITSTREAM
440
ENTROPY ENCODER
435
QUANTIZER
430
TRANSFORMER
425
DEQUANTIZER
445
INVERSE TRANSFORMER
450
CURRENT FRAME
405
RECONSTRUCTED PICTURE BUFFER
410
INTER PREDICTOR
415
INTRA PREDICTOR
420
DEBLOCKER
455
SAO PERFORMER
460
+
-
+
+

FIG. 11

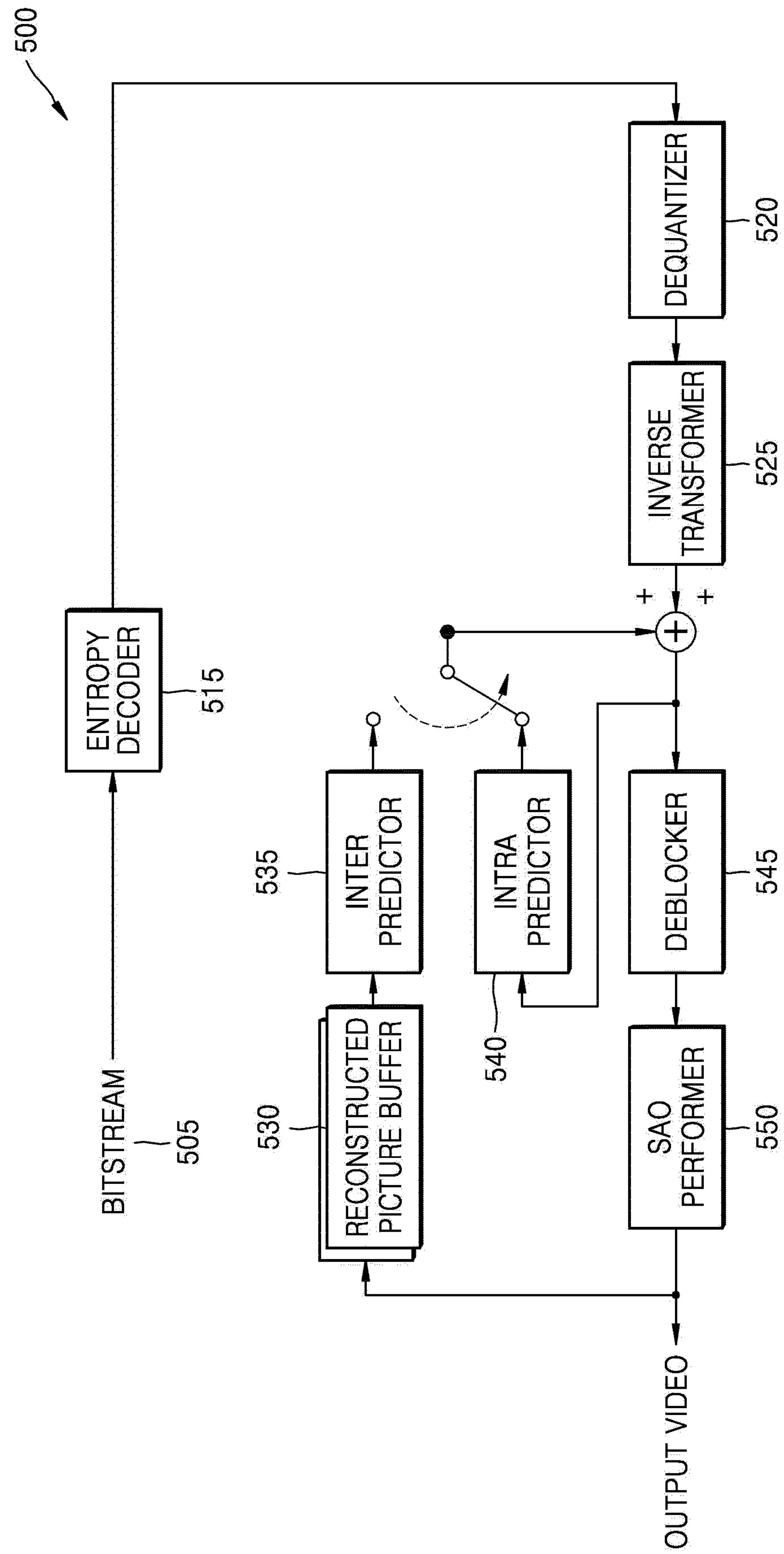
500
BITSTREAM
505
ENTROPY DECODER
515
DEQUANTIZER
520
INVERSE TRANSFORMER
525
RECONSTRUCTED PICTURE BUFFER
530
INTER PREDICTOR
535
INTRA PREDICTOR
540
DEBLOCKER
545
SAO PERFORMER
550
+
+
OUTPUT VIDEO

FIG. 12

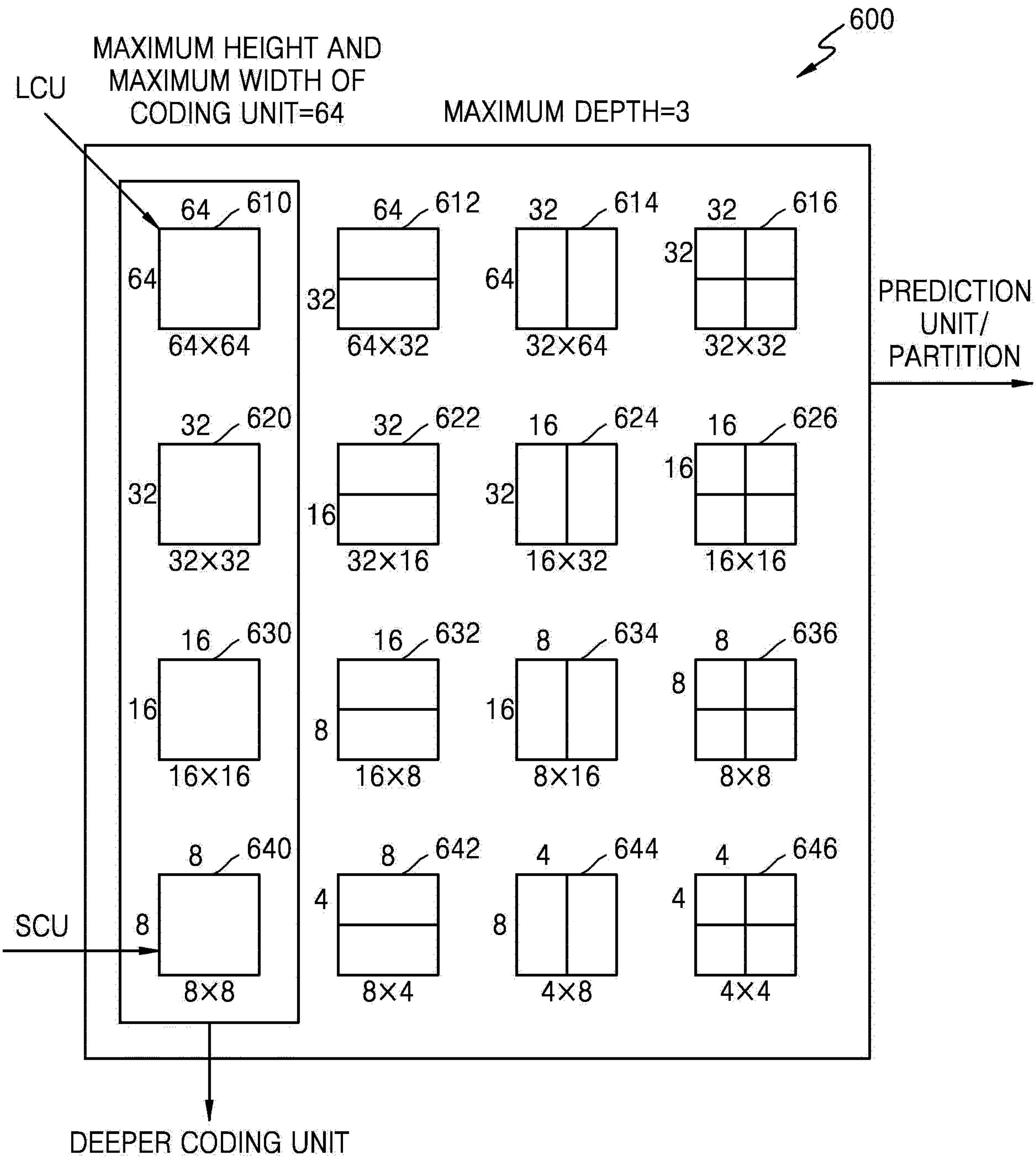
600
LCU
MAXIMUM HEIGHT AND
MAXIMUM WIDTH OF
CODING UNIT=64
MAXIMUM DEPTH=3
64
610
64
64×64
64
612
32
64×32
32
614
64
32×64
32
616
32
32×32
PREDICTION
UNIT/
PARTITION
32
620
32
32×32
32
622
16
32×16
16
624
32
16×32
16
626
16
16×16
16
630
16
16×16
16
632
8
16×8
8
634
16
8×16
8
636
8
8×8
8
640
SCU
8
8×8
8
642
4
8×4
4
644
8
4×8
4
646
4
4×4
DEEPER CODING UNIT

FIG. 13

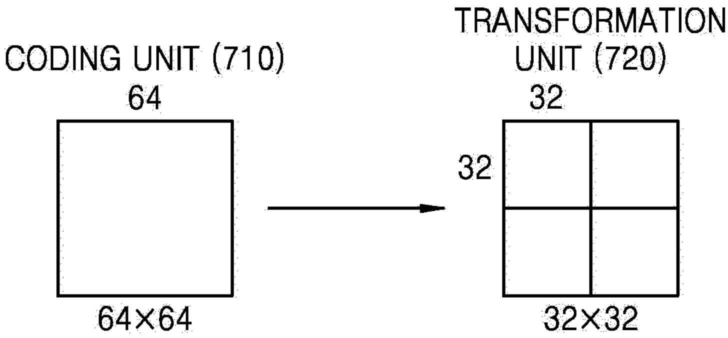

FIG. 14

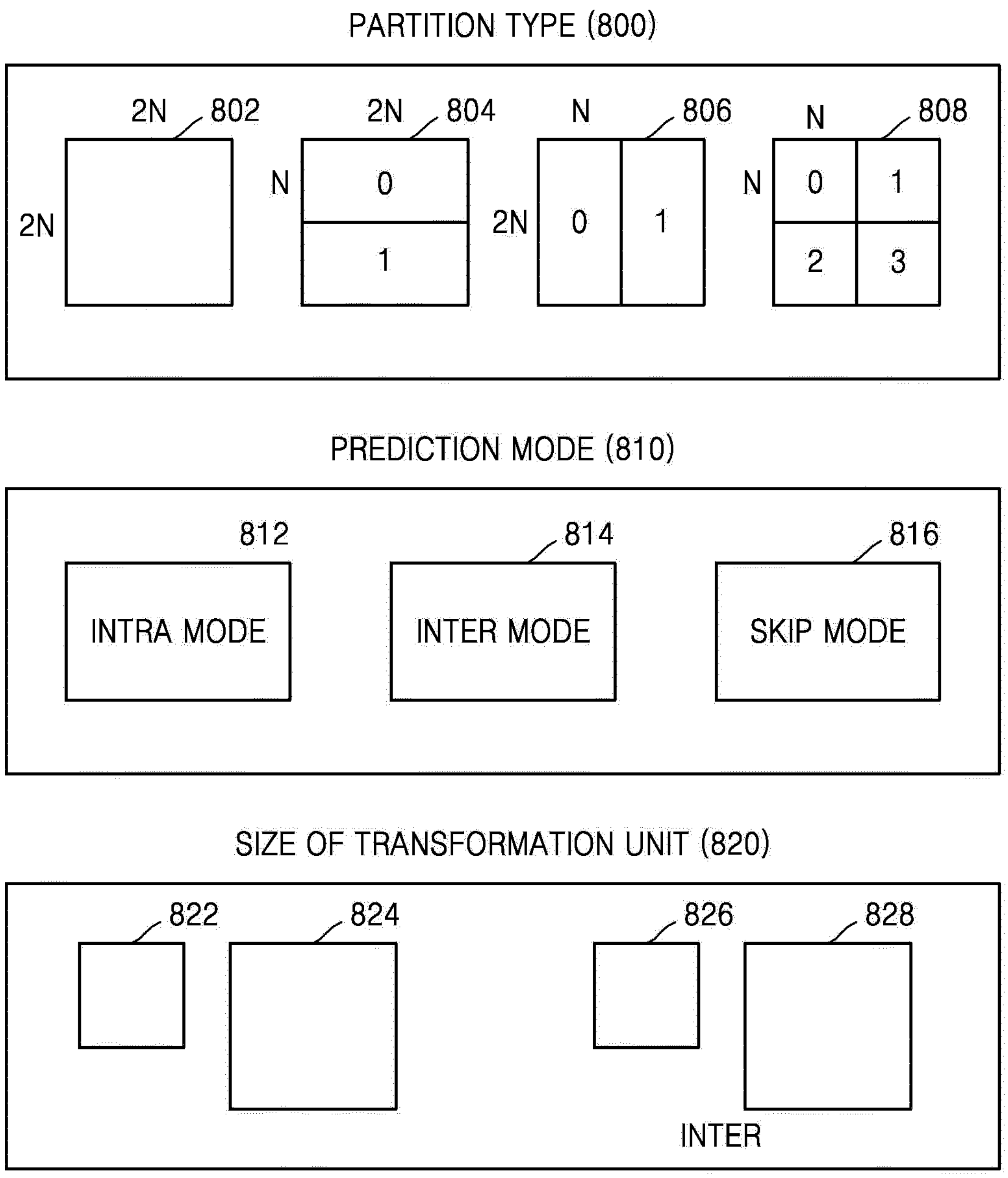
PARTITION TYPE (800)
2N
802
2N
804
N
0
1
2N
806
N
2N
0
1
808
N
N
0
1
2
3
PREDICTION MODE (810)
812
INTRA MODE
814
INTER MODE
816
SKIP MODE
SIZE OF TRANSFORMATION UNIT (820)
822
824
826
828
INTER

FIG. 15

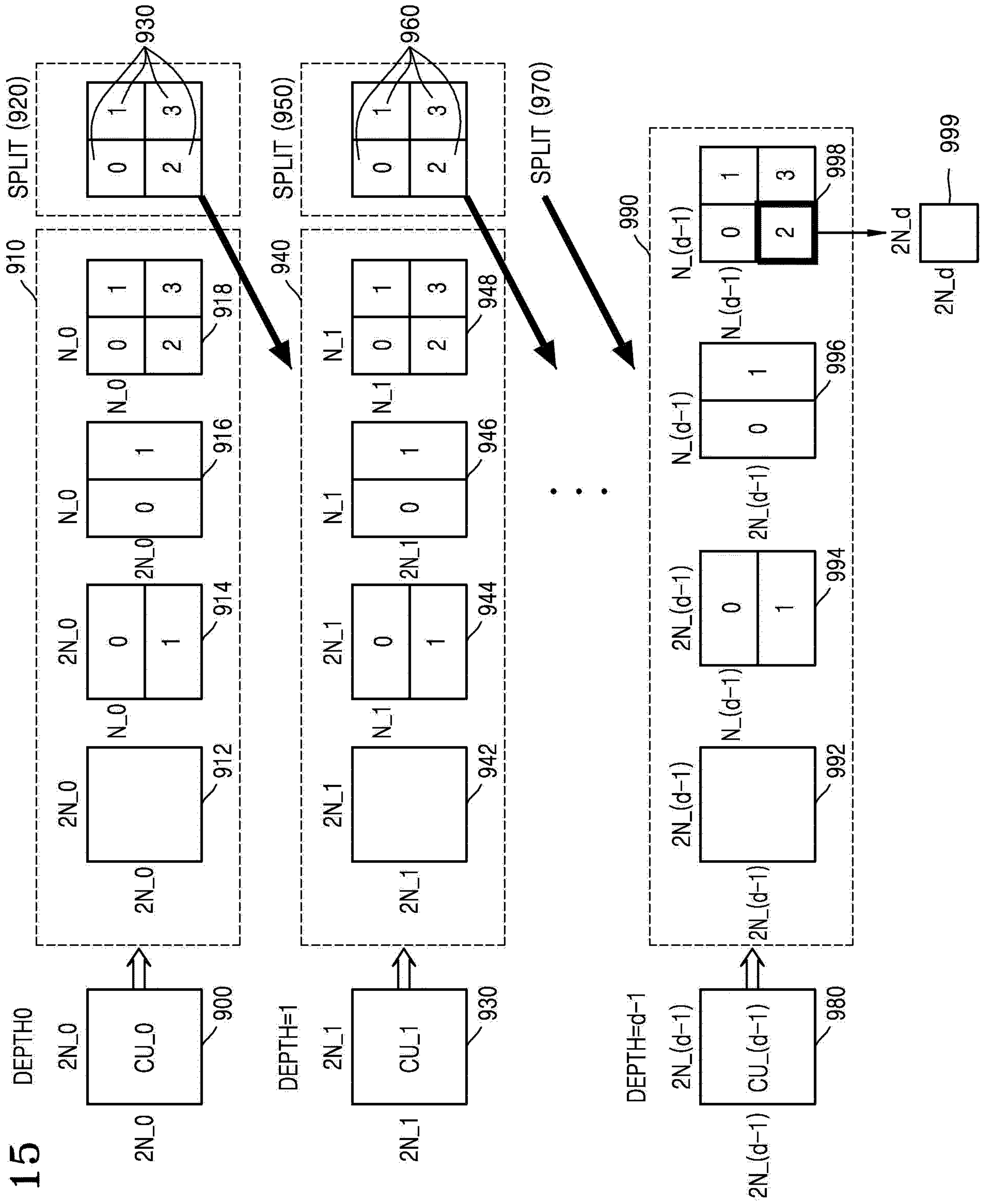
DEPTH0
CU_0
2N_0
2N_0
900
DEPTH=1
CU_1
2N_1
2N_1
930
DEPTH=d-1
CU_(d-1)
2N_(d-1)
2N_(d-1)
980
910
912
914
916
918
940
942
944
946
948
990
992
994
996
998
999
SPLIT (920)
SPLIT (950)
SPLIT (970)
930
960
2N_0
N_0
2N_1
N_1
2N_(d-1)
N_(d-1)
2N_d
0
1
2
3

FIG. 16

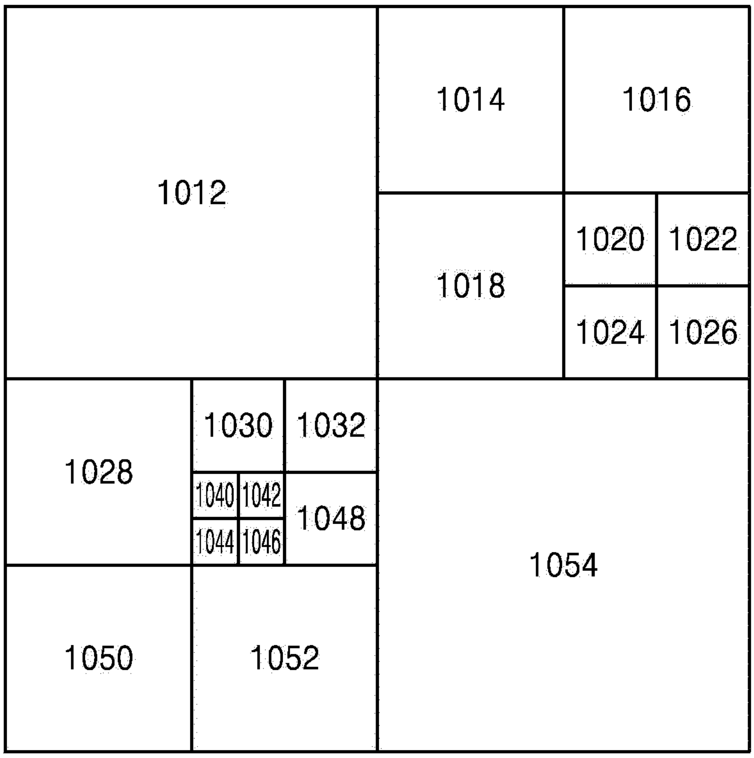


CODING UNIT (1010)

FIG. 17

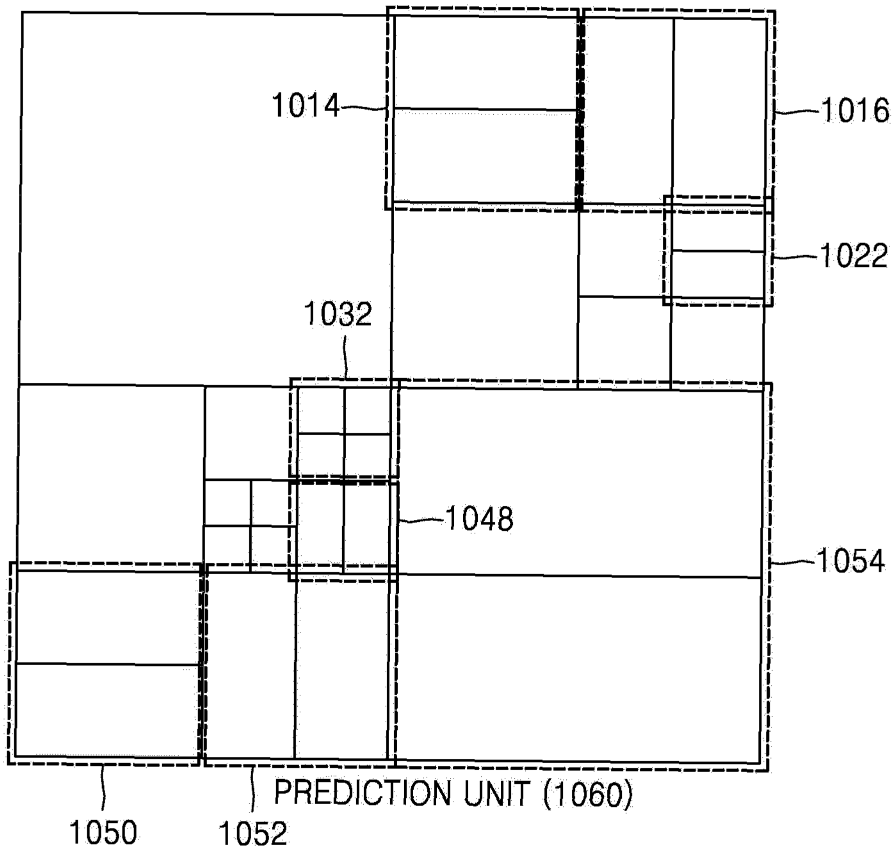
1014
1016
1022
1032
1048
1054
1050
1052
PREDICTION UNIT (1060)

FIG. 18

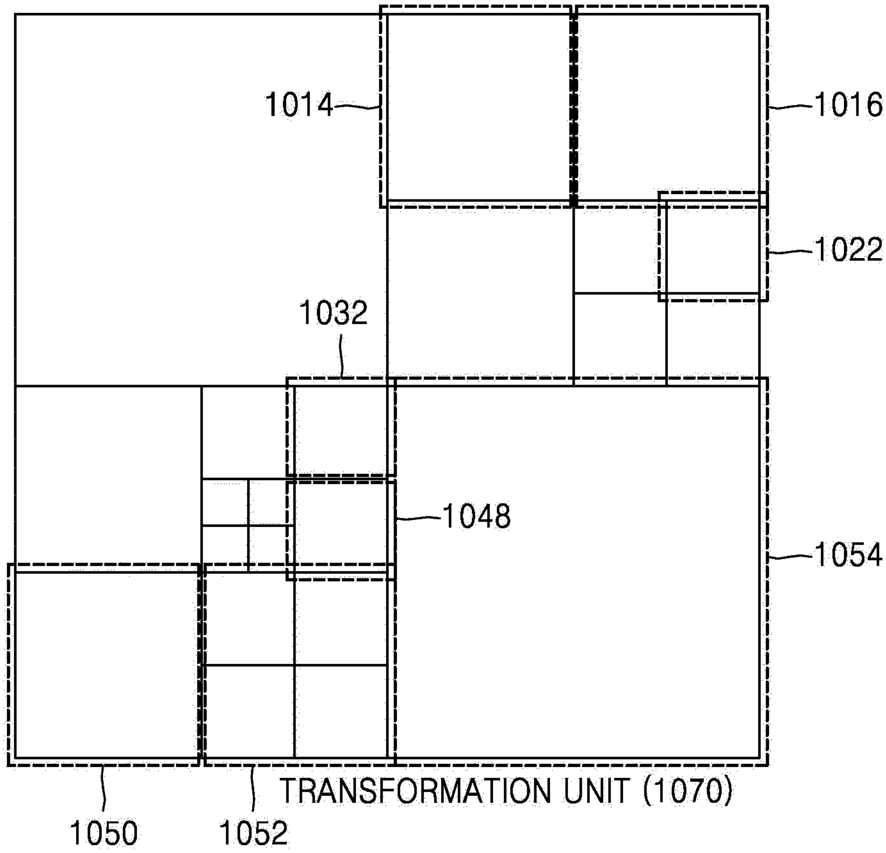
1014
1016
1022
1032
1048
1054
1050
1052
TRANSFORMATION UNIT (1070)

FIG. 19

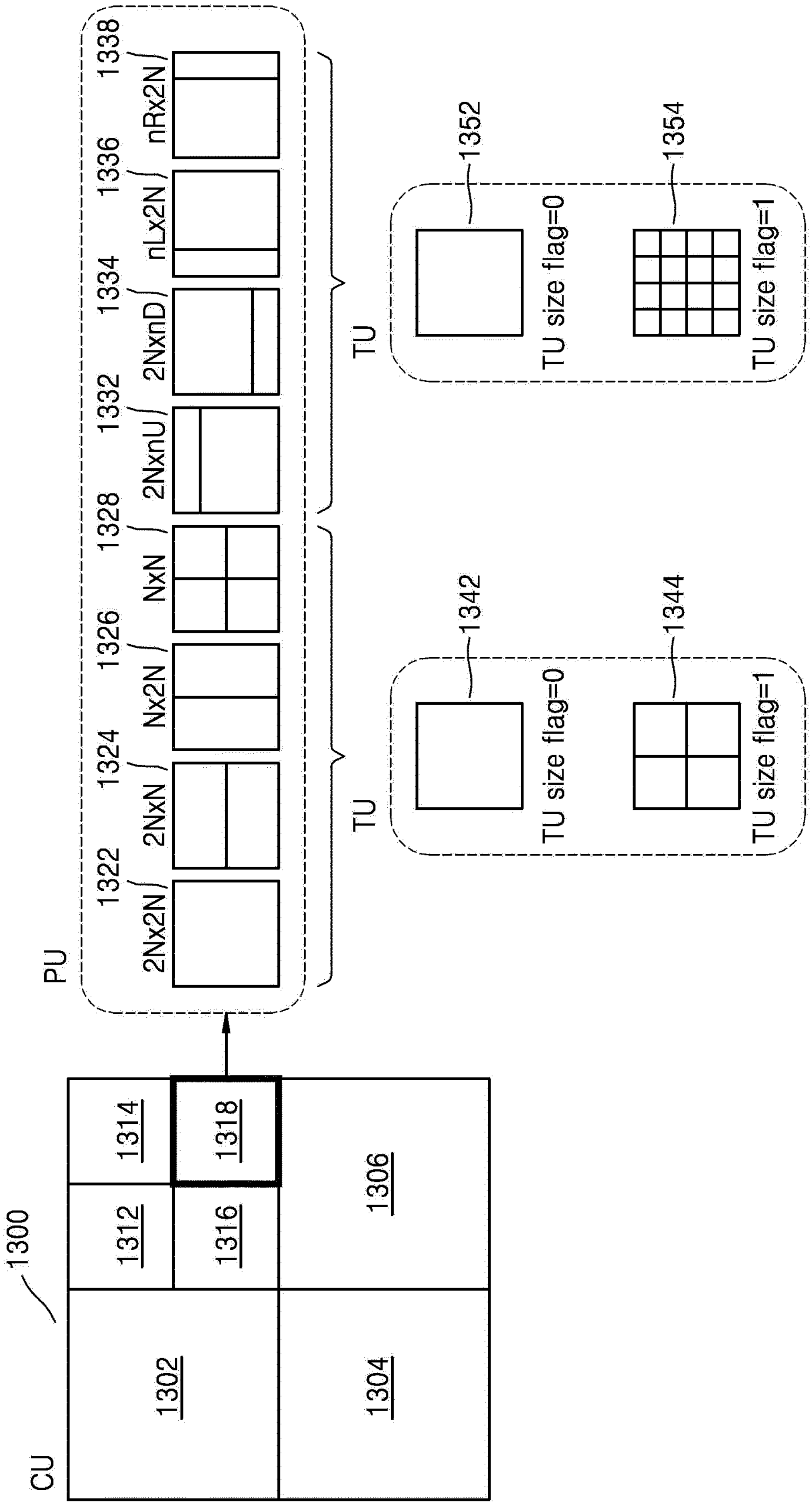
CU
1300
1302
1304
1306
1312
1314
1316
1318
PU
2Nx2N
1322
2NxN
1324
Nx2N
1326
NxN
1328
2NxnU
1332
2NxnD
1334
nLx2N
1336
nRx2N
1338
TU
1342
TU size flag=0
1344
TU size flag=1
TU
1352
TU size flag=0
1354
TU size flag=1

FIG. 20

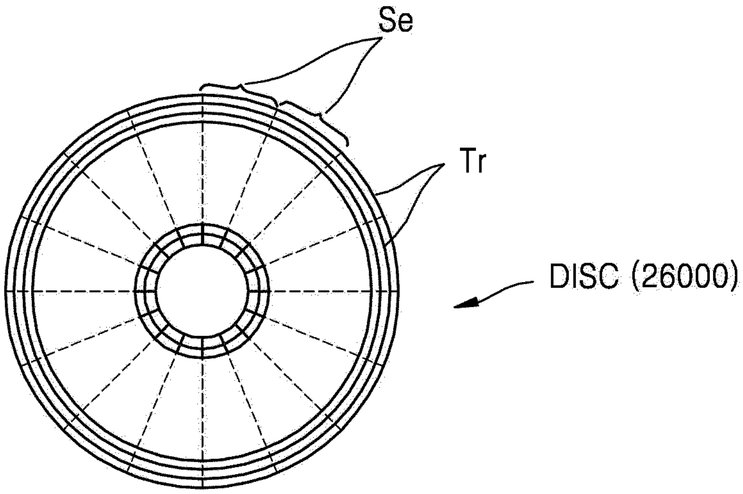


FIG. 21

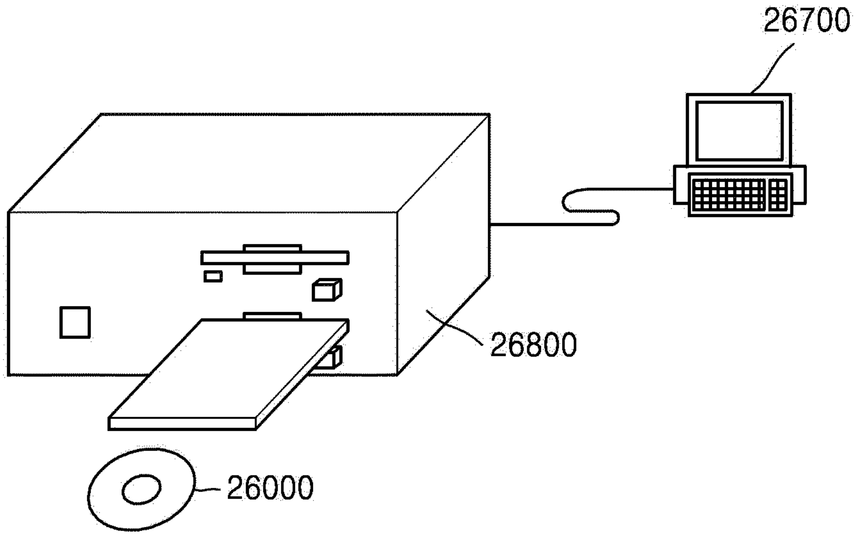

FIG. 22

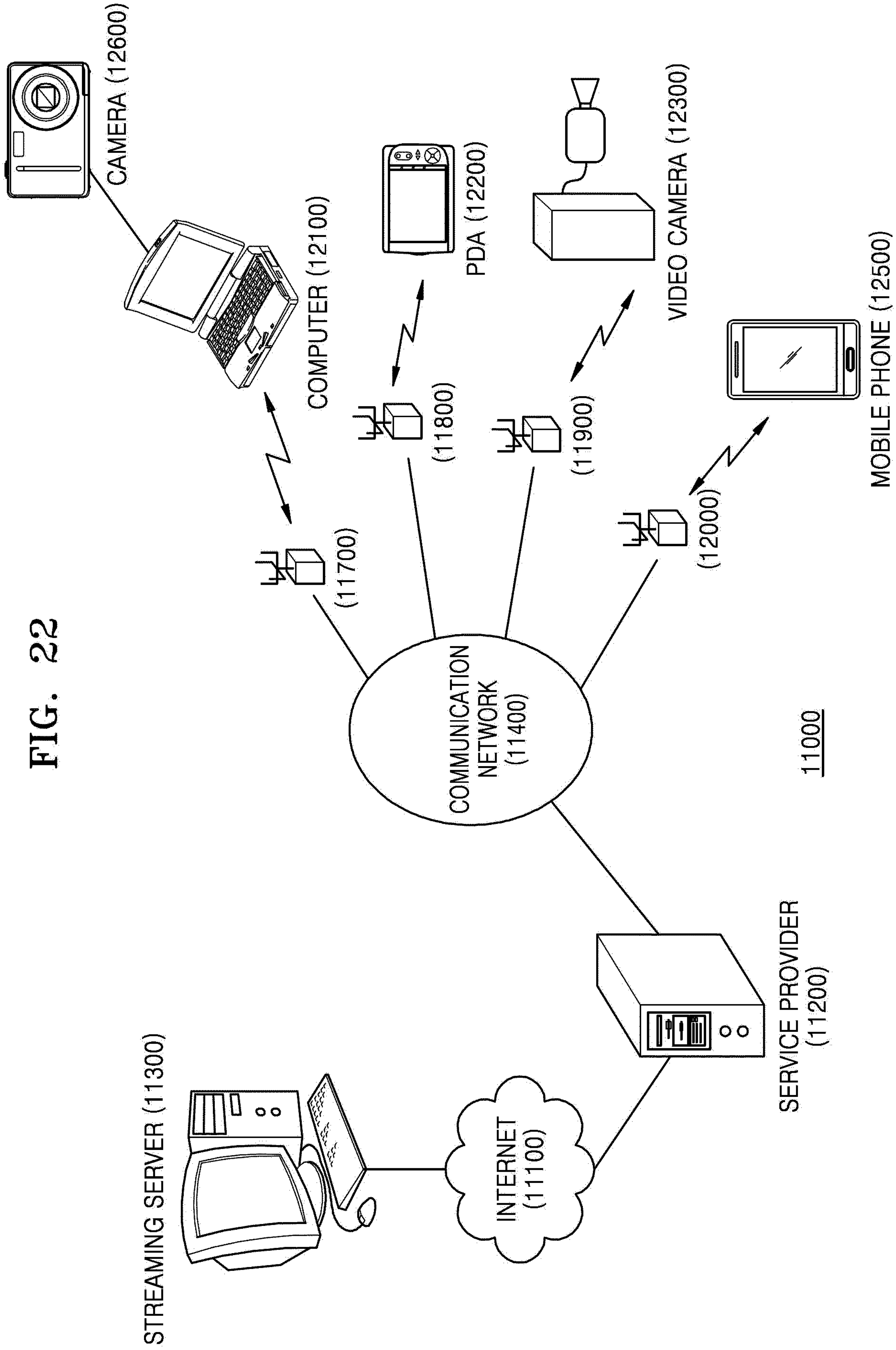
CAMERA (12600)
COMPUTER (12100)
PDA (12200)
VIDEO CAMERA (12300)
MOBILE PHONE (12500)
(11700)
(11800)
(11900)
(12000)
COMMUNICATION
NETWORK
(11400)
11000
SERVICE PROVIDER
(11200)
INTERNET
(11100)
STREAMING SERVER (11300)

FIG. 23

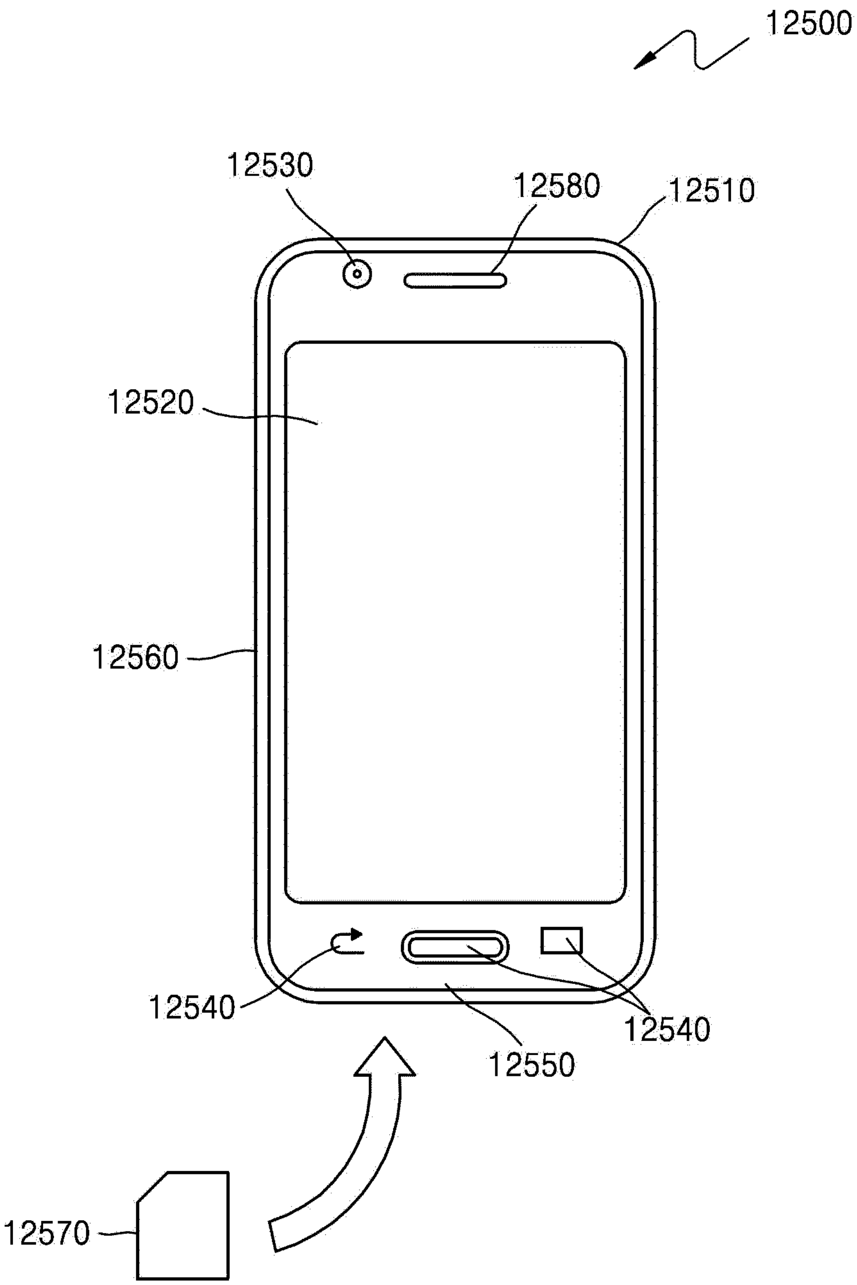
12500
12530
12580
12510
12520
12560
12540
12540
12550
12570

FIG. 24

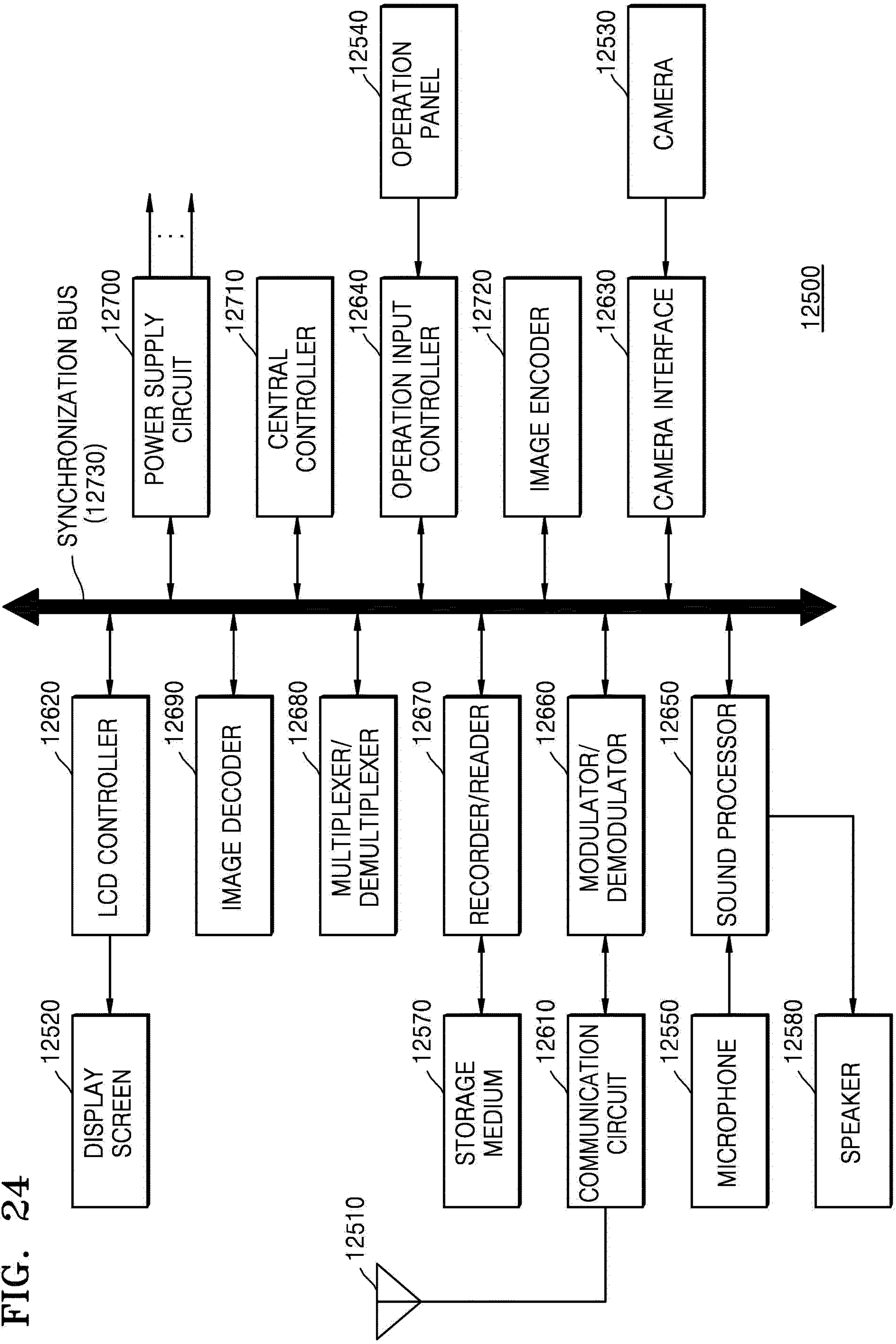
SYNCHRONIZATION BUS (12730)
12700 POWER SUPPLY CIRCUIT
12710 CENTRAL CONTROLLER
12640 OPERATION INPUT CONTROLLER
12720 IMAGE ENCODER
12630 CAMERA INTERFACE
12540 OPERATION PANEL
12530 CAMERA
12500
12620 LCD CONTROLLER
12690 IMAGE DECODER
12680 MULTIPLEXER/ DEMULTIPLEXER
12670 RECORDER/READER
12660 MODULATOR/ DEMODULATOR
12650 SOUND PROCESSOR
12520 DISPLAY SCREEN
12570 STORAGE MEDIUM
12610 COMMUNICATION CIRCUIT
12550 MICROPHONE
12580 SPEAKER
12510

FIG. 25

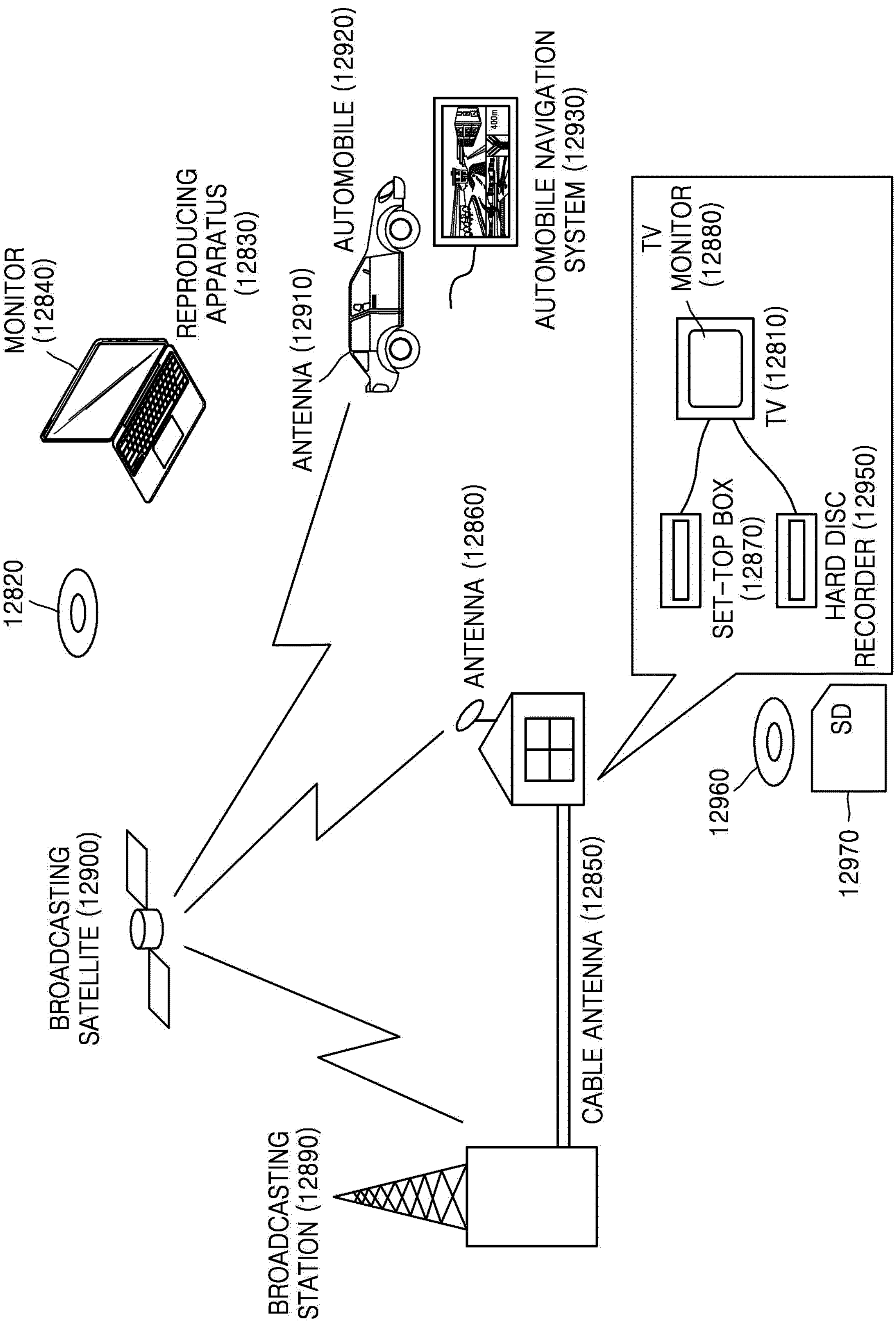
BROADCASTING STATION (12890)
CABLE ANTENNA (12850)
BROADCASTING SATELLITE (12900)
ANTENNA (12860)
12820
MONITOR (12840)
REPRODUCING APPARATUS (12830)
ANTENNA (12910)
AUTOMOBILE (12920)
AUTOMOBILE NAVIGATION SYSTEM (12930)
400m
TV MONITOR (12880)
TV (12810)
SET-TOP BOX (12870)
HARD DISC RECORDER (12950)
12960
SD
12970

FIG. 26

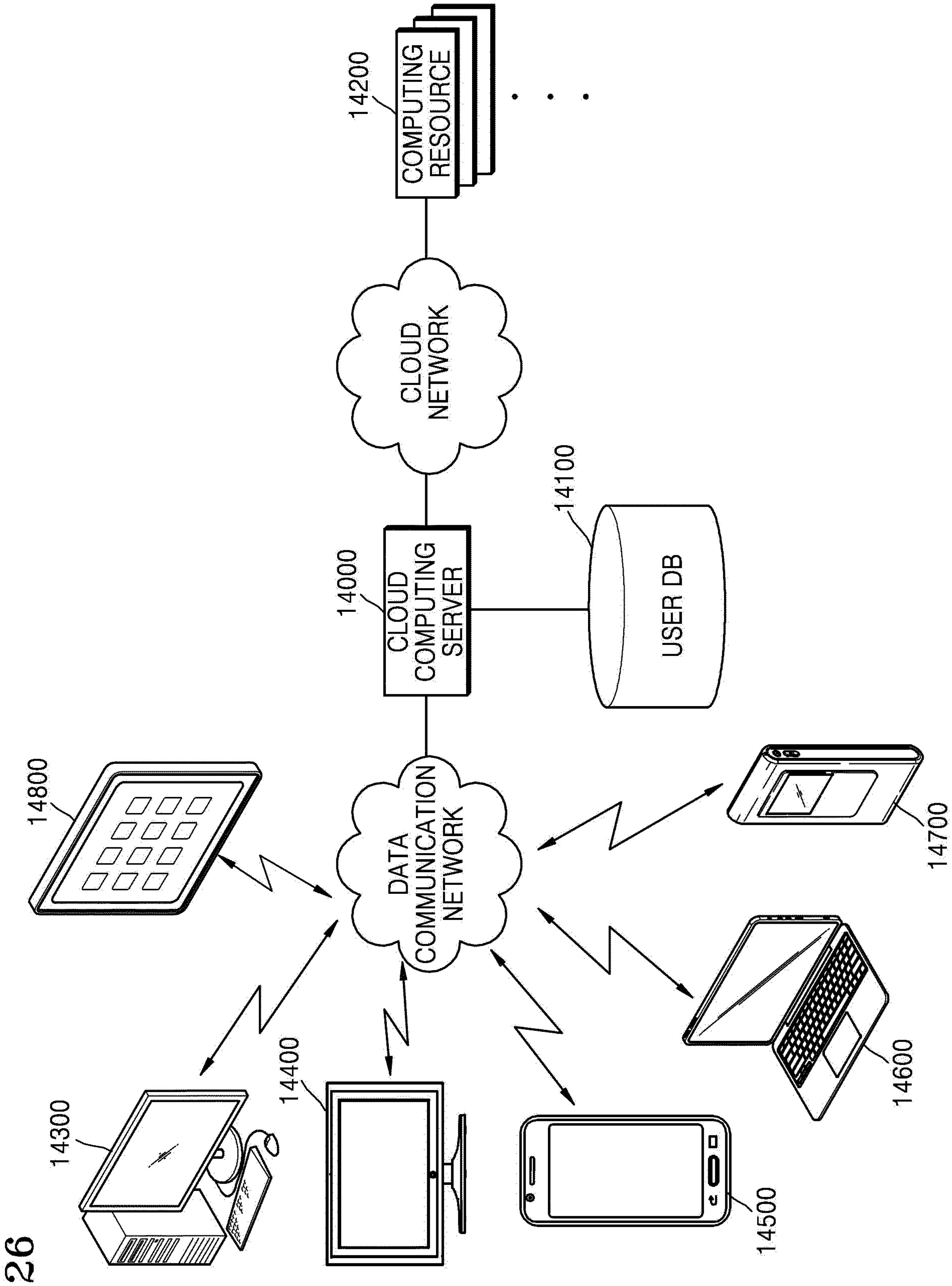
14200
COMPUTING RESOURCE
CLOUD NETWORK
14000
CLOUD COMPUTING SERVER
14100
USER DB
DATA COMMUNICATION NETWORK
14800
14300
14400
14500
14600
14700

## INTERNATIONAL SEARCH REPORT

International application No.
**PCT/KR2015/010577**

A. CLASSIFICATION OF SUBJECT MATTER

***H04N 19/30(2014.01)i, H04N 19/31(2014.01)i***

According to International Patent Classification (IPC) or to both national classification and IPC

B. FIELDS SEARCHED

Minimum documentation searched (classification system followed by classification symbols)

H04N 19/30; H04N 19/31; H04N 19/58; H04N 19/105; H04N 19/503; G06F 11/16

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: image decoding, inter-layer prediction, reference picture list, disparity vector, syntax, first information, residual prediction

C. DOCUMENTS CONSIDERED TO BE RELEVANT

| Category* | Citation of document, with indication, where appropriate, of the relevant passages | Relevant to claim No. |
|---|---|---|
| Y<br>A | KR 10-2014-0092807 A (LG ELECTRONICS INC.) 24 July 2014<br>See paragraphs [0013], [0016], [0018], [0019]; claim 1; and figure 4. | 1-3,9-12<br>4-8,13-15 |
| Y | WO 2014-005467 A1 (MEDIATEK SINGAPORE PTE. LTD.) 09 January 2014<br>See page 10, lines 27-33; claim 1; and figure 5. | 1-3,9-12 |
| A | KR 10-2014-0088015 A (ELECTRONICS AND TELECOMMUNICATIONS RESEARCH INSTITUTE) 09 July 2014<br>See paragraphs [0194], [0233], [0257]; and figure 7. | 1-15 |
| A | KR 10-2010-0015366 A (THOMSON LICENSING) 12 February 2010<br>See paragraphs [0004], [0005]; and figure 2. | 1-15 |
| A | JP 2014-519223 A (LG ELECTRONICS INC.) 07 August 2014<br>See paragraph [0008]; claim 1; and figure 3. | 1-15 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 JANUARY 2016 (07.01.2016) | **15 JANUARY 2016 (15.01.2016)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (January 2015)

INTERNATIONAL SEARCH REPORT
Information on patent family members

International application No.
PCT/KR2015/010577

| Patent document cited in search report | Publication date | Patent family member | Publication date |
|---|---|---|---|
| KR 10-2014-0092807 A | 24/07/2014 | US 2014-0286416 A1 | 25/09/2014 |
| | | WO 2013-070028 A1 | 16/05/2013 |
| WO 2014-005467 A1 | 09/01/2014 | CN 104412238 A | 11/03/2015 |
| | | EP 2850523 A1 | 25/03/2015 |
| | | KR 10-2015-0034222 A | 02/04/2015 |
| | | US 2015-304681 A1 | 22/10/2015 |
| | | WO 2014-005280 A1 | 09/01/2014 |
| KR 10-2014-0088015 A | 09/07/2014 | KR 10-2014-0087972 A | 09/07/2014 |
| | | US 2014-0177711 A1 | 26/06/2014 |
| KR 10-2010-0015366 A | 12/02/2010 | CN 101647287 A | 10/02/2010 |
| | | CN 101647287 B | 30/10/2013 |
| | | EP 2135456 A2 | 23/12/2009 |
| | | JP 2010-524338 A | 15/07/2010 |
| | | JP 2013-066200 A | 11/04/2013 |
| | | JP 2014-195320 A | 09/10/2014 |
| | | JP 5273824 B2 | 28/08/2013 |
| | | JP 5558545 B2 | 23/07/2014 |
| | | KR 10-1418627 B1 | 15/07/2014 |
| | | TW 200904198 A | 16/01/2009 |
| | | TW 201230814 A | 16/07/2012 |
| | | TW 201230815 A | 16/07/2012 |
| | | US 2010-0118933 A1 | 13/05/2010 |
| | | WO 2008-123917 A2 | 16/10/2008 |
| | | WO 2008-123917 A3 | 04/12/2008 |
| JP 2014-519223 A | 07/08/2014 | CN 103621091 A | 05/03/2014 |
| | | DE 112012001635 T5 | 27/02/2014 |
| | | ES 2489816 A2 | 02/09/2014 |
| | | ES 2489816 B2 | 08/10/2015 |
| | | ES 2489816 R1 | 09/12/2014 |
| | | GB 201319020 D0 | 11/12/2013 |
| | | GB 2505344 A | 26/02/2014 |
| | | KR 10-2014-0029459 A | 10/03/2014 |
| | | US 2014-0050270 A1 | 20/02/2014 |
| | | WO 2012-148139 A2 | 01/11/2012 |
| | | WO 2012-148139 A3 | 21/03/2013 |

Form PCT/ISA/210 (patent family annex) (January 2015)